# EUROPEAN PATENT APPLICATION

(11) **EP 4 319 429 A1**
(43) Date of publication of application: **07.02.2024**
(21) Application number: 22780399.6
(22) Date of filing: 23.03.2022
(51) Int. Cl.: H04W 72/12, H04W 92/18, H04W 4/06, H04W 88/08

(54) **COMMUNICATION SYSTEM AND BASE STATION**

(30) Priority: 30.03.2021 JP 2021058571
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Zech, Stefan Markus
(86) International application number: PCT/JP2022/013617
(87) International publication number: WO 2022/210184

(57) **Abstract**

A communication system includes: a first base station that operates as a donor for integrated access and backhaul, the first base station including a central unit (IAB-donor CU) and a distributed unit (IAB-donor DU); and one or more second base stations that operate as nodes of the integrated access and backhaul (IAB-nodes), and in a case where multicast transmission of data is performed from the first base station to a communication terminal (UE), the central unit performs a configuration for the multicast transmission on the distributed unit and the one or more second base stations.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

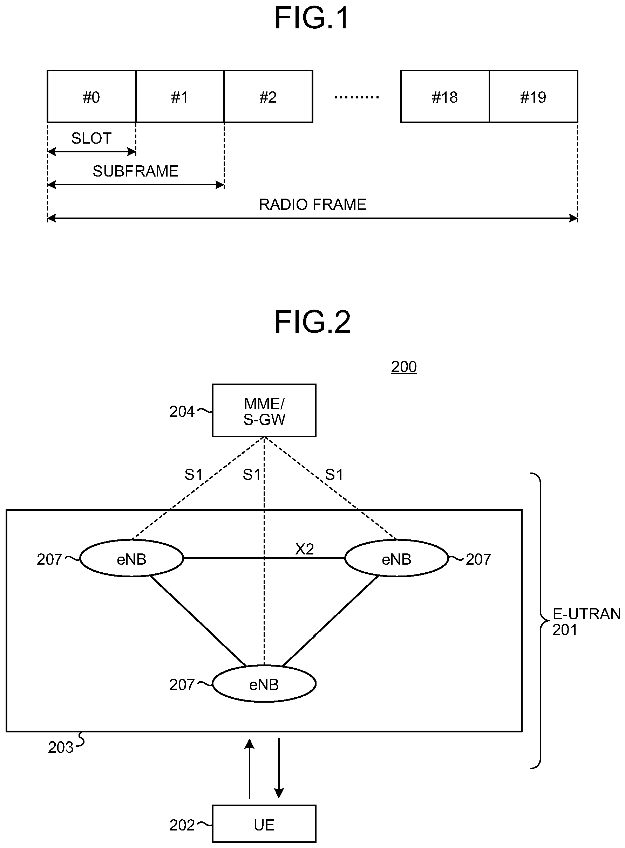

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport Channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical Channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic Channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)) .

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). In the SL communication, communication is performed between terminals. Examples of the service using the SL communication include a vehicle-to-everything (V2X) service and a proximity service. In the SL communication, not only direct communication between terminals but also communication between a UE and an NW via a relay has been proposed (see Non Patent Literatures 20, 23, and 27).

In addition, several new technologies have been studied in 3GPP. For example, multicast using NR has been studied. In the multicast using NR, for example, a reliable multicast scheme, and dynamic switching between point to multipoint (PTM) transmission and point to point (PTP) transmission have been studied (see Non Patent Literatures 28, 29, and 30). Furthermore, multicast by a base station having a central unit (CU)/distributed unit (DU) split configuration has also been studied (see Non Patent Literature 31).

As another example, integrated access and backhaul (IAB) has been studied in which both an access link which is a link between a UE and a base station and a backhaul link which is a link between base stations are performed by radio (see Non Patent Literatures 16, 32, and 33) .

### Citation List

### Non Patent Literature

Non Patent Literature 1: 3GPP TS 36.300 V16.2.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.4.0
Non Patent Literature 13: 3GPP TS 38.211 V16.4.0
Non Patent Literature 14: 3GPP TS 38.213 V16.4.0
Non Patent Literature 15: 3GPP TS 38.214 V16.4.0
Non Patent Literature 16: 3GPP TS 38.300 V16.4.0
Non Patent Literature 17: 3GPP TS 38.321 V16.3.0
Non Patent Literature 18: 3GPP TS 38.212 V16.4.0
Non Patent Literature 19: 3GPP TS 38.331 V16.3.1
Non Patent Literature 20: 3GPP TR 23.703 V12.0.0
Non Patent Literature 21: 3GPP TS 23.501 V16.7.0
Non Patent Literature 22: 3GPP T S23.287 V16.5.0
Non Patent Literature 23: 3GPP TS 23.303 V16.0.0
Non Patent Literature 24: 3GPP TS 38.305 V16.3.0
Non Patent Literature 25: 3GPP TS 23.273 V16.5.0
Non Patent Literature 26: 3GPP R2-2009145
Non Patent Literature 27: 3GPP TR 38.836 V2.0.0
Non Patent Literature 28: 3GPP TR 23.757 V1.2.0
Non Patent Literature 29: 3GPP RP-201038
Non Patent Literature 30: 3GPP R2-2009337
Non Patent Literature 31: 3GPP R3-211029
Non Patent Literature 32: 3GPP RP-201293
Non Patent Literature 33: 3GPP TS 38.401 V16.0.0
Non Patent Literature 34: 3GPP TS 36.321 V16.3.0
Non Patent Literature 35: 3GPP TS 38.473 V16.4.0
Non Patent Literature 36: 3GPP TS 38.340 V16.3.0
Non Patent Literature 37: 3GPP TS 23.502 V16.7.1
Non Patent Literature 38: 3GPP TS 38.413 V16.4.0
Non Patent Literature 39: 3GPP TS 38.323 V16.2.0
Non Patent Literature 40: 3GPP TS 38.322 V16.2.0

### Summary of Invention

### Problem to be solved by the Invention

A 5G base station can support integrated access and backhaul (IAB) (see Non Patent Literature 16 (TS 38.300 V16.4.0)). That is, multicast may be performed by using a base station that supports IAB (hereinafter, sometimes referred to as an IAB base station). However, a detailed method for configuring multicast in the IAB base station has not been disclosed. Therefore, there arises a problem that multicast using the IAB base station cannot be implemented.

In view of the above problem, one of objects of the present disclosure is to enable multicast transmission in a communication system to which integrated access and backhaul is applied.

### Means to Solve the Problem

A communication system according to the present disclosure includes: a first base station to operate as a donor for integrated access and backhaul, the first base station including a central unit and a distributed unit; and one or more second base stations to operate as nodes of the integrated access and backhaul, wherein in a case where multicast transmission of data is performed from the first base station to a communication terminal, the central unit performs a configuration for the multicast transmission on the distributed unit and the one or more second base stations.

### Effects of the Invention

The present disclosure achieves an effect that multicast transmission can be performed in a communication system to which integrated access and backhaul is applied.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a diagram illustrating a first half of a sequence illustrating an example of a multicast configuration in an IAB base station in a first embodiment.
FIG. 15 is a diagram illustrating a second half of the sequence illustrating the example of the multicast configuration in the IAB base station in the first embodiment.
FIG. 16 is a diagram illustrating an example of connection in multicast from an IAB base station in a second embodiment.
FIG. 17 is a diagram illustrating a protocol stack between an IAB-donor CU and a UE in the second embodiment.
FIG. 18 is a diagram illustrating another example of the protocol stack between the IAB-donor CU and a UE in the second embodiment.
FIG. 19 is a diagram illustrating an example of multicast transmission from the IAB base station in the second embodiment.
FIG. 20 is a diagram illustrating another example of the multicast transmission from the IAB base station in the second embodiment.
FIG. 21 is a diagram illustrating another example of the multicast transmission from the IAB base station in the second embodiment.
FIG. 22 is a diagram illustrating another example of the multicast transmission from the IAB base station in the second embodiment.
FIG. 23 is a diagram illustrating an example in which a plurality of PTM legs are provided in an IAB-node in a first modification of the second embodiment.
FIG. 24 is a sequence diagram illustrating an example of a method for scheduling communication from a gNB to a remote UE via a relay UE in a third embodiment.
FIG. 25 is a sequence diagram illustrating another example of the method for scheduling the communication from the gNB to the remote UE via the relay UE in the third embodiment.
FIG. 26 is a sequence diagram illustrating another example of the method for scheduling the communication from the gNB to the remote UE via the relay UE in the third embodiment.
FIG. 27 is a sequence diagram illustrating another example of the method for scheduling the communication from the gNB to the remote UE via the relay UE in the third embodiment.
FIG. 28 is a sequence diagram illustrating another example of the method for scheduling the communication from the gNB to the remote UE via the relay UE in the third embodiment.
FIG. 29 is a sequence diagram illustrating another example of the method for scheduling the communication from the gNB to the remote UE via the relay UE in the third embodiment.
FIG. 30 is a sequence diagram illustrating an example of a method for scheduling communication from the remote UE to the gNB via the relay UE in a first modification of the third embodiment.
FIG. 31 is a sequence diagram illustrating another example of the method for scheduling the communication from the remote UE to the gNB via the relay UE in the first modification of the third embodiment.
FIG. 32 is a sequence diagram illustrating another example of the method for scheduling the communication from the remote UE to the gNB via the relay UE in the first modification of the third embodiment.
FIG. 33 is a sequence diagram illustrating another example of the method for scheduling the communication from the remote UE to the gNB via the relay UE in the first modification of the third embodiment.
FIG. 34 is a sequence diagram illustrating another example of the method for scheduling the communication from the remote UE to the gNB via the relay UE in the first modification of the third embodiment.
FIG. 35 is a sequence diagram illustrating another example of the method for scheduling the communication from the remote UE to the gNB via the relay UE in the first modification of the third embodiment.
FIG. 36 is a sequence diagram illustrating another example of the method for scheduling the communication from the remote UE to the gNB via the relay UE in the first modification of the third embodiment.
FIG. 37 is a sequence diagram illustrating another example of the method for scheduling the communication from the remote UE to the gNB via the relay UE in the first modification of the third embodiment.
FIG. 38 is a sequence diagram illustrating another example of the method for scheduling the communication from the remote UE to the gNB via the relay UE in the first modification of the third embodiment.
FIG. 39 is a sequence diagram illustrating another example of the method for scheduling the communication from the remote UE to the gNB via the relay UE in the first modification of the third embodiment.
FIG. 40 is a sequence diagram illustrating another example of the method for scheduling the communication from the remote UE to the gNB via the relay UE in the first modification of the third embodiment.

### Description of Embodiments

Hereinafter, a communication system and a base station according to each embodiment of the present disclosure will be described in detail with reference to the drawings.

### First Embodiment.

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

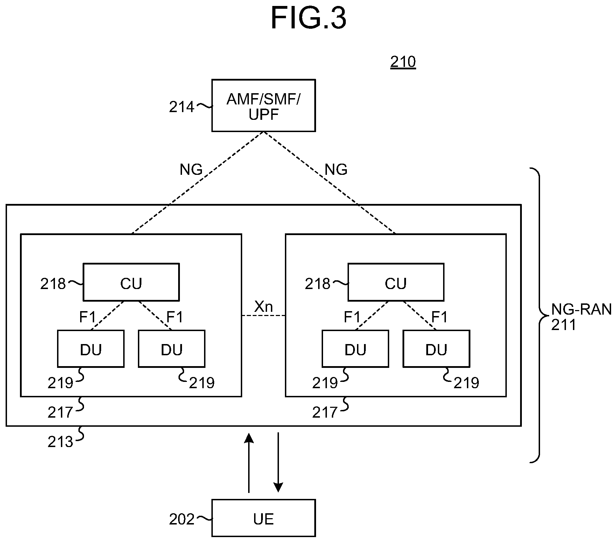

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

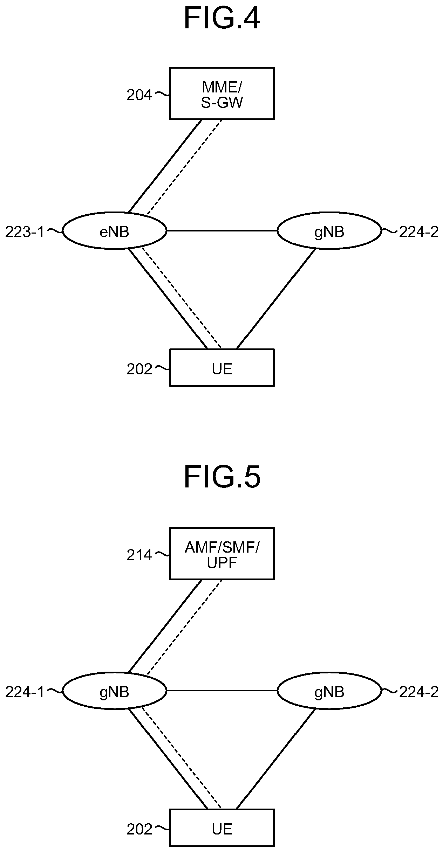

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

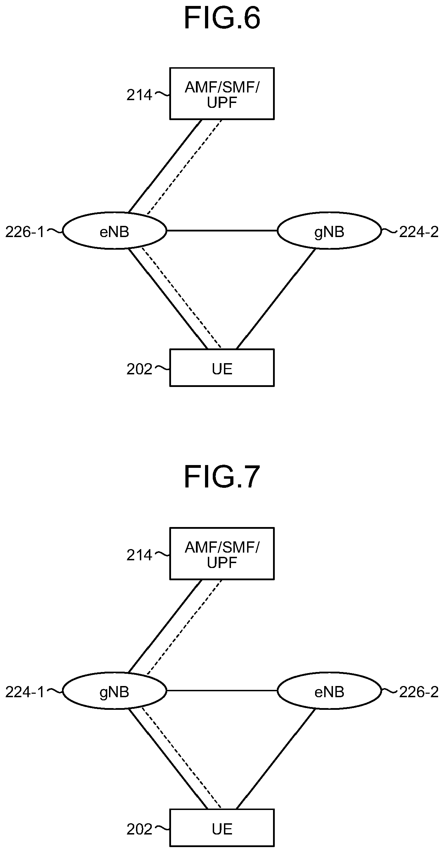

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

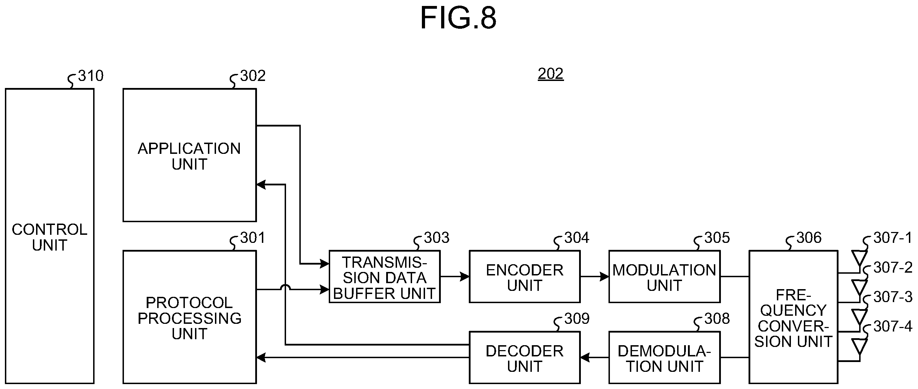

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

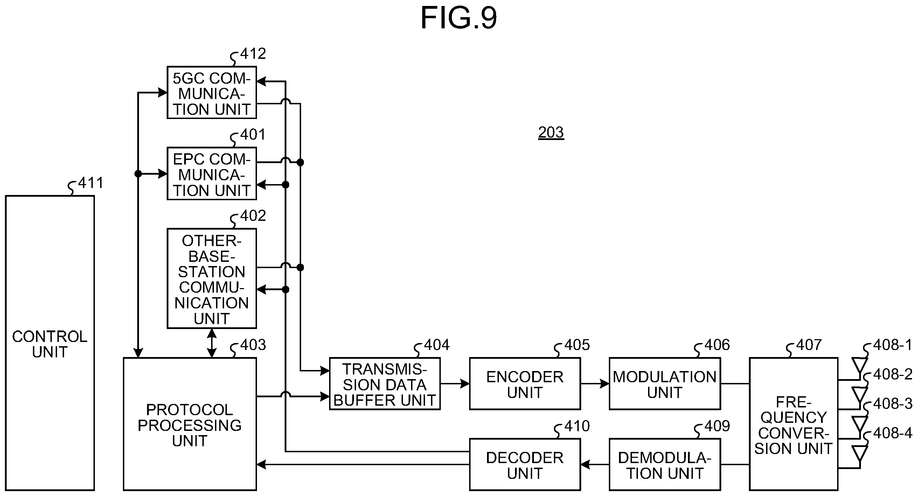

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411. Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

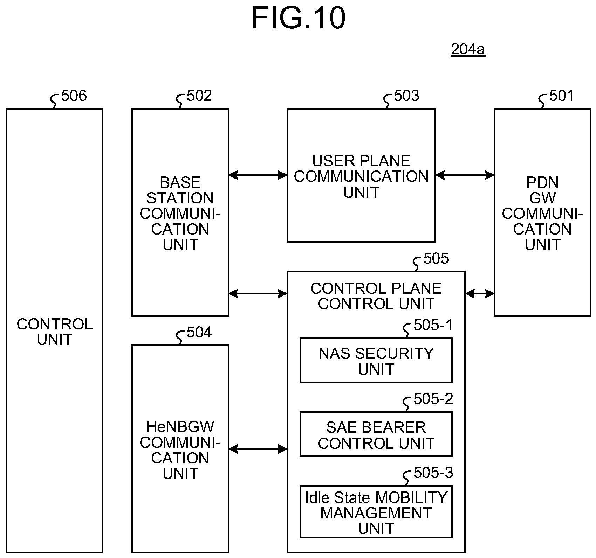

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

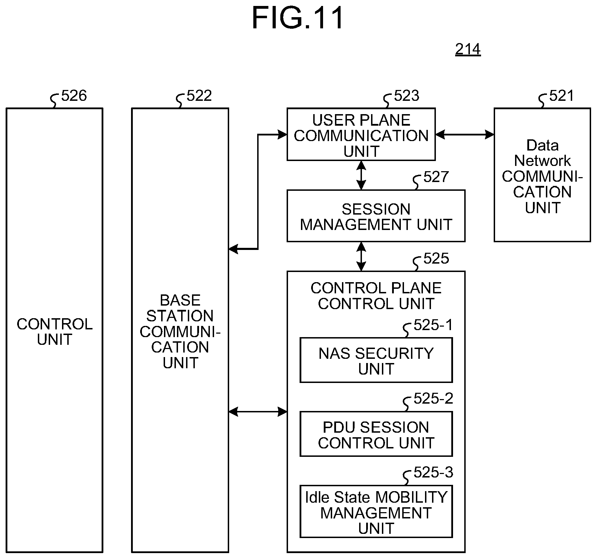

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

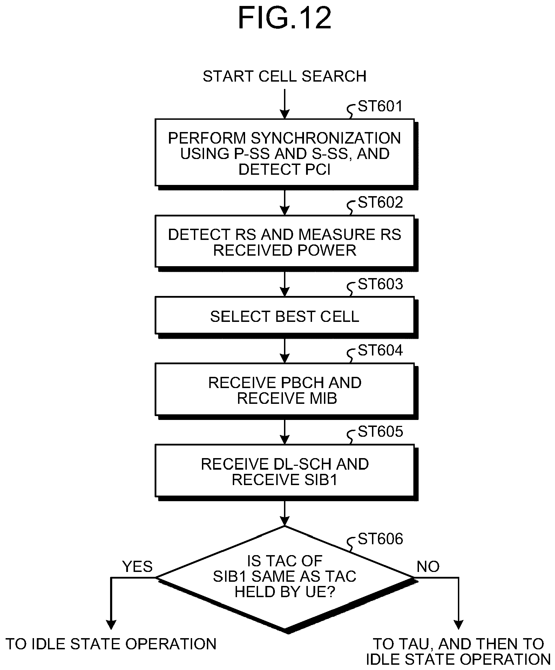

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core network-side device") updates the tracking area list on the basis of an identification number (such as a UE-ID) of a communication terminal transmitted from the communication terminal together with a TAU request signal. The core network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

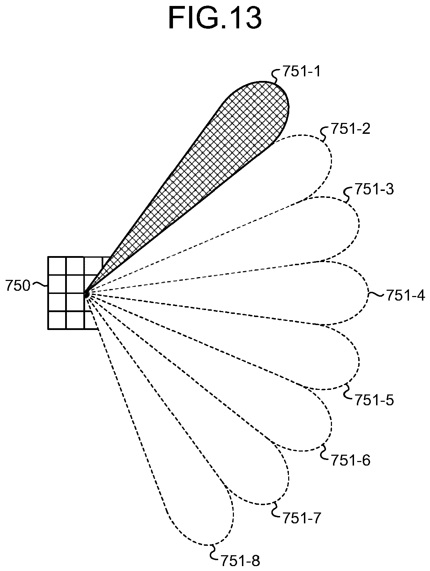

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also implemented by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

In multicast communication using NR, both point to multipoint (PTM) and point to point (PTP) may be used. A common PDCP entity may be used in the PTM and the PTP. The PTM and the PTP may have legs (combination of RLC and logical channel) different from each other. In multicast communication, the PTM leg and the PTP leg may be used while being dynamically switched therebetween.

A 5G base station can support integrated access and backhaul (IAB) (see Non Patent Literature 16 (TS 38.300)). That is, multicast may be performed by using a base station that supports IAB (hereinafter, sometimes referred to as an IAB base station).

In multicast using a base station having an IAB configuration, an IAB-node present in the middle of a path from an IAB-donor CU to a UE, the IAB-donor CU being a CU of a base station operating as an IAB-donor, may perform multicast transmission to an IAB-node as a connection destination in communication with the UE (hereinafter, sometimes referred to as a child IAB-node), or may perform multicast transmission to the UE.

However, a detailed method for configuring multicast in the IAB base station has not been disclosed. Therefore, there arises a problem that multicast using the IAB base station cannot be implemented.

The first embodiment discloses a method for solving such a problem.

In order to solve the above problem, in a communication system according to the present embodiment, the IAB-donor CU determines a configuration for multicast. The IAB-donor CU notifies an IAB-donor DU (a DU of the base station operating as the IAB-donor) and/or an IAB-node (a base station operating as the IAB-node) of the configuration. The IAB-donor CU may perform the configuration on the IAB-donor DU and/or the IAB-node in order of proximity to the IAB-donor CU. For example, the IAB-donor CU may perform the configuration on the IAB-donor DU, then on a child IAB-node of the IAB-donor DU, and then on a child IAB-node of the child IAB-node. The IAB-donor CU may perform the configuration on an IAB-node directly connected to the UE, and then perform the configuration on the UE.

The IAB-donor CU may perform the configuration on the IAB-donor DU and/or the IAB-node by using F1 signaling. The F1 signaling may be, for example, signaling of Backhaul Adaption Protocol (BAP) MAPPING CONFIGURATION (see Non Patent Literature 35 (TS 38.473)), or other signaling.

The configuration may include information about routing of a BAP layer. The IAB-donor CU may include the information in the configuration. The configuration may be performed for each of the PTM leg and the PTP leg. The information about the routing of the BAP layer may include: information identifying the routing, for example, an identifier of the routing; information about a BAP address of the IAB-donor DU and/or the IAB-node (see Non Patent Literature 35 (TS 38.473)); information about a BAP address of a next hop destination, for example, a child IAB-node; information about a BAP address of an IAB-node directly connected to the UE that receives multicast data; or information about a path from the IAB-donor CU to the UE, for example, information about an identifier of the path. Consequently, for example, the IAB-donor DU and/or the IAB-node can smoothly perform the routing of the multicast data to the UE.

The configuration may include a plurality of pieces of the information about the routing of the BAP layer. For example, information about routing in transmission using the PTM leg and information about routing in transmission using the PTP leg may be included. A plurality of pieces of the information about the routing in transmission using the PTP leg may be included, and a plurality of pieces of the information about the routing in transmission using the PTM leg may be included. The IAB-node may perform switching between routing destinations by using information included in a BAP header, for example, information on DESTINATION and/or path IDs. Consequently, for example, the IAB-node can dynamically change a routing destination.

The configuration may include information about an area in which multicast is transmittable. With the use of the information, the IAB-node may control beams and/or transmission power so that a transmission range of multicast data falls within the area. Consequently, for example, transmission of the multicast data to the outside of the transmittable area can be prevented.

The configuration may include information about a transmission method. The information may include information indicating that the PTM leg is used or information indicating that the PTP leg is used. The information may be provided for each of a child IAB-node and/or a UE as a transmission destination. With the use of the information, the IAB-donor DU and/or the IAB-node may determine a leg to be used for transmission to the child IAB-node and/or the UE. Consequently, for example, the IAB-donor DU and/or the IAB-node can quickly determine the leg to be used for the transmission.

A predetermined mode may be provided for a method of transmission from the IAB-donor DU and/or the IAB-node to the child IAB-node and/or the UE. For example, there may be a mode in which the PTM leg is used to perform transmission to both the child IAB-node and the UE, a mode in which the PTM leg and the PTP leg are used to perform transmission to the UE and the child IAB-node, respectively, a mode in which the PTP leg and the PTM leg are used to perform transmission to the UE and the child IAB-node, respectively, or a mode in which the PTP leg is used to perform transmission to both the child IAB-node and the UE. As other examples, there may be a mode in which both the PTP leg and the PTM leg can be used for the UE, a mode in which only the PTP leg is used to perform transmission to the UE, a mode in which only the PTM leg is used to perform transmission to the UE, a mode in which both the PTP leg and the PTM leg can be used for the child IAB-node, a mode in which only the PTP leg is used to perform transmission to the child IAB-node, a mode in which only the PTM leg is used to perform transmission to the child IAB-node, or a combination of the above, for example, respective modes for transmission to the UE and respective modes for transmission to the child IAB-node may be used in combination. The mode may be configurable for each child IAB-node and/or UE. The IAB-donor CU may determine the mode and notify the IAB-donor DU and/or the IAB-node thereof. The mode may be included in the configuration described above. The IAB-donor DU and/or the IAB-node may determine a leg to be used for transmission to the child IAB-node and/or the UE by using the information about the mode. Consequently, for example, the IAB-donor DU and/or the IAB-node can quickly determine the leg to be used for the transmission, and as a result, the amount of processing in a transmission process from the IAB-donor DU and/or the IAB-node can be reduced.

In the routing using the IAB-node, multicast data received by using the PTM leg may be transmitted by using the PTP leg, multicast data received by using the PTP leg may be transmitted by using the PTM leg, multicast data received by using the PTM leg may be transmitted by using the PTM leg, or multicast data received by using the PTP leg may be transmitted by using the PTP leg. Consequently, for example, it is possible to improve flexibility in the communication system.

The routing of the BAP layer may be determined by using the information about the area in which multicast is transmittable. For example, the IAB-node that performs routing of the multicast may be determined from IAB-nodes whose transmission ranges are included in the area. Consequently, for example, transmission of the multicast data to the outside of the transmittable area can be prevented.

A core NW device may determine the information about the area in which multicast is transmittable. The core NW device may notify the IAB-donor CU of the information. As another example, the core NW device may notify the IAB-donor CU of information about IAB-nodes belonging to the area. The IAB-donor CU may determine an IAB-node that performs routing by using the above information. Consequently, for example, the IAB-donor CU can appropriately select an IAB-node in the area in which multicast is transmittable.

The IAB-donor DU and/or the IAB-node may determine an identifier to be allocated to the child IAB-node and/or the UE. The identifier may be, for example, a G-RNTI and/or an SC-RNTI (see Non Patent Literature 34 (TS 36.321)), or a C-RNTI. The IAB-donor DU and/or the IAB-node may notify the IAB-donor CU of the identifier. The notification may be performed by using F1 signaling, for example, signaling of UL RRC MESSAGE TRANSFER (see Non Patent Literature 35 (TS 38.473)).

The IAB-donor CU may notify the IAB-node and/or the UE of a multicast configuration. The notification may be performed via the IAB-donor DU and/or a parent IAB-node (in communication between an IAB-node and the IAB-donor CU, an IAB-node as a connection destination of the IAB-node, the same applies hereinafter). The notification to the IAB-donor DU and/or the parent IAB-node may be performed by using F1 signaling, for example, DL RRC MESSAGE TRANSFER (see Non Patent Literature 35 (TS 38.473)). For the notification from the IAB-donor DU and/or the parent IAB-node to the IAB-node and/or the UE, RRC signaling, for example, signaling of RRCReconfiguration may be used. The IAB-node and/or the UE may perform a reception operation for multicast by using the notification.

The notification from the IAB-donor CU to the IAB-node and/or the UE may include information about the PTM leg, information about the PTP leg, information about the above identifier, information about a BAP address, information about an RLC configuration, information about a MAC configuration, information about a PHY configuration, or information about a logical channel, for example, information used to identify the logical channel. The BAP address may include information about a BAP address of the IAB-donor DU and/or the IAB-node, information about a BAP address of a next hop destination, for example, a child IAB-node, or information about a BAP address of an IAB-node directly connected to a UE that receives multicast data. The above information may be included as information about each of the PTM leg and the PTP leg.

A BAP address used for multicast (hereinafter, sometimes referred to as a multicast BAP address) may be provided. The multicast BAP address may be provided for each multicast service or content. Consequently, for example, each device of the communication system can quickly recognize a service or content related to multicast.

As another example, the multicast BAP address may be provided for each combination of IAB-nodes as multicast transmission destinations. Consequently, for example, each device of the communication system can quickly recognize IAB-nodes as multicast transmission destinations.

The multicast BAP address and an IAB-node may be associated with each other. The number of IAB-nodes may be one, or may be two or more. The association may be determined by the IAB-donor CU. The IAB-donor CU may notify the IAB-donor DU and/or the IAB-node of information about the association. For example, signaling of BAP mapping configuration or signaling of DL RRC MESSAGE TRANSFER may be used for the notification. The IAB-donor DU and/or the IAB-node may know child IAB-nodes as multicast transmission destinations by using the notification. The IAB-donor DU and/or the IAB-node may perform multicast transmission to the child IAB-nodes included in the notification. Consequently, for example, the necessity for the IAB-donor DU and/or the IAB-node to perform multicast transmission to child IAB-nodes not included in the notification is eliminated, and as a result, the efficiency of the communication system can be improved.

As another example, multicast BAP addresses may be provided within a predetermined range of a range of values that can be taken as a BAP address. For example, BAP addresses in a range of BAP addresses in which all the first four bits are '1' may be provided as the BAP addresses for multicast. Consequently, for example, each device of the communication system can quickly recognize whether the BAP address is for multicast.

The IAB-donor CU may configure the multicast BAP address as the BAP address of the next hop destination, for example, the child IAB-node. The configuration may be included in, for example, signaling of BAP mapping configuration, signaling of DL RRC MESSAGE TRANSFER, or signaling of RRCReconfiguration. Consequently, for example, the amount of signaling from the IAB-donor CU to the IAB-donor DU and/or the IAB-node, from the IAB-donor DU and/or the IAB-node to the child IAB-node and/or the UE can be reduced.

The multicast BAP address may be included in a header of the BAP layer (see Non Patent Literature 36 (TS 38.340)). Consequently, for example, multicast data transmission to a plurality of child IAB-nodes can be performed using one BAP protocol data unit (PDU), and as a result, a load of backhaul communication can be reduced.

The multicast BAP address and the G-RNTI and/or the SC-RNTI described above may be associated with each other. For example, the IAB-donor CU may determine the multicast BAP address by using the G-RNTI and/or the SC-RNTI described above. For example, the IAB-donor DU and/or the IAB-node may employ, as a transmission destination of data of which the BAP address of a next hop destination is the multicast BAP address, the child IAB-node and/or the UE allocated to the G-RNTI described above. Consequently, for example, it is possible to improve the efficiency of the communication system.

The IAB-node may determine whether to perform routing by using information on DESTINATION included in the BAP header. For example, routing may be performed in a case where a BAP address included in the DESTINATION is not assigned to the IAB-node. The BAP address included in the DESTINATION may be a multicast BAP address. The IAB-node that performs routing may determine an IAB-node as a next hop destination by using a path ID included in the BAP header.

A path ID used for multicast may be provided. A multicast path ID may be provided for each multicast service or content. The multicast path ID and one or a plurality of BAP addresses may be associated with each other. The BAP addresses may include a multicast BAP address. The IAB-donor CU may use the multicast path ID in a multicast configuration for the IAB-donor DU and/or the IAB-node. Consequently, for example, the number of path IDs used in the IAB-donor CU can be reduced, and the complexity in the management of the path IDs can be avoided.

Different path ID values may be provided for routing to perform transmission by using the PTM leg and routing to perform transmission by using the PTP leg. Consequently, for example, it is possible to avoid complexity regarding the management of routing paths in the communication system.

As another example, the same path ID value may be configured for the routing to perform transmission by using the PTM leg and the routing to perform transmission by using the PTP leg. Consequently, for example, the number of path IDs to be used can be reduced, and as a result, the number of UEs capable of accommodating multicast can be increased.

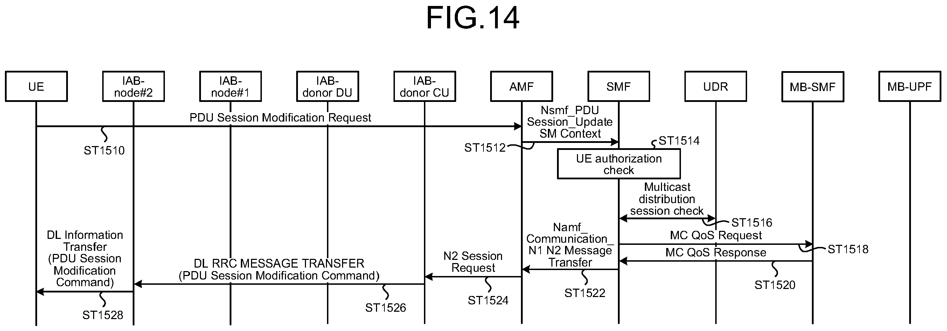

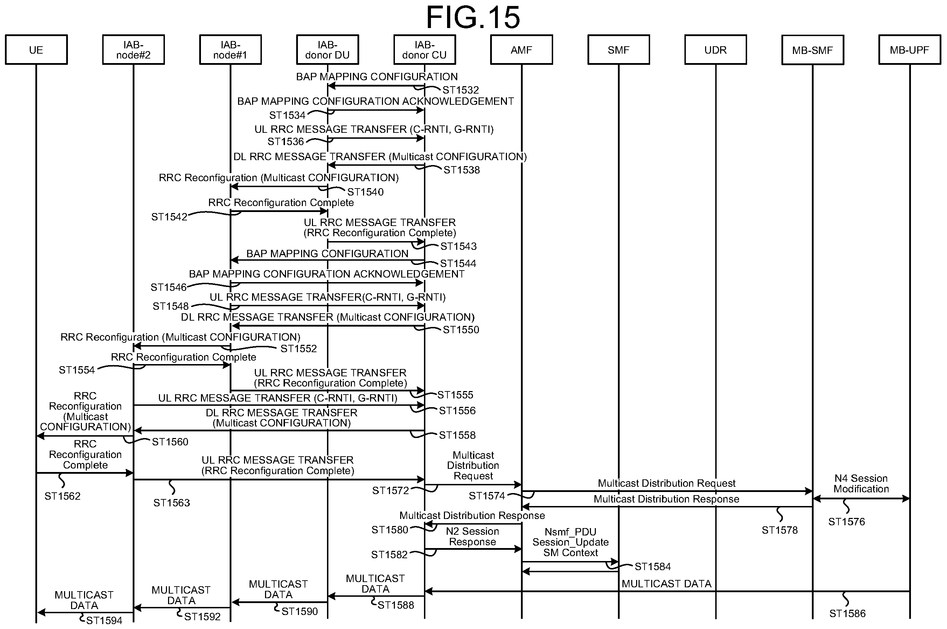

FIGS. 14 and 15 are each a sequence of a multicast configuration in the IAB base station. FIG. 14 illustrates a first half of the sequence, and FIG. 15 illustrates a second half of the sequence. That is, in the multicast configuration in the IAB base station, first, steps ST1510 to ST1528 illustrated in FIG. 14 are executed, and then steps ST1532 to ST1594 illustrated in FIG. 15 are executed. In the example illustrated in each of FIGS. 14 and 15, the UE is connected to the IAB-donor CU via IAB-node #2, IAB-node #1, and the IAB-donor DU. In the examples illustrated in each of FIGS. 14 and 15, it is assumed that the UE has obtained information about multicast in advance.

In step ST1510 illustrated in FIG. 14, the UE makes a PDU session modification request to the AMF. The request may be made using NAS signaling. The request may include information about multicast the UE desires to receive. In step ST1512, the AMF notifies the SMF that the PDU session modification request has been made. The notification may be performed by using, for example, the Nsmf_PDUSession_UpdateSMContext service operation (see Non Patent Literature 37 (TS 23.502)). The notification may include the information about the multicast the UE desires to receive. In step ST1514, the SMF checks whether the UE can receive the multicast. In step ST1516, the SMF inquires of a united data repository (UDR) (see Non Patent Literature 21 (TS 23.501)) as to the information about the multicast and acquires the information from the UDR. In step ST1518, the SMF requests information about QoS of multicast from a multicast/broadcast SMF (MB-SMF) (see Non Patent Literature 28 (TR 23.757)). In step ST1520, the MB-SMF notifies the SMF of a response to the request. The response may include the information about the QoS of the multicast.

In step ST1522 illustrated in FIG. 14, the SMF requests the AMF to transmit a message to the base station. The request may be made by using the Namf_Communication_N1N2MessageTransfer service operation (see Non Patent Literature 37 (TS 23.502)). The request may include a request for generating a multicast context in the base station. In step ST1524, the AMF requests the IAB-donor CU to modify a PDU session. For the request, for example, signaling of a PDU Session Resource Modify Request (see Non Patent Literature 38 (TS 38.413)) may be used. The request may include information about multicast sessions. The IAB-donor CU may acquire the information about multicast sessions by using the information.

In step ST1526 illustrated in FIG. 14, the IAB-donor CU notifies IAB-node #2 of a PDU session modification request. The request may include information about multicast sessions. The notification may be performed via the IAB-donor DU and IAB-node #1. The notification may be performed by using F1 signaling, for example, DL RRC MESSAGE TRANSFER. In step ST1528, IAB-node #2 notifies the UE of a PDU session modification request. The UE may acquire the information about multicast sessions by using the information in step ST1528. The UE may change information on the PDU session.

In steps ST1532 to ST1562 illustrated in FIG. 15, a configuration for multicast transmission is performed between the IAB base station and the UE.

In step ST1532 illustrated in FIG. 15, the IAB-donor CU configures information about routing for the IAB-donor DU. The IAB-donor CU may determine information necessary for the configuration as triggered by the reception of the request in step ST1524. For example, the IAB-donor CU may determine a PDU session related to multicast and an IAB-node to be used for routing by using information included in the request received in step ST1524. The information about the routing may include information about a BAP address of the IAB-donor DU, information about a path, for example, information about an IAB-node directly connected to the UE, information about a BAP address of a next hop destination, or information about an identifier of an RLC channel to be used. For the configuration in step ST1532, F1 signaling, for example, signaling of BAP MAPPING CONFIGURATION may be used. In step ST1534, the IAB-donor DU notifies the IAB-donor CU of a response to step ST1532. In the example illustrated in FIG. 15, a notification of an acknowledgment is performed. For the notification in step ST1534, F1 signaling, for example, signaling of BAP MAPPING CONFIGURATION ACKNOWLEDGEMENT may be used. In step ST1536, the IAB-donor DU notifies the IAB-donor CU of an identifier to be allocated to a child IAB-node, in the example illustrated in FIG. 15, IAB-node #1. The identifier may be a C-RNTI, a G-RNTI, an SC-RNTI, or may include two or more of the above. The notification may include information about an RRC configuration used by the IAB-donor DU for communication with IAB-node #1. The IAB-donor DU may perform the notification in step ST1536 as triggered by the reception in step ST1532. F1 signaling, for example, UL RRC MESSAGE TRANSFER may be used for the notification.

In step ST1538 illustrated in FIG. 15, the IAB-donor CU notifies the IAB-donor DU of the RRC configuration to be used for multicast communication with IAB-node #1. For the notification, F1 signaling, for example, signaling of DL RRC MESSAGE TRANSFER may be used. In step ST1540, the IAB-donor DU performs a configuration for multicast on IAB-node #1. The configuration may include a configuration for the PTM leg or a configuration for the PTP leg. For example, signaling of RRCReconfiguration may be used for the configuration. Step ST1540 may include information about the identifier of IAB-node #1, for example, the C-RNTI, the G-RNTI, and/or the SC-RNTI, information about the BAP address, information about the RLC configuration, information about the MAC configuration, information about the PHY configuration, or information about the logical channel, for example, information used to identify the logical channel. The BAP address may include information about a BAP address of IAB-node #1, information about a BAP address of a next hop destination, for example, IAB-node #2, or information about a BAP address of the IAB-node directly connected to the UE that receives multicast data, for example, the information about the BAP address of IAB-node #2. The above information may be included as information about each of the PTM leg and the PTP leg. In step ST1542, IAB-node #1 notifies the IAB-donor DU of completion of the configuration for the multicast. For example, signaling of RRCReconfigurationComplete may be used for the notification. In step ST1443, the IAB-donor DU notifies the IAB-donor CU of information about completion of RRC reconfiguration of IAB-node #1. F1 signaling, for example, signaling of UL RRC MESSAGE TRANSFER may be used for the notification. The IAB-donor CU may recognize that the multicast configuration for IAB-node #1 is completed as triggered by ST1543.

In step ST1544 illustrated in FIG. 15, the IAB-donor CU configures information about routing for IAB-node #1. The information about the routing may include information about the BAP address of IAB-node #1, information about the path, for example, information about the IAB-node directly connected to the UE, information about the BAP address of the next hop destination, or information about an identifier of an RLC channel to be used. For the configuration in step ST1544, F1 signaling, for example, signaling of BAP MAPPING CONFIGURATION may be used. In step ST1546, IAB-node #1 notifies the IAB-donor CU of a response to step ST1544. In the example illustrated in FIG. 15, a notification of an acknowledgment is performed. For the notification in step ST1546, F1 signaling, for example, signaling of BAP MAPPING CONFIGURATION ACKNOWLEDGEMENT may be used. In step ST1548, IAB-node #1 notifies the IAB-donor CU of an identifier to be allocated to a child IAB-node, in the example illustrated in FIG. 15, IAB-node #2. The identifier may be a C-RNTI, a G-RNTI, an SC-RNTI, or may include two or more of the above. The notification may include information about an RRC configuration used by IAB-node #1 for communication with IAB-node #2. IAB-node #1 may perform the notification in step ST1548 as triggered by the reception in step ST1540, as triggered by the reception in step ST1544, or as triggered by the reception in both steps ST1540 and ST1544. F1 signaling, for example, UL RRC MESSAGE TRANSFER may be used for the notification.

In step ST1550 illustrated in FIG. 15, the IAB-donor CU notifies IAB-node #1 of the RRC configuration to be used for multicast communication with IAB-node #2. For the notification, F1 signaling, for example, signaling of DL RRC MESSAGE TRANSFER may be used. In step ST1552, IAB-node #1 performs a configuration for multicast on IAB-node #2. The configuration may include a configuration for the PTM leg or a configuration for the PTP leg. For example, signaling of RRCReconfiguration may be used for the configuration. Step ST1552 may include information about the identifier of IAB-node #2, for example, the C-RNTI, the G-RNTI, and/or the SC-RNTI, information about the BAP address, information about the RLC configuration, information about the MAC configuration, information about the PHY configuration, or information about the logical channel, for example, information used to identify the logical channel. The BAP address may include information about the BAP address of IAB-node #2, information about a BAP address of a next hop destination, or information about a BAP address of an IAB-node directly connected to the UE that receives multicast data. The above information may be included as information about each of the PTM leg and the PTP leg. In step ST1554, IAB-node #2 notifies IAB-node #1 of completion of the configuration for the multicast. For example, signaling of RRCReconfigurationComplete may be used for the notification. In step ST1555, IAB-node #1 notifies the IAB-donor CU of information about completion of RRC reconfiguration of IAB-node #2. F1 signaling, for example, signaling of UL RRC MESSAGE TRANSFER may be used for the notification. The IAB-donor CU may recognize that the multicast configuration for IAB-node #2 is completed as triggered by step ST1555.

In step ST1556 illustrated in FIG. 15, IAB-node #2 notifies the IAB-donor CU of an identifier to be allocated to the UE. The identifier may be a C-RNTI, a G-RNTI, an SC-RNTI, or may include two or more of the above. The notification may include information about an RRC configuration used by IAB-node #2 for communication with the UE. IAB-node #2 may perform the notification in step ST1556 as triggered by the reception in step ST1554. F1 signaling, for example, UL RRC MESSAGE TRANSFER may be used for the notification.

In step ST1558 illustrated in FIG. 15, the IAB-donor CU notifies IAB-node #2 of the RRC configuration to be used for multicast communication with the UE. F1 signaling, for example, signaling of DL RRC MESSAGE TRANSFER may be used for the notification. In step ST1560, IAB-node #2 performs a configuration for multicast on the UE. The configuration may include a configuration for the PTM leg or a configuration for the PTP leg. For example, signaling of RRCReconfiguration may be used for the configuration. Step ST1560 may include information about the identifier of the UE, for example, the C-RNTI, the G-RNTI, and/or the SC-RNTI, information about the RLC configuration, information about the MAC configuration, information about the PHY configuration, or information about the logical channel, for example, information used to identify the logical channel. The above information may be included as information about each of the PTM leg and the PTP leg. In step ST1562, the UE notifies IAB-node #2 of completion of the configuration for the multicast. For example, signaling of RRCReconfigurationComplete may be used for the notification. In step ST1563, IAB-node #2 notifies the IAB-donor CU of information about completion of RRC reconfiguration of the UE. F1 signaling, for example, signaling of UL RRC MESSAGE TRANSFER may be used for the notification. The IAB-donor CU may recognize that the multicast configuration for the UE is completed as triggered by step ST1563.

In step ST1572 illustrated in FIG. 15, the IAB-donor CU requests the AMF to perform multicast distribution. The request may include information for identifying the UE or information for identifying multicast. In step ST1574, the AMF requests the MB-SMF to perform multicast distribution. In step ST1576, modification of session information related to multicast distribution is performed between the MB-SMF and a multicast/broadcast UPF (MB-UPF) (see Non Patent Literature 28 (TR 23.757)). In step ST1578, the MB-SMF notifies the AMF of a response to the multicast distribution request. In step ST1580, the AMF notifies the IAB-donor CU of a response to the multicast distribution request.

In step ST1582 illustrated in FIG. 15, the IAB-donor CU notifies the AMF of a response to modification of the session information related to the multicast distribution. In step ST1584, the AMF notifies the SMF of a response to the modification of the session information. For example, a process of Nsmf_PDUSession_UpdateSMContext (see Non Patent Literature 37 (TS 23.502)) may be used for the notification.

In step ST1586 illustrated in FIG. 15, the MB-UPF transmits multicast data to the IAB-donor CU. In step ST1588, the IAB-donor CU transfers the data to the IAB-donor DU. In step ST1590, the IAB-donor DU transfers the data to IAB-node #1. In step ST1592, IAB-node #1 transfers the data to IAB-node #2. In step ST1594, IAB-node #2 transfers the data to the UE. In steps ST1590 to ST1594, the PTP leg may be used, the PTM leg may be used, or both of the above may be used.

In multicast transmission from the IAB base station, the PTM leg and the PTP leg may be switched therebetween. The switching may be determined by the IAB-donor CU or by an IAB-node directly connected to the UE. The IAB-donor CU and/or the IAB-node may make the determination by using information about a PDCP sequence number (SN), for example, information about a PDCP SN with acknowledgment from the UE. The IAB-node may notify the IAB-donor CU of a result of the determination. The IAB-donor CU may determine a leg to be used in multicast by using a result of the determination by the IAB-donor CU and/or the IAB-node.

As another example of the switching, the switching may be determined by the IAB-donor DU or by an IAB-node present in the middle of a path to the UE. The IAB-donor DU and/or the IAB-node may make the determination by using information about an RLC SN, for example, information about an RLC SN with acknowledgment from the UE. The IAB-donor DU and/or the IAB-node may notify the IAB-donor CU of a result of the determination. The IAB-donor CU may determine a leg to be used in multicast by using a result of the determination by the IAB-donor CU and/or the IAB-node.

As another example of the switching, the UE may determine the switching. For example, the UE may make the determination by using a multicast reception status (e.g., PDCP SN and RLC SN). The UE may notify the base station of a request for the switching, or information about the multicast reception status. The UE may be enabled to autonomously transmit the notification to the base station. A PDCP status report (see Non Patent Literature 39 (TS 38.323)) may be used for the notification. The IAB-donor CU may perform PTM/PTP switching by using the information received from the UE.

As another example, the UE may use a PRACH or RRC signaling for the notification. The IAB-donor DU and/or the IAB-node that directly communicates with the UE may transfer the notification from the UE to the IAB-donor CU. The IAB-donor DU and/or the IAB-node may perform the transfer by using F1 signaling. Consequently, for example, the IAB-donor DU and/or the IAB-node can notify the IAB-donor CU of a PTM/PTP switching request from the UE. The IAB-donor CU may perform PTM/PTP switching by using the notification transferred from the IAB-donor DU and/or the IAB-node.

For example, signaling of UL RRC MESSAGE TRANSFER (see Non Patent Literature 35 (TS 38.473)), or new signaling may be used for the F1 signaling described above. The new signaling may include, for example, information indicating that there is a PTM/PTP switching request from the UE, information about a leg before switching, information about a leg after switching, information about a multicast reception status in the UE regarding a leg, or a plurality of pieces of the information of the above. As an example of the information about the multicast reception status, information about expiration of a timer (e.g., t-reordering described in Non Patent Literature 39) used in a PDCP layer may be used, information indicating that the number of missing PDCP service data units (SDUs) and/or PDCP PDUs related to multicast has reached or exceeded a predetermined value may be used, information about expiration of a timer (e.g., t-reassembly described in Non Patent Literature 40) used in an RLC layer may be used, or information indicating that the number of missing RLC service data units (SDUs) and/or RLC PDUs related to multicast has reached or exceeded a predetermined value may be used. The predetermined information may be determined in advance in a standard, or the IAB-donor CU may determine the predetermined information to perform a notification or broadcast thereof to the UE. A new timer may be provided as the timer used in the PDCP layer described above. A new timer may be provided as the timer used in the RLC layer described above. For example, the above information may be included as a reason in the F1 signaling. For example, the information about the multicast reception status may be included as a reason for a PTM/PTP leg switching request from the UE. Consequently, for example, the IAB-donor CU can acquire a detailed status of the UE.

The RRC signaling described above may also include information similar to the F1 signaling described above. Consequently, for example, an effect similar to that described above is obtained.

The IAB-donor CU may notify the IAB-donor DU and/or the IAB-node of information about the activation/deactivation of legs. For the notification, F1 signaling, for example, UE CONTEXT SETUP REQUEST or UE CONTEXT MODIFICATION REQUEST disclosed in Non Patent Literature 35 (TS 38.473) may be used. The IAB-donor DU and/or the IAB-node may notify the child IAB-node and/or the UE of information about the activation/deactivation of legs. The notification may be performed by using, for example, MAC signaling. Consequently, it is possible to quickly notify the child IAB-node and/or the UE of the information, for example.

According to the first embodiment, multicast transmission from the IAB base station can be performed.

### Second Embodiment.

In multicast from an IAB base station, a child IAB-node and a UE may be simultaneously connected to an IAB-donor DU and/or an IAB-node.

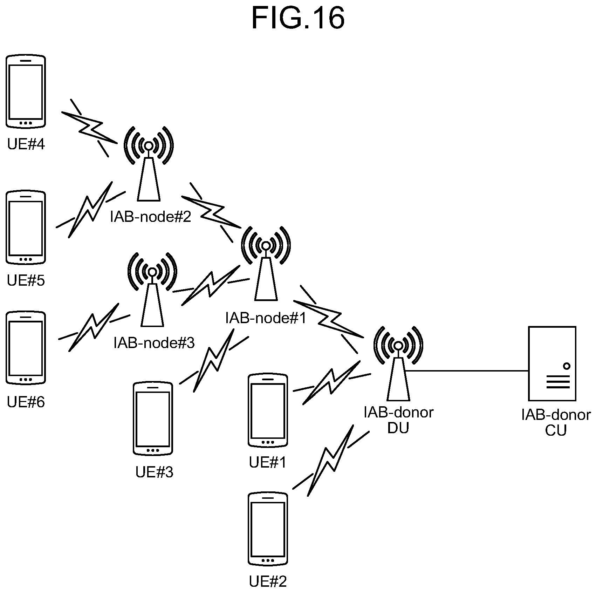

FIG. 16 is a diagram illustrating an example of connection in multicast from the IAB base station. In FIG. 16, an IAB-donor CU and an IAB-donor DU are connected by wire. The IAB-donor DU transmits multicast data to IAB-node #1, UE #1, and UE #2. The transmission from the IAB-donor DU may be performed by using a PTP leg or a PTM leg. IAB-node #1 transmits multicast data to IAB-node #2, IAB-node #3, and UE #3. The transmission from IAB-node #1 may be performed by using a PTP leg or a PTM leg. IAB-node #2 transmits multicast data to UE #4 and UE #5. The transmission from IAB-node #2 may be performed by using a PTP leg or a PTM leg. IAB-node #3 transmits multicast data to UE #6. The transmission from IAB-node #3 may be performed by using a PTP leg or a PTM leg.

FIG. 16 illustrates the example of connection in multicast, but the configuration of the connection is not limited to the aspect illustrated in FIG. 16. For example, another IAB-node may be connected to the IAB-donor DU, another IAB-node may be further connected to IAB-node #1, another IAB-node may be connected to IAB-node #2, another IAB-node may be connected to IAB-node #3, or another UE may be connected thereto. In addition, the number of IAB-donor DUs may be two or more.

In the above description, the following problem occurs. That is, protocol stacks are different from each other between a case where the IAB-donor DU or the IAB-node transmits U-plane data to an IAB-node as a connection destination in communication with the UE (hereinafter, sometimes referred to as a child IAB-node) and a case where the IAB-donor DU or the IAB-node transmits the U-plane data to the UE.

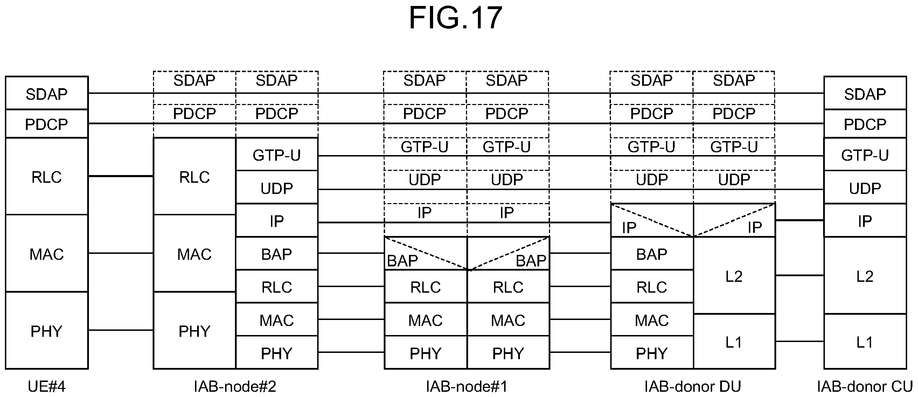

FIG. 17 is a diagram illustrating a protocol stack between the IAB-donor CU and the UE. FIG. 17 illustrates a protocol stack of a U-plane between the IAB-donor CU and UE #4 illustrated in FIG. 16.

In the example illustrated in FIG. 17, the SDAP and PDCP protocols from the IAB-donor CU are terminated in UE #4. The GPRS tunneling protocol for user plane (GTP-U) and user datagram protocol (UDP) protocols from IAB-donor CU are terminated in IAB-node #2. The IP protocol from the IAB-donor CU is terminated once in the IAB-donor DU. The IP header is replaced in the IAB-donor DU, and the IP protocol from the IAB-donor DU is terminated in IAB-node #2. The L1 and L2 protocols from the IAB-donor CU are terminated in the IAB-donor DU.

In the example illustrated in FIG. 17, the BAP protocol from the IAB-donor DU is terminated once in IAB-node #1. A process of a BAP layer is performed in IAB-node #1 and the BAP protocol from IAB-node #1 is terminated in IAB-node #2.

In the example illustrated in FIG. 17, the RLC, MAC and PHY protocols from the IAB-donor DU are terminated in IAB-node #1. The RLC, MAC and PHY protocols from IAB-node #1 are terminated in IAB-node #2. The RLC, MAC and PHY protocols from IAB-node #2 are terminated in UE #4.

In the example illustrated in FIG. 17, U-plane data transmitted by IAB-node #1 to IAB-node #2 has been subjected to processes with respective protocols of PHY, MAC, RLC, BAP, IP, UDP, GTP-U, PDCP, and SDAP.

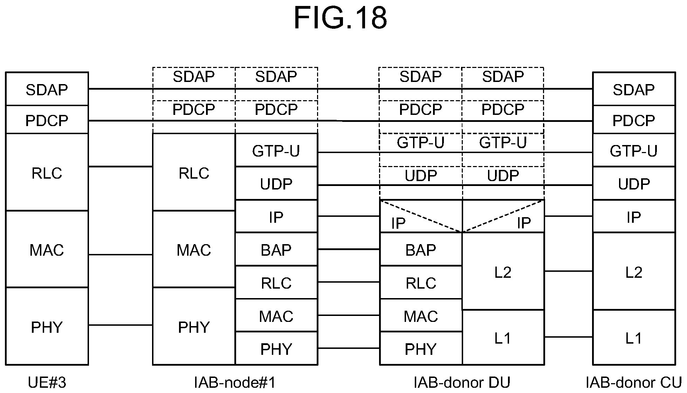

FIG. 18 is a diagram illustrating another example of the protocol stack between the IAB-donor CU and the UE. FIG. 18 illustrates a protocol stack of a U-plane between the IAB-donor CU and UE #3 illustrated in FIG. 16.

In the example illustrated in FIG. 18, the SDAP and PDCP protocols from the IAB-donor CU are terminated in UE #3. The GTP-U and UDP protocols from the IAB-donor CU are terminated in IAB-node #1. The IP protocol from the IAB-donor CU is terminated once in the IAB-donor DU. The IP header is replaced in the IAB-donor DU and the IP protocol from the IAB-donor DU is terminated in IAB-node #1. The L1 and L2 protocols from the IAB-donor CU are terminated in the IAB-donor DU.

In the example illustrated in FIG. 18, the BAP protocol from the IAB-donor DU is terminated in IAB-node #1.

In the example illustrated in FIG. 18, the RLC, MAC and PHY protocols from the IAB-donor DU are terminated in IAB-node #1. The RLC, MAC and PHY protocols from IAB-node #1 are terminated in UE #4.

In the example illustrated in FIG. 18, U-plane data transmitted by IAB-node #1 to UE #3 has been subjected to processes with respective protocols of PHY, MAC, RLC, PDCP, and SDAP.

Therefore, in the examples illustrated in FIGS. 17 and 18, the protocol stack of the U-plane data transmitted by IAB-node #1 to IAB-node #2 and the protocol stack of the U-plane data transmitted by IAB-node #1 to UE #3 are different from each other.

This causes a problem that in multicast transmission of data from the IAB-node to the child IAB-node and the UE, the child IAB-node and/or the UE cannot correctly recognize the data due to a difference in protocol stacks.

The second embodiment discloses a method for solving such a problem.

In order to solve the above problem, in a communication system according to the present embodiment, the IAB-node configures the PTM leg only for the UE. Only the PTP leg is configured for the child IAB-node. The IAB-node may configure the PTP leg for the UE. The IAB-node may use the PTP leg or the PTM leg for transmission to the UE.

The IAB-node allocates an identifier used for transmission using the PTM leg only to the UE. The identifier may be, for example, the G-RNTI and/or the SC-RNTI, or another identifier. The IAB-node allocates an identifier used for transmission using the PTP leg to the child IAB-node. The identifier may be, for example, the C-RNTI (see Non Patent Literature 17), or another identifier. The IAB-node may notify the IAB-donor CU of the above-described identifiers, for example, the G-RNTI, the SC-RNTI, and/or the C-RNTI. The notification may be performed by using F1 signaling, for example, signaling of UL RRC MESSAGE TRANSFER.

The IAB-donor CU performs a multicast configuration on the UE and/or the above-described child IAB-node. The configuration may include information about the above-described identifiers, for example, the G-RNTI, the SC-RNTI, and/or the C-RNTI. The configuration may be performed via the above-described IAB-node. The IAB-donor CU may notify the IAB-node of the configuration for the UE and/or the above-described child IAB-node. The notification may be performed by using F1 signaling, for example, signaling of DL RRC MESSAGE TRANSFER. The IAB-node may perform a multicast configuration on the UE and/or the child IAB-node. The configuration may be performed by using RRC signaling, for example, signaling of RRCReconfiguration. The UE and/or the child IAB-node may start a reception operation for multicast by using the signaling.

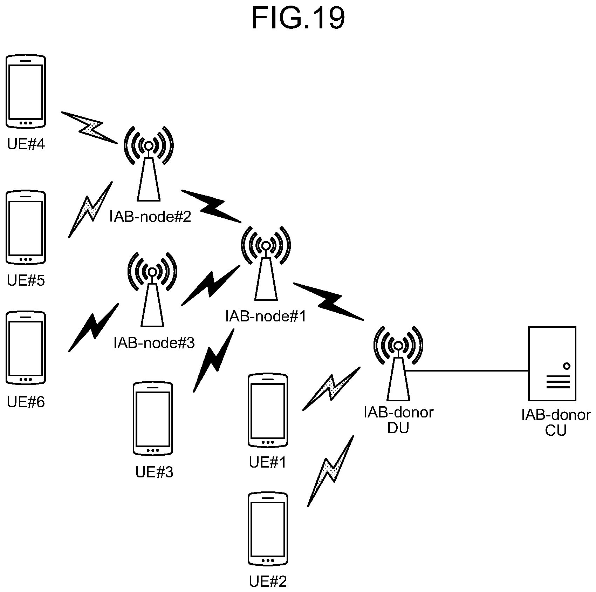

FIG. 19 is a diagram illustrating an example of multicast transmission from the IAB base station. In FIG. 19, gray lightning bolt lines each indicate communication using the PTM leg, and black lightning bolt lines each indicate communication using the PTP leg.

In FIG. 19, the IAB-donor DU transmits multicast data to UE #1 and UE #2 by using the PTM legs. The IAB-donor DU transmits multicast data to IAB-node #1 by using the PTP leg only.

Similarly, IAB-node #2 transmits multicast data to UE #4 and UE #5 by using the PTM legs. IAB-node #1 transmits multicast data to IAB-node #2, IAB-node #3, and UE #3 by using the PTP legs only. IAB-node #3 transmits multicast data to UE #6 by using the PTP leg.

Although FIG. 19 illustrates the example in which multicast data is transmitted from IAB-node #1 to UE #3 and from IAB-node #3 to UE #6 by using the PTP legs, the PTM legs may be used.

Only terminal IAB-nodes, i.e., IAB-nodes to which no child IAB-node is connected, may perform transmission to the UEs by using the PTM legs. That is, non-terminal IAB-nodes may perform transmission to the UEs using the PTP legs. Consequently, for example, it is possible to avoid complexity in the communication system.

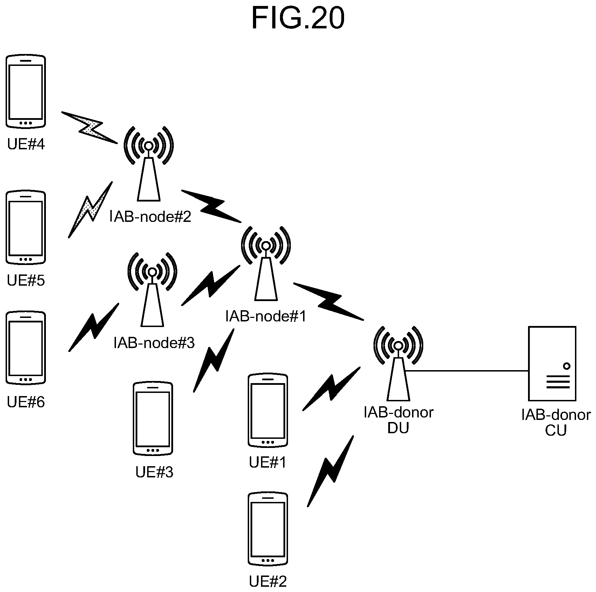

FIG. 20 is a diagram illustrating another example of the multicast transmission from the IAB base station.

In FIG. 20, gray lightning bolt lines each indicate communication using the PTM leg, and black lightning bolt lines each indicate communication using the PTP leg. FIG. 20 illustrates an example of a case where only a terminal IAB-node transmits multicast data to the UEs by using the PTM legs.

In FIG. 20, multicast transmission using the PTM legs is performed from IAB-node #2 as a terminal IAB-node to UE #4 and UE #5. The PTP legs are used in other multicast transmissions.

Although FIG. 20 illustrates the example in which multicast data is transmitted from IAB-node #3 to UE #6 by using the PTP leg, the PTM leg may be used since IAB-node #3 is also a terminal IAB-node.

Another solution will be disclosed. The IAB-node configures the PTM leg only for the child IAB-node. Only the PTP leg is configured for the UE. The IAB-node may configure the PTP leg for the child IAB-node. The IAB-node may use the PTM leg or the PTP leg for transmission to the child IAB-node.

The IAB-node allocates an identifier used for transmission using the PTM leg only to the child IAB-node. The identifier may be, for example, the G-RNTI and/or the SC-RNTI, or another identifier. The IAB-node allocates an identifier used for transmission using the PTP leg to the UE. The identifier may be, for example, the C-RNTI, or another identifier. The IAB-node may notify the IAB-donor CU of the above-described identifiers, for example, the G-RNTI, the SC-RNTI, and/or the C-RNTI. The notification may be performed by using F1 signaling, for example, signaling of UL RRC MESSAGE TRANSFER.

The IAB-donor CU performs a multicast configuration on the UE and/or the above-described child IAB-node. The configuration may include information about the above-described identifiers, for example, the G-RNTI, the SC-RNTI, and/or the C-RNTI. The configuration may be performed via the above-described IAB-node. The IAB-donor CU may notify the IAB-node of the configuration for the UE and/or the above-described child IAB-node. The notification may be performed by using F1 signaling, for example, signaling of DL RRC MESSAGE TRANSFER. The IAB-node may perform a multicast configuration on the UE and/or the child IAB-node. The configuration may be performed by using RRC signaling, for example, signaling of RRCReconfiguration. The UE and/or the child IAB-node may start a reception operation for multicast by using the signaling.

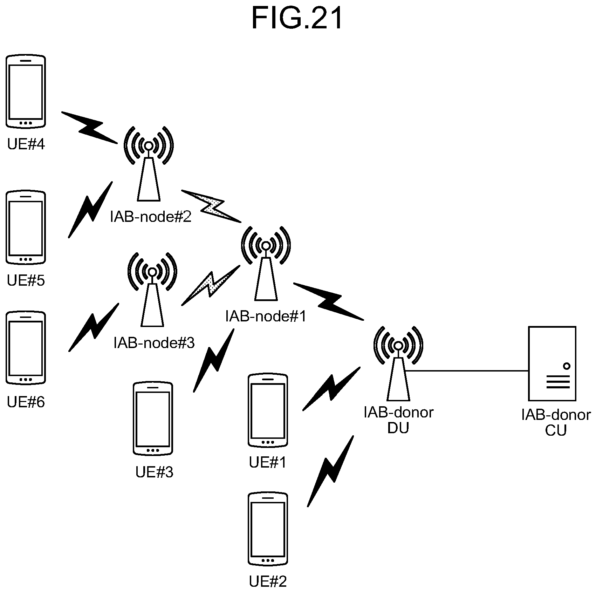

FIG. 21 is a diagram illustrating another example of the multicast transmission from the IAB base station. In FIG. 21, gray lightning bolt lines each indicate communication using the PTM leg, and black lightning bolt lines each indicate communication using the PTP leg. FIG. 21 illustrates an example of a case where the IAB-node transmits multicast data by using the PTM legs only to the child IAB-nodes.

In FIG. 21, in multicast communication from IAB-node #1 to IAB-node #2 and IAB-node #3, the PTM legs are used. From IAB-node #1 to UE #3, multicast communication is performed by using the PTP leg. The PTP legs are used in other multicast transmissions.

Although FIG. 21 illustrates the example in which multicast communication is performed from the IAB-donor DU to IAB-node #1 by using the PTP leg, the PTM leg may be used.

Another solution will be disclosed. The above solutions may be used in combination. For example, there may be an IAB-node and/or an IAB-donor DU that configures the PTM leg only for a UE, or an IAB-node and/or an IAB-donor DU that configures the PTM leg only for a child IAB-node. In the same IAB-node, the PTM legs need not be configured for the UE and the child IAB-node simultaneously. In the IAB-donor DU, the PTM legs need not be configured for the UE and the child IAB-node simultaneously. Consequently, for example, it is possible to improve flexibility of the communication system.

As another example, in the same IAB-node, the PTM legs may be configured for the UE and the child IAB-node simultaneously. In the IAB-node, the PTM leg used for transmission to the UE and the PTM leg used for transmission to the child IAB-node need not be activated simultaneously. For example, the method disclosed in the first embodiment may be used to activate/deactivate the PTM leg used for transmission to the UE and/or the PTM leg used for transmission to the child IAB-node. Consequently, for example, it is possible to further improve flexibility in the communication system.

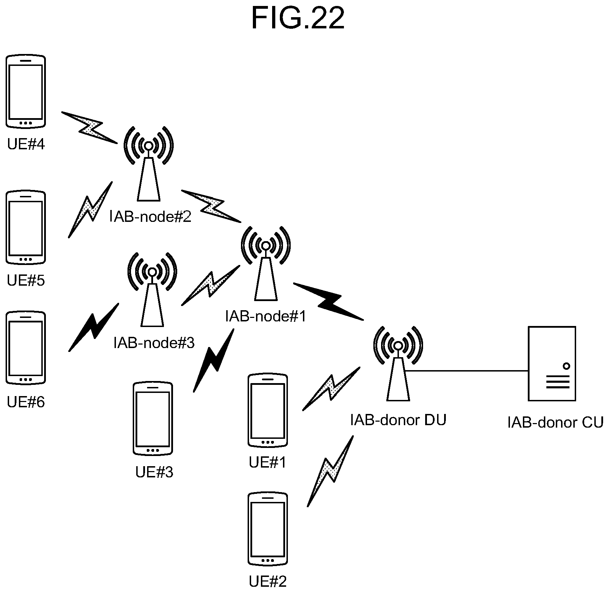

FIG. 22 is a diagram illustrating another example of the multicast transmission from the IAB base station. In FIG. 22, gray lightning bolt lines each indicate communication using the PTM leg, and black lightning bolt lines each indicate communication using the PTP leg.

In FIG. 22, multicast communication using the PTM legs is performed from the IAB-donor DU to UE #1 and UE #2. From the IAB-donor DU to IAB-node #1, multicast communication using the PTP leg is performed.

In FIG. 22, multicast communication using the PTM legs is performed from IAB-node #1 to IAB-node #2 and IAB-node #3. From IAB-node #1 to UE #3, multicast communication using the PTP leg is performed.

In FIG. 22, multicast communication using the PTM legs is performed from IAB-node #2 to UE #4 and UE #5. From IAB-node #3 to UE #6, multicast communication using the PTP leg is performed.

Although FIG. 22 illustrates the example in which multicast communication using the PTM legs is performed from the IAB-donor DU to UE #1 and UE #2, multicast communication using the PTM leg may be performed from the IAB-donor DU to IAB-node #1. In that case, multicast communication using the PTP legs is performed from the IAB-donor DU to UE #1 and UE #2.

Although FIG. 22 illustrates the example in which multicast communication using the PTM legs is performed from IAB-node #1 to IAB-node #2 and IAB-node #3, multicast communication using the PTM leg may be performed from IAB-node #1 to UE #3. In that case, multicast communication using the PTP legs is performed from IAB-node #1 to IAB-node #2 and IAB-node #3.

In the second embodiment, the IAB-donor DU and/or the IAB-node allocates an identifier used for transmission using the PTM leg only to either the UE or the child IAB-node. The identifier may be, for example, the G-RNTI and/or the SC-RNTI, or another identifier. The IAB-node allocates an identifier used for transmission using the PTP leg to the UE and/or the child IAB-node. The identifier may be, for example, the C-RNTI, or another identifier. The IAB-node may notify the IAB-donor CU of the above-described identifiers, for example, the G-RNTI, the SC-RNTI, and/or the C-RNTI. The notification may be performed by using F1 signaling, for example, signaling of UL RRC MESSAGE TRANSFER.

The IAB-donor CU performs a multicast configuration on the UE and/or the above-described child IAB-node. The configuration may include information about the above-described identifiers, for example, the G-RNTI, the SC-RNTI, and/or the C-RNTI. The configuration may be performed via the above-described IAB-node. The IAB-donor CU may notify the IAB-node of the configuration for the UE and/or the above-described child IAB-node. The notification may be performed by using F1 signaling, for example, signaling of DL RRC MESSAGE TRANSFER. The IAB-node may perform a multicast configuration on the UE and/or the child IAB-node. The configuration may be performed by using RRC signaling, for example, signaling of RRCReconfiguration. The UE and/or the child IAB-node may start a reception operation for multicast by using the signaling.

The second embodiment makes it possible to prevent discrepancy in the protocol stacks in multicast data transmission from the IAB-node to the child IAB-node and the UE, and as a result, multicast transmission can be performed even in a case where both the child IAB-node and the UE are connected to the IAB-donor DU and/or the IAB-node.

### First Modification of Second Embodiment.

Multicast transmission using the PTM legs may be performed to both the UE and the IAB-node. A plurality of PTM legs may be provided from one IAB-donor DU. A plurality of PTM legs may be provided from one IAB-node. In the above description, some PTM legs may be used for transmission to the UE, and other PTM legs may be used for transmission to the IAB-node.

The RLC, MAC, and/or PHY configuration in the PTM leg for the UE and that for the IAB-node may be the same. Consequently, for example, it is possible to avoid complexity in the communication system.

As another example, the above configuration for the UE and that for the IAB-node may be different. Consequently, for example, it is possible to improve flexibility of the communication system.

The resources used in the PTM leg, for example, time resources, frequency resources, and/or spatial resources (e.g., beams) for the UE and those for the IAB-node may be the same. Consequently, for example, it is possible to improve the efficiency of the communication system.

As another example, the above resources for the UE and those for the IAB-node may be different. Consequently, for example, it is possible to avoid complexity in the communication system.

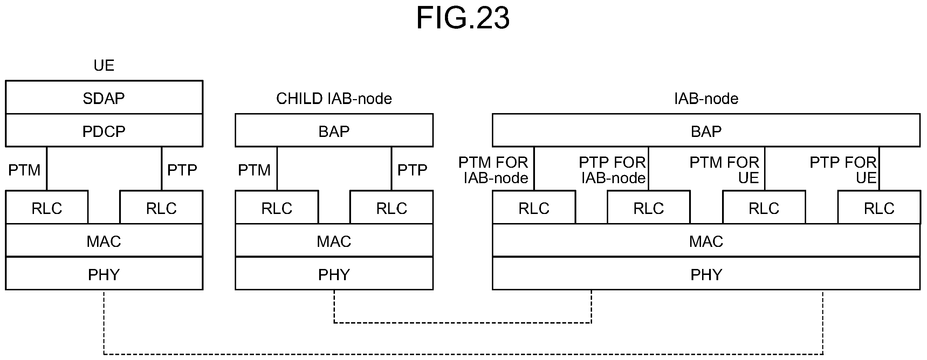

FIG. 23 is a diagram illustrating an example in which a plurality of PTM legs are provided in an IAB-node. In the example illustrated in FIG. 23, the IAB-node is provided with each of a PTM leg for the child IAB-node and a PTM leg for the UE. In the example illustrated in FIG. 23, PTM and PTP legs are configured in multicast transmission from the IAB-node to the child IAB-node and the UE.

In multicast transmission using each of the PTM leg for the child IAB-node and the PTM leg for the UE, different identifiers, for example, G-RNTIs, may be used. The IAB-node may allocate different identifiers to the child IAB-node and the UE. Consequently, for example, the UE and/or the child IAB-node can receive multicast directed to the UE and/or the child IAB-node, respectively.

A predetermined offset may be provided between both identifiers. For example, the G-RNTI for the IAB-node may be a value obtained by adding a predetermined value to the G-RNTI for the UE. The offset may be broadcast or a notification thereof may be performed individually.

As another example, a range that can be taken by the identifier for the UE and a range that can be taken by the identifier for the child IAB-node may be provided separately from each other. The ranges may be determined, for example, in a standard. Consequently, for example, it is possible to avoid complexity in allocation of the identifiers.

Each of a control resource set (CORESET) used for reception of multicast transmitted by the UE using the PTM leg (see Non Patent Literature 14 (TS 38.213)) and a CORESET used for reception of multicast transmitted by the child IAB-node using the PTM leg may be provided. Both the above CORESETs may be provided as system information, or a notification thereof may be performed from the IAB-donor CU to the IAB-node individually. Consequently, for example, it is possible to avoid complexity in multicast reception.

According to the first modification, multicast transmission from the IAB-node to both the child IAB-node and the UE using the PTM legs can be performed, and as a result, the efficiency of multicast communication can be improved.

### Third Embodiment.

In 3GPP, it has been studied to support various services using SL communication in both an EPS and a 5G core system (see Non Patent Literatures 1, 16, 20, 21, 22, and 23). In the SL communication, communication is performed between terminals. In addition, in the SL communication, not only direct communication between terminals but also communication between a UE and an NW via a relay has been proposed (see Non Patent Literatures 20 (3GPP TR 23.703), 23 (3GPP TS 23.303), and 27 (3GPP TR 38.836)). The relay between the UE and the NW is sometimes referred to as a UE-to-NW relay or a UE-NW relay. In the present disclosure, a UE that performs relay between the UE and the NW is sometimes referred to as a relay UE.

For example, there may be a case where communication needs to be performed not only between a UE within the coverage of a radio access network (RAN) node (for example, a gNB) and the RAN node, but also between a more distant UE and the RAN node. In such a case, a method using the UE-NW relay is possibly employed. For example, communication between the gNB and the UE (sometimes referred to as a remote UE) is performed via the relay UE. Communication between the gNB and the relay UE is performed by Uu, and communication between the relay UE and the remote UE is performed by the PC5.

In a communication system that supports such communication via a relay, the question is how to improve quality of communication between the terminal and the NW. An example thereof includes how to perform scheduling for communication between the remote UE and the gNB via the relay UE. Communication between the UE and the NW via the relay UE requires scheduling on the Uu and the PC5, unlike direct communication between the UE and the NW. Therefore, it is not possible to perform scheduling in communication between the remote UE and the NW via the relay UE by simply using a conventional scheduling method for direct communication between a UE and an NW or a conventional scheduling method for direct communication between UEs, which is a problem.

In the SL communication between UEs, a transmission-side UE (hereinafter, sometimes referred to as a UE-TX) schedules a reception-side UE (hereinafter, sometimes referred to as a UE-RX) for communication in a direction from the UE-TX to the UE-RX. As a scheduling method for communication in the direction from the UE-TX to the UE-RX, there are a method in which scheduling is performed by a gNB to which the UE-TX is directly connected (sometimes referred to as a mode 1) and a method in which scheduling is performed by the UE-TX itself (sometimes referred to as a mode 2).

In communication between a remote UE and a gNB via a relay UE, the remote UE is connected to the gNB. The connection may be RRC connection. As described above, a scheduling method in communication from the remote UE to the gNB in a case where the remote UE is not directly connected to the gNB but connected to the gNB via the relay UE is not disclosed at all in standards and the like already established so far.

The third embodiment discloses a method for solving such a problem.

As a method for solving the above problem, the present embodiment discloses a method for scheduling communication in a direction from the gNB to the remote UE in communication between the remote UE and the gNB performed via the relay UE. In the scheduling method, the gNB performs DL scheduling and SL scheduling. The DL scheduling and the SL scheduling may be performed individually. The gNB is a gNB to which the remote UE is connected via the relay UE. The gNB may be a gNB to which the relay UE connected to the remote UE is connected. The connection may be RRC connection. In the scheduling method, the gNB transmits DL scheduling information to the relay UE. The relay UE transmits SL scheduling information to the remote UE. The DL scheduling information and the SL scheduling information may be limited to those for the communication between the remote UE and the gNB via the relay UE.

The DL scheduling information is scheduling information about communication from the gNB to the relay UE in the communication between the remote UE and the gNB via the relay UE. The DL scheduling information may be information about scheduling of DL data and/or feedback (FB) for the DL data (sometimes referred to as DL FB). The information about the scheduling of the DL data may be, for example, DL control information. As the information about the scheduling of the DL data, for example, information about a PDSCH for transmitting the DL data and information about scheduling of the DL FB may be included. As the information about the scheduling of the DL FB, for example, information about a timing of transmitting DL FB information and information about a PUCCH may be included. As the information about the PUCCH, for example, information indicating a PUCCH configuration may be included. The DL FB information may be, for example, HARQ FB information or CSI information. As the information about the PDSCH and the PDCCH described above, for example, resource allocation information of the CHs may be included.

In a case where the PUCCH configuration is transmitted by RRC signaling, an identifier may be provided in the PUCCH configuration, and identifier information of the PUCCH configuration may be included as the information about the scheduling of the DL FB described above.

The SL scheduling information is scheduling information about communication from the relay UE to the remote UE in the communication between the remote UE and the gNB via the relay UE. The SL scheduling information may be information about scheduling of SL control information and/or SL data and/or FB for the SL data (sometimes referred to as SL FB). The information about the scheduling of the SL control information may be, for example, information about a PSCCH for transmitting the SL control information. The information about the scheduling of the SL control information may be, for example, information about a PSSCH for transmitting the SL control information. The information about the scheduling of the SL data may be, for example, information about a PSSCH for transmitting the SL data. The information about the scheduling of the SL FB may include, for example, information about a PSFCH for transmitting the FB on the SL, information about a timing of transmitting the FB, information about a PUCCH for transmitting the FB on the UL, and information about a timing of the transmission. The information about the PSFCH may include, for example, information indicating a PSFCH configuration. The SL FB information may be, for example, information on HARQ FB in the SL or information on CSI in the SL. The information about the PSCCH, the PSSCH, the PSFCH and the PUCCH described above may include, for example, resource allocation information of the CHs.

In a case where a notification of the PSFCH configuration is performed by RRC signaling, an identifier may be provided in the PSFCH configuration, and identifier information of the PSFCH configuration may be included as the information about the scheduling of the SL FB described above. In a case where a notification of the PUCCH configuration is performed by RRC signaling, an identifier may be provided in the PUCCH configuration, and identifier information of the PUCCH configuration may be included as the information about the scheduling of the SL FB described above.

The DL scheduling information may include information indicating that it is for communication from the gNB to the remote UE via the relay UE. The DL scheduling information may include information about the remote UE as a target of relay communication. The information may be, for example, an identifier of the remote UE. The DL scheduling information may include information about the relay UE that performs relaying. The information may be, for example, an identifier of the relay UE. The SL scheduling information may include information indicating that it is for communication from the gNB to the remote UE via the relay UE. The SL scheduling information may include information about the remote UE as a target of the relay communication. The information may be, for example, an identifier of the remote UE. The SL scheduling information may include information about the relay UE that performs relaying. The information may be, for example, an identifier of the relay UE.

The SL scheduling information may be transmitted from the relay UE to the remote UE. The SL scheduling information may include information indicating that it is for communication from the gNB to the remote UE via the relay UE. The SL scheduling information may include information about the remote UE as a target of the relay communication. The information may be, for example, an identifier of the remote UE. The SL scheduling information may include information about the relay UE that performs relaying. The information may be, for example, an identifier of the relay UE.

The DL scheduling information and the SL scheduling information may include information for associating the DL scheduling information and the SL scheduling information with each other.

A method for transmitting the DL scheduling information will be disclosed. The gNB notifies the relay UE of the DL scheduling information by L1/L2 signaling. The gNB may include the information in downlink control information (DCI) and perform transmission thereof on the PDCCH. Thus, the gNB can transmit the information to the relay UE at an early stage. In addition, since the method for transmitting the information can be adapted to a conventional DL scheduling method, it is possible to avoid complication of processes performed by the gNB and the relay UE.

Another transmission method will be disclosed. The gNB transmits the DL scheduling information to the relay UE by MAC signaling. The information may be included in a MAC control element (CE) to be transmitted. Thus, the gNB can transmit the information to the relay UE at an early stage with a low error rate.

Another transmission method will be disclosed. The gNB notifies the relay UE of the DL scheduling information by RRC signaling. The information may be included in an RRC message to be transmitted. Thus, the gNB can perform transmission of a large amount of information with a low error rate, and transmission of the information, to the relay UE.

A method for transmitting the SL scheduling information will be disclosed. The gNB transmits the SL scheduling information to the relay UE by L1/L2 signaling. The gNB may include the information in the DCI and perform transmission thereof on the PDCCH. Thus, the gNB can transmit the information to the relay UE at an early stage. In addition, since the method for transmitting the information can be adapted to a conventional DL scheduling method, it is possible to avoid complication of processes performed by the gNB and the relay UE.

Another transmission method will be disclosed. The gNB transmits the SL scheduling information to the relay UE by MAC signaling. The gNB may include the information in a MAC CE and perform transmission thereof. Thus, the gNB can transmit the information to the relay UE at an early stage with a low error rate.

Another transmission method will be disclosed. The gNB transmits the SL scheduling information to the relay UE by RRC signaling. The gNB may include the information in an RRC message and perform transmission thereof. Thus, the gNB can perform transmission of a large amount of information with a low error rate, and transmission of the information, to the relay UE.

An RNTI for relay communication may be provided. For example, the RNTI is a relay-RNTI. A PDCCH including DL scheduling information and/or SL scheduling information for relay communication, a PDCCH for scheduling MAC signaling including the information, or a PDCCH for scheduling RRC signaling including the information is enabled to be specified by the relay-RNTI. For example, these PDCCHs are preferably masked with the relay-RNTI. Thus, the relay UE can recognize at an early stage that it is the DL scheduling information and/or the SL scheduling information for relay communication.

As another method, the PDCCH including DL scheduling information and/or SL scheduling information for relay communication, the PDCCH for scheduling MAC signaling including the information, or the PDCCH for scheduling RRC signaling including the information is enabled to be specified by an RNTI for identifying the remote UE, for example, the C-RNTI. For example, these PDCCHs are preferably masked with the C-RNTI of the remote UE. Thus, the relay UE can recognize at an early stage that it is the DL scheduling information and/or the SL scheduling information for relay communication to the remote UE.

A method for transmitting the SL scheduling information from the relay UE to the remote UE will be disclosed. The relay UE transmits the SL scheduling information to the remote UE by L1/L2 signaling in the SL. The information may be included in sidelink control information (SCI) to be transmitted on the PSCCH and/or the PSSCH. Thus, the relay UE can transmit the information to the remote UE at an early stage. In addition, since the method for transmitting the information can be adapted to a conventional SL scheduling method, it is possible to avoid complication of processes performed by the relay UE and the remote UE.

Another transmission method will be disclosed. The relay UE transmits the SL scheduling information to the remote UE by MAC signaling in the SL. The relay UE may include the information in a MAC CE in the SL and perform transmission thereof. Thus, the relay UE can transmit the information to the remote UE at an early stage with a low error rate.

Another transmission method will be disclosed. The relay UE notifies the remote UE of the SL scheduling information by RRC signaling in the SL. The relay UE may include the information in an RRC message in the SL and perform transmission thereof. Thus, the relay UE can perform transmission of a large amount of information with a low error rate, and transmission of the information, to the remote UE.

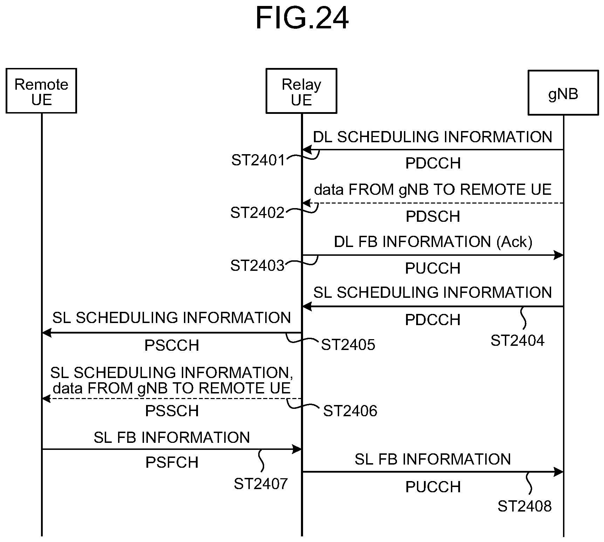

FIG. 24 is a sequence diagram illustrating an example of a method for scheduling communication from the gNB to the remote UE via the relay UE in the third embodiment. In the example in FIG. 24, the gNB individually notifies the relay UE of the DL scheduling information and the SL scheduling information. In the example in FIG. 24, the gNB in which communication data directed to the remote UE is generated performs DL scheduling in order to transmit the communication data. In step ST2401, the gNB transmits the DL scheduling information to the relay UE. In the example in FIG. 24, a notification of the information is performed on the PDCCH. In step ST2402, the gNB uses the information to transmit the communication data directed to the remote UE by using the PDSCH. The relay UE that has received the DL scheduling information from the gNB in step ST2401 receives the communication data from the gNB in step ST2402 by using the information.

In step ST2403, the relay UE transmits the DL FB information to the gNB in accordance with the DL scheduling information received in step ST2401. In the example in FIG. 24, the information is transmitted on the PUCCH. In the example in FIG. 24, Ack of HARQ feedback is used as the DL FB information. The gNB that has received the Ack transmits the SL scheduling information to the relay UE in step ST2404. In the example in FIG. 24, the information is transmitted on the PDCCH.

In a case where the DL FB information is Nack, the gNB preferably performs the processes from step ST2401 onward again. Thus, the gNB can perform, on the relay UE, a retransmission process of the communication data directed to the remote UE.

In step ST2405, the relay UE that has received the SL scheduling information transmits, to the remote UE, the SL scheduling information for transmitting the communication data directed to the remote UE received from the gNB in step ST2402. In addition, in step ST2406, the relay UE transmits, to the remote UE, the communication data directed to the remote UE received in step ST2402 by using the information. The SL scheduling information may be transmitted together with the communication data. The information may be used by the remote UE to receive the communication data. Thus, the remote UE can receive the communication data from the gNB via the relay UE.

In step ST2407, the remote UE transmits the SL FB information to the relay UE. In the example in FIG. 24, the information is transmitted by using the PSFCH. The scheduling information of the SL FB information is preferably included in the SL scheduling information. The remote UE that has received the SL scheduling information in step ST2405 and/or step ST2406 preferably transmits the SL FB information to the relay UE by using the information. In the example in FIG. 24, the SL FB information is Ack information of HARQ feedback. The relay UE that has received the Ack information transmits the SL FB information to the gNB in step ST2408. In the example in FIG. 24, the information is transmitted by using the PUCCH. The scheduling information of the SL FB information is preferably included in the SL scheduling information. The relay UE that has received the SL scheduling information in step ST2404 preferably transmits the SL FB information to the gNB by using the information. Thus, the gNB can acquire the SL FB information from the remote UE.

In a case where the SL FB information received in step ST2408 is Nack, the gNB preferably performs the processes from step ST2404 onward again. The relay UE can perform, on the remote UE, a retransmission process of the communication data from the relay UE to the remote UE.

One or a plurality of pieces of the SL scheduling information may be associated with one or a plurality of pieces of the DL scheduling information. For example, the communication data from the gNB to the remote UE is scheduled by a notification of one piece of the DL scheduling information in the DL, and is scheduled by a notification of a plurality of pieces of the SL scheduling information in the SL. The method is effective in a case where sufficient radio resources can be secured by one scheduling in the DL, but sufficient radio resources cannot be secured by one scheduling in the SL.

Thus, it is possible to schedule communication in the direction from the gNB to the remote UE in the communication between the remote UE and the gNB via the relay UE. Therefore, the communication from the gNB to the remote UE via the relay UE can be performed. In addition, since it is possible to perform scheduling in consideration of the SL FB and the DL FB, communication quality can be improved.

Another method of scheduling in the direction from the gNB to the remote UE in the communication between the remote UE and the gNB via the relay UE will be disclosed. Differences from the method disclosed above are mainly disclosed.

In the another method, the gNB performs the DL scheduling and the SL scheduling together. The gNB transmits the DL scheduling information and the SL scheduling information to the relay UE. The relay UE that has received the DL scheduling information and the SL scheduling information from the gNB transmits the SL scheduling information to the remote UE. The DL scheduling information and the SL scheduling information may be limited to those for the communication between the remote UE and the gNB via the relay UE.

It is preferable to appropriately apply, as the DL scheduling information and the SL scheduling information in the another method, the DL scheduling information and the SL scheduling information disclosed above.

An offset between a DL data transmission timing and an SL scheduling information transmission timing and/or an SL data transmission timing may be provided. A DL data reception timing may be used instead of the DL data transmission timing. The DL scheduling information or the SL scheduling information in the another method may include information about the offset. By receiving the information, the relay UE can recognize the transmission timing of the SL scheduling information and/or the SL data after receiving DL data. Thus, the amount of SL scheduling information can be reduced.

A method for transmitting the DL scheduling information and the SL scheduling information in the another method will be disclosed. The gNB transmits the DL scheduling information and the SL scheduling information to the relay UE by L1/L2 signaling. The information may be included in one piece of the DCI to be transmitted on the PDCCH. Relay DCI may be provided. The information may be included in the relay DCI to be transmitted on the PDCCH. By transmitting the DL scheduling information and the SL scheduling information together as described above, the amount of signaling can be reduced. In addition, the gNB can transmit the information to the relay UE at an early stage. In addition, since the method for transmitting the information can be adapted to a conventional DL scheduling method, it is possible to avoid complication of processes performed by the gNB and the relay UE.

Another transmission method will be disclosed. The gNB transmits the DL scheduling information and the SL scheduling information to the relay UE by MAC signaling. The gNB may include the information in one MAC CE and perform transmission thereof. A relay MAC CE may be provided. The gNB may include the information in the relay MAC CE and perform transmission thereof. Thus, the amount of signaling can be reduced. In addition, the gNB can transmit the information to the relay UE at an early stage with a low error rate.

Another transmission method will be disclosed. The gNB transmits the DL scheduling information and the SL scheduling information to the relay UE by RRC signaling. The gNB may include the information in one RRC message and perform transmission thereof. A relay RRC message may be provided. The gNB may include the information in the relay RRC message and perform transmission thereof. Thus, the gNB can perform transmission of a large amount of information with a low error rate, and transmission of the information, to the relay UE.

The relay UE that has received the DL scheduling information and the SL scheduling information from the gNB transmits the received SL scheduling information to the remote UE. As the transmission method, it is preferable to appropriately apply the method disclosed above. An effect similar to that of the method disclosed above can be obtained.

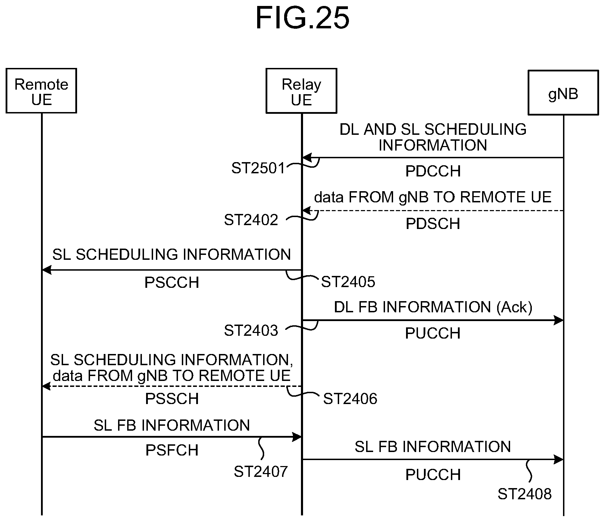

FIG. 25 is a sequence diagram illustrating another example of the method for scheduling the communication from the gNB to the remote UE via the relay UE in the third embodiment. In FIG. 25, steps common to those in FIG. 24 are given the same step numbers as those therein, and a common description will be omitted. In the example in FIG. 25, the gNB transmits, to the relay UE, the DL scheduling information and the SL scheduling information together. In the example in FIG. 25, the gNB in which communication data which is downlink data directed to the remote UE is generated performs the DL scheduling and the SL scheduling in order to transmit the communication data. For example, in the SL scheduling, a period required for retransmission of DL data and the maximum number of retransmissions may be considered. In step ST2501, the gNB in which the communication data directed to the remote UE is generated transmits the DL scheduling information and the SL scheduling information to the relay UE. In the example in FIG. 25, a notification of the information is performed on one PDCCH. The information may be included in one piece of the DCI to perform a notification thereof on the PDCCH. Thus, the amount of signaling can be reduced.

In addition, since the gNB transmits the SL scheduling information to the relay UE together with the DL scheduling information, the relay UE can transmit the SL scheduling information to the remote UE immediately after receiving the communication data from the gNB to the remote UE, and can transmit the communication data to the remote UE. That is, a low latency characteristic can be improved in the communication from the gNB to the remote UE via the relay UE.

Similarly to the method disclosed above, one or a plurality of pieces of the SL scheduling information may be associated with one or a plurality of pieces of the DL scheduling information. An effect similar to that in a case where the method disclosed above is applied can be obtained.

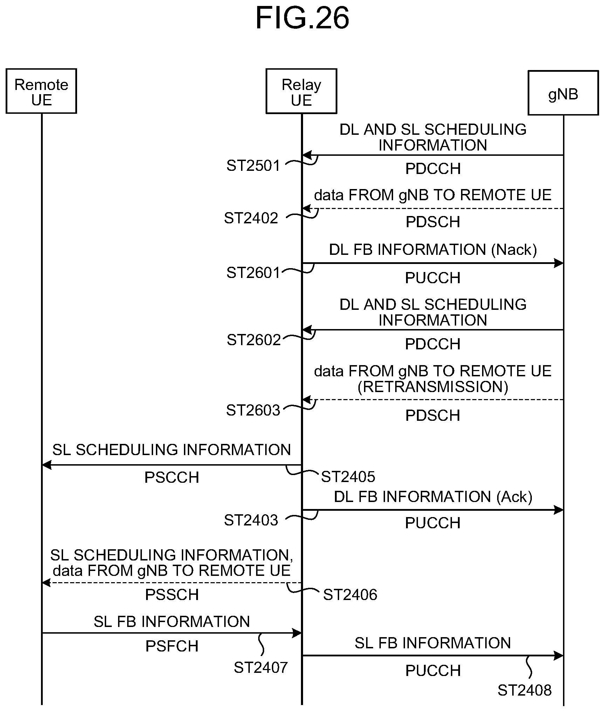

FIG. 26 is a sequence diagram illustrating another example of the method for scheduling the communication from the gNB to the remote UE via the relay UE in the third embodiment. In FIG. 26, steps common to those in FIG. 25 are given the same step numbers as those therein, and a common description will be omitted. The example in FIG. 26 discloses a case where the relay UE has failed in the reception of DL data from the gNB to the relay UE.

In step ST2601, the relay UE transmits Nack as the DL FB information to the gNB. In step ST2602, the gNB that has received the Nack as the DL FB information from the relay UE performs the DL scheduling and the SL scheduling again and transmits the DL scheduling information and the SL scheduling information to the relay UE. The DL scheduling information and/or the SL scheduling information may include information indicating that it is retransmission. Thus, the relay UE can recognize that it is retransmission data. In step ST2603, the gNB retransmits the communication data directed to the remote UE. The relay UE that has normally received the communication data directed to the remote UE preferably performs the processes of steps ST2405 to ST2408 disclosed in FIG. 24.

In a case where the remote UE has failed in the reception of the communication data transmitted by the relay UE in step ST2406, the remote UE transmits Nack as the SL FB information to the relay UE in step ST2407. In step ST2408, the relay UE transmits Nack as the SL FB information to the gNB. The gNB that has received the Nack as the SL FB information from the relay UE may perform step ST2501 on the relay UE to transmit the SL scheduling information. The DL scheduling information need not be included in the transmission. The SL scheduling information may include information indicating that it is retransmission of the communication data in the SL. The relay UE that has received the SL scheduling information in step ST2501 executes steps ST2405 and ST2406 again to retransmit the communication data. In a case where the remote UE receives the retransmitted communication data, the remote UE transmits, to the gNB via the relay UE, Ack as the SL FB information in steps ST2407 and ST2408. Thus, it is possible to perform a retransmission process in a case where the relay UE has failed in the transmission/reception of the communication data to and from the remote UE.

In a case where the gNB has received the Nack as the SL FB information from the relay UE in step ST2408, the gNB may execute step ST2404 illustrated in FIG. 24 on the relay UE to transmit the SL scheduling information. Processes of steps ST2404 to ST2408 may be performed in order to retransmit the communication data. Thus, it is possible to perform a retransmission process in a case where the relay UE has failed in the transmission of the communication data to the remote UE.

As described above, by performing a notification of the DL scheduling information and the SL scheduling information together, the amount of signaling can be reduced. In addition, since the relay UE is notified of the SL scheduling information together with the DL scheduling information, immediately after receiving the DL data from the gNB, the relay UE can transmit, as SL data, the DL data received from the gNB to the remote UE by using the SL scheduling information. Furthermore, the communication from the gNB to the remote UE via the relay UE can be performed at an early stage, and thus latency can be lowered. Moreover, since the DCI for relay is provided and thus the DL scheduling information and the SL scheduling information can be configured by one piece of the DCI, it is possible to reduce the occurrence of malfunction in the communication from the gNB to the remote UE via the relay UE.

Another method of scheduling in the direction from the gNB to the remote UE in the communication between the remote UE and the gNB via the relay UE will be disclosed. Differences from the method disclosed above are mainly disclosed.

The relay UE transmits the SL FB and the DL FB together to the gNB. The SL FB and the DL FB may be limited to those for the communication between the remote UE and the gNB via the relay UE.

As the DL scheduling information and/or the SL scheduling information, information about scheduling for transmitting the SL FB and the DL FB together may be included. Information obtained by combining the SL FB and the DL FB may be used as a relay FB. Uplink control information (UCI) of the relay FB may be provided. Information about scheduling of the relay FB may be included. As the information about the scheduling of the relay FB, for example, information about the PUCCH for transmitting the FB on the UL and information about a timing of transmitting the FB may be included. As the information about the PUCCH, for example, resource allocation information of the CH may be included.

A notification of the PUCCH configuration for transmitting the FB on the UL may be performed by RRC signaling. In that case, an identifier may be provided in the PUCCH configuration, and the identifier of the PUCCH configuration may be included as the information about the scheduling of the FB described above.

Besides the information about the scheduling of the SL FB and the DL FB, it is preferable to appropriately apply the DL scheduling information and the SL scheduling information disclosed above.

As a method for transmitting the DL scheduling information and the SL scheduling information from the gNB to the relay UE, it is preferable to appropriately apply the method disclosed above. An effect similar to that of the method disclosed above can be obtained.

The relay UE that has received the DL scheduling information and the SL scheduling information from the gNB transmits the SL scheduling information to the remote UE. As the transmission method, it is preferable to appropriately apply the method disclosed above. An effect similar to that of the method disclosed above can be obtained.

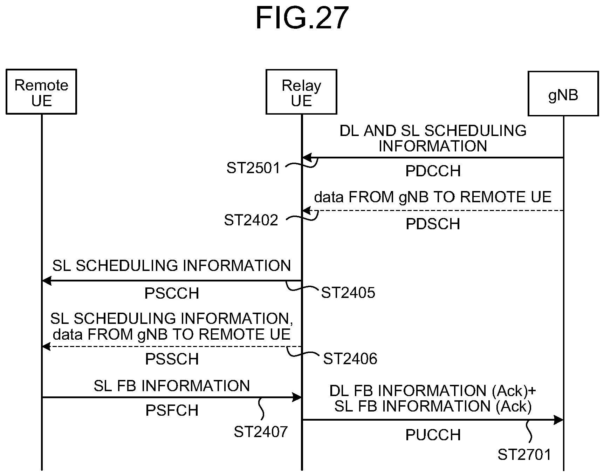

FIG. 27 is a sequence diagram illustrating another example of the method for scheduling the communication from the gNB to the remote UE via the relay UE in the third embodiment. In FIG. 27, steps common to those in FIG. 25 are given the same step numbers as those therein, and a common description will be omitted. In the example in FIG. 27, the relay UE transmits the SL FB information and the DL FB information together to the gNB. That is, in step ST2701, the relay UE transmits the SL FB information received from the remote UE in step ST2407 and the DL FB information together to the gNB. In the example in FIG. 27, the information is transmitted on one PUCCH. The DL FB information and the SL FB information may be included in one piece of the UCI. The UCI may be transmitted on one PUCCH. Thus, the amount of signaling can be reduced.

One or a plurality of pieces of scheduling information for SL FB transmission may be associated with one or a plurality of pieces of scheduling information for DL FB transmission. A configuration may be performed depending on a relationship between one or a plurality of pieces of the DL scheduling information and one or a plurality of pieces of the SL scheduling information disclosed above. It is possible to perform scheduling depending on an association relationship between the DL scheduling information and one or a plurality of pieces of the SL scheduling information also in the DL FB and the SL FB.

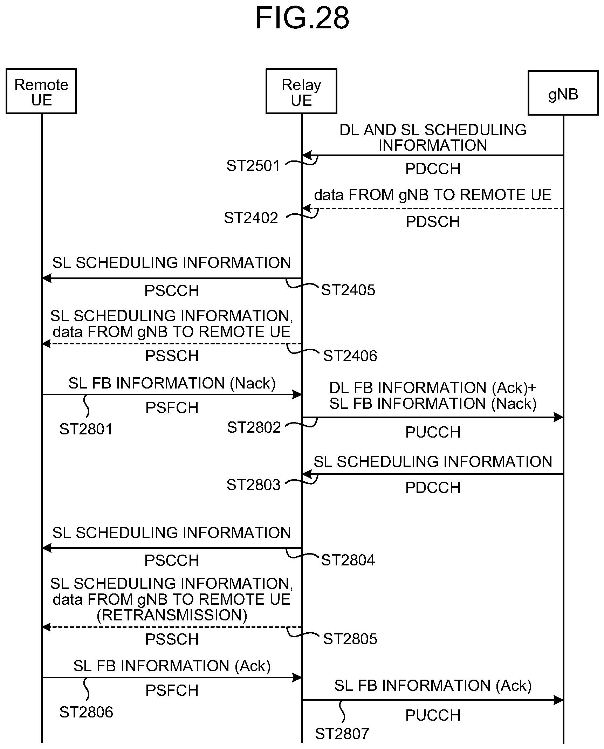

FIG. 28 is a sequence diagram illustrating another example of the method for scheduling the communication from the gNB to the remote UE via the relay UE in the third embodiment. In FIG. 28, steps common to those in FIG. 27 are given the same step numbers as those therein, and a common description will be omitted. The example in FIG. 28 discloses a case where the remote UE has failed in the reception of SL data from the relay UE to the remote UE.

In step ST2801, the remote UE transmits Nack as the SL FB information to the relay UE. The relay UE that has received the Nack as the SL FB information from the remote UE transmits the DL FB information (here, Ack) and the SL FB information (here, Nack) together by using one PUCCH in step ST2802. The gNB that has received the DL FB information and the SL FB information can recognize that the communication data directed to the remote UE has not been transmitted on the SL. In step ST2803, the gNB performs the SL scheduling again and transmits the SL scheduling information to the relay UE. The SL scheduling information may include information indicating that it is retransmission. In that case, the relay UE can recognize that it is scheduling for retransmission data. In steps ST2804 and ST2805, the relay UE performs a retransmission process of the communication data to the remote UE. The remote UE that has received the communication data directed to the remote UE transmits Ack as the SL FB information to the relay UE in step ST2806. In step ST2807, the relay UE transmits Ack as the SL FB information to the gNB. By receiving the Ack as the SL FB information from the relay UE, the gNB can recognize that the communication data directed to the remote UE has been transmitted to the remote UE.

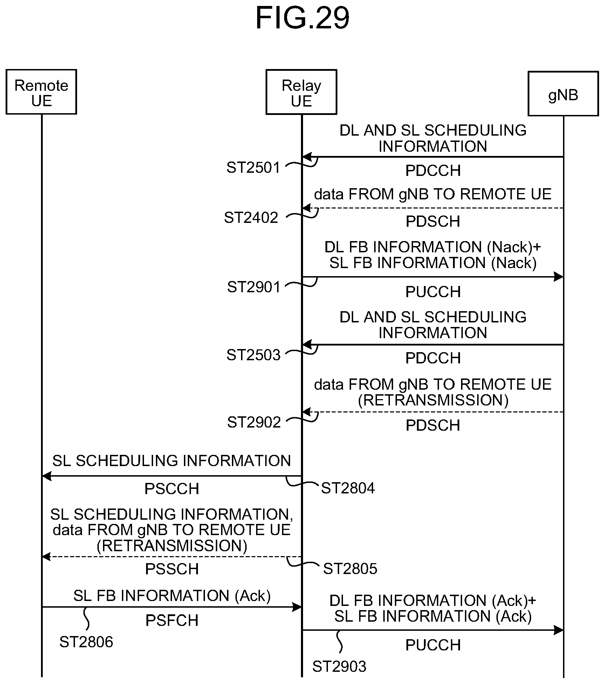

FIG. 29 is a sequence diagram illustrating another example of the method for scheduling the communication from the gNB to the remote UE via the relay UE in the third embodiment. In FIG. 29, steps common to those in FIG. 28 are given the same step numbers as those therein, and a common description will be omitted. The example in FIG. 29 discloses the case where the relay UE has failed in the reception of DL data from the gNB to the relay UE.

In step ST2901, the relay UE transmits Nack as the DL FB information to the gNB. Nack as the SL FB information may be transmitted together. The relay UE that has failed in the reception of the communication data from the gNB to the remote UE cannot transmit the communication data to the remote UE. Therefore, the relay UE cannot receive the SL FB information from the remote UE. In the example in FIG. 29, the DL FB information and the SL FB information are transmitted on one PUCCH.

The gNB that has received the Nack as the DL FB information in step ST2901 performs the DL scheduling and the SL scheduling again, and transmits the DL scheduling information and the SL scheduling information to the relay UE in step ST2503. In step ST2902, the communication data directed to the remote UE is retransmitted from the gNB to the relay UE. In steps ST2804 and ST2805, the relay UE that has received the communication data performs a retransmission process of the communication data to the remote UE. The communication data is transmitted to the remote UE by the retransmission process, and the relay UE that has received the Ack as the SL FB information in step ST2806 transmits, to the gNB, Ack as the DL FB information and Ack as the SL FB information together in step ST2903. In the example in FIG. 29, the DL FB information and the SL FB information are transmitted on one PUCCH. Thus, the gNB can recognize that the communication data directed to the remote UE has been transmitted to the remote UE.

The gNB that has received the Nack as the DL FB information in step ST2901 preferably adds 1 to a DL retransmission count. It is possible to perform retransmission up to the maximum number of DL retransmissions. The gNB that has received the Nack as the SL FB information in step ST2901 may add 1 to an SL retransmission count. It is possible to perform retransmission up to the maximum number of SL retransmissions. In that case, SL retransmission can be performed up to the maximum number of SL retransmissions including the number of DL retransmissions. As another method, the gNB that has received the Nack as the DL FB information in step ST2901 need not add 1 to the SL retransmission count. It is possible to perform retransmission up to the maximum number of SL retransmissions. In that case, SL retransmission can be performed up to the maximum number of SL retransmissions without including the number of DL retransmissions. This is effective in a case where it is desired to improve the probability of successful transmission/reception in the SL.

The maximum number of DL retransmissions and the maximum number of SL retransmissions may be individually configured. The DL and the SL can be flexibly configured. The maximum number of DL retransmissions and the maximum number of SL retransmissions may be the same. One maximum number of retransmissions may be used. The retransmission process can be facilitated. The maximum number of DL retransmissions and the maximum number of SL retransmissions may be statically determined in a standard or the like. Alternatively, the gNB may perform configurations thereof. The RRC of the gNB may perform the configurations thereof. In a case where the gNB has a CU/DU split configuration, the CU of the gNB may perform the configurations thereof and notify the DU of the configurations.

As described above, the relay UE transmits the SL FB information and the DL FB information together to the gNB, and thereby the amount of signaling can be reduced. In addition, since the necessity for the relay UE to separately send the SL FB information and the DL FB information to the gNB is eliminated, transmission power of the relay UE can be reduced. Furthermore, since the UCI for FB in the communication from the gNB to the remote UE via the relay UE is provided and thus the DL FB and the SL FB can be configured by one piece of the UCI, it is possible to reduce the occurrence of malfunction in the communication from the gNB to the remote UE via the relay UE.

### First Modification of Third Embodiment.

The third embodiment has disclosed the method for scheduling the communication in the direction from the gNB to the remote UE in the communication performed by the remote UE and the gNB via the relay UE. A first modification of the third embodiment will disclose a method for scheduling communication in a direction from the remote UE to the gNB in the communication between the remote UE and the gNB via the relay UE.

In the first modification, the gNB performs UL scheduling and SL scheduling. The gNB may perform the UL scheduling and the SL scheduling individually. The gNB is a gNB to which the remote UE is connected via the relay UE. The gNB may be a gNB to which a relay UE connected to the remote UE is connected. The connection may be RRC connection. As described above, the gNB performs the UL scheduling and the SL scheduling, and thereby it is possible to facilitate adjustment of SL and UL transmission timings.

Another scheduling method will be disclosed. The remote UE may perform the SL scheduling. When the remote UE performs the SL scheduling, it is possible to perform scheduling in consideration of a radio wave propagation state and a load state in the SL. The remote UE may perform the SL scheduling and the gNB may perform the UL scheduling. The gNB may be a gNB to which a relay UE connected to the remote UE is connected. The connection may be RRC connection.

The remote UE that performs the SL scheduling may be limited. The remote UE may perform the SL scheduling, for example, in a case where the remote UE is connected to the gNB via the relay UE. The connection may be RRC connection. As another method, for example, the remote UE may perform the SL scheduling in a case where the remote UE is out of coverage (OOC) of the gNB to which the remote UE is connected via the relay UE. As another method, for example, the remote UE may perform the SL scheduling in a case where the remote UE is out of coverage of any gNB. By putting such limitations, it is possible to avoid an increase in the amount of processing and processing time due to the remote UE performing scheduling for the gNB to communicate with the remote UE via the relay UE. In addition, the low latency characteristic can be improved in the communication between the remote UE and the gNB via the relay UE.

Which of the gNB and the remote UE performs the SL scheduling may be enabled to be configured. The gNB may perform the configuration. The gNB may configure, for the remote UE, a node that performs the SL scheduling. A case where the gNB performs the SL scheduling may be the mode 1, a case where the remote UE performs the SL scheduling may be the mode 2, and a mode may be configured in which the gNB performs the SL scheduling on the remote UE. Thus, it is possible to configure a node that performs the SL scheduling depending on, for example, the radio wave propagation state and the load state. For example, in a case where a large fluctuation occurs in the radio wave propagation state or the load state in the SL, the remote UE is employed as the node that performs the SL scheduling, and in a case where no large fluctuation occurs therein, the gNB is employed as the node that performs the SL scheduling. Thus, scheduling suitable for the radio wave propagation state and the load state in the SL can be performed, and a communication speed and communication quality can be improved.

A notification method in a case where the gNB notifies the remote UE of the node that performs the SL scheduling will be disclosed. The gNB notifies the remote UE of information about a node that performs the SL scheduling (hereinafter, sometimes referred to as an SL scheduling node). The information about the SL scheduling node may be information indicating the gNB or the remote UE, or may be information indicating the mode. The gNB may transmit the information about the SL scheduling node to the remote UE by RRC signaling. The gNB may include the information in an RRC message and perform transmission thereof. The gNB may include the information in an RRC reconfiguration message and perform transmission thereof. By receiving the information about the SL scheduling node transmitted from the gNB, the remote UE can recognize the node that performs the SL scheduling. Thus, it is possible to flexibly configure the node that performs the SL scheduling.

Another method will be disclosed. The information about the SL scheduling node may be transmitted from the gNB to the relay UE by RRC signaling, and the relay UE that has received the information by the signaling may transmit the information to the remote UE by RRC signaling in the SL. Thus, the remote UE can receive the information about the SL scheduling node transmitted from the gNB. Therefore, it is possible to flexibly configure the node that performs the SL scheduling.

Another method will be disclosed. The gNB may transmit the information about the SL scheduling node to the remote UE by MAC signaling. The gNB may include the information in a MAC CE and perform transmission thereof. The information may be transmitted from the gNB to the relay UE by the MAC signaling, and the relay UE that has received the information by the signaling may transmit the information to the remote UE by MAC signaling in the SL. Thus, the remote UE can receive the information about the SL scheduling node transmitted from the gNB, and therefore it is possible to flexibly configure the node that performs the SL scheduling. In addition, notification can be performed at an early stage with a low error rate by using MAC signaling.

Another method will be disclosed. The gNB may transmit the information about the SL scheduling node to the remote UE by L1/L2 signaling. The information may be transmitted from the gNB to the relay UE by L1/L2 signaling, and the relay UE that has received the information by the signaling may transmit the information to the remote UE by L1/L2 signaling in the SL. For example, the information may be included in the DCI and transmitted from the gNB to the relay UE on the PDCCH, and the relay UE that has received the information in the DCI may include the information in the SCI and perform transmission thereof to the remote UE on the PSSCH. Thus, the remote UE can receive the information about the SL scheduling node transmitted from the gNB, and therefore it is possible to flexibly configure the node that performs the SL scheduling. In addition, notification can be performed at an earlier stage by using L1/L2 signaling.

The remote UE may request the gNB to configure the SL scheduling node. The remote UE may request the gNB to change the SL scheduling node. Information about the configuration or the change of the SL scheduling node is preferably provided and transmitted from the remote UE to the gNB. The information about the configuration or the change of the SL scheduling node may be information indicating the gNB or the remote UE, or may be information indicating the mode.

The remote UE may transmit, to the gNB, the information about the configuration or the change of the SL scheduling node by RRC signaling. The remote UE may include the information in an RRC message and perform transmission thereof. By receiving the information transmitted from the remote UE, the gNB may configure or change the node that performs the SL scheduling. For example, since the remote UE can transmit the information depending on the radio wave propagation state and the load state in the SL, the gNB can flexibly configure or change the node that performs the SL scheduling depending on the radio wave propagation state and the load state in the SL.

Another method will be disclosed. The information about the configuration or the change of the SL scheduling node may be transmitted from the remote UE to the relay UE by RRC signaling in the SL, and the relay UE that has received the information by the signaling may transmit the information to the gNB by RRC signaling. Thus, the gNB can receive the information transmitted from the remote UE. Therefore, it is possible to flexibly configure or change the node that performs the SL scheduling.

Another method will be disclosed. The remote UE may transmit, to the gNB, the information about the configuration or the change of the SL scheduling node by MAC signaling. The remote UE may include the information in a MAC CE and perform transmission thereof. The information may be transmitted from the remote UE to the relay UE by MAC signaling in the SL, and the relay UE that has received the information by the signaling may transmit the information to the gNB by MAC signaling. Thus, the gNB can receive the information transmitted from the remote UE, and therefore the gNB can flexibly configure the node that performs the SL scheduling. In addition, notification can be performed at an early stage with a low error rate by using MAC signaling.

Another method will be disclosed. The remote UE may transmit, to the gNB, the information about the configuration or the change of the SL scheduling node by L1/L2 signaling. The information may be transmitted from the remote UE to the relay UE by L1/L2 signaling in the SL, and the relay UE that has received the information by the signaling may transmit the information to the gNB by L1/L2 signaling. For example, the information may be included in the SCI and transmitted from the remote UE to the relay UE on the PSCCH, and the relay UE that has received the information in the SCI may include the information in the DCI and perform transmission thereof to the gNB on the PDCCH. Thus, the gNB can receive the information transmitted from the remote UE, and therefore the gNB can flexibly configure or change the node that performs the SL scheduling. In addition, notification can be performed at an earlier stage by using L1/L2 signaling.

A method in which the gNB performs the SL scheduling and the UL scheduling will be disclosed. The gNB transmits the SL scheduling information to the remote UE. The gNB transmits the UL scheduling information to the relay UE. The remote UE transmits the SL scheduling information to the relay UE. The SL scheduling information and the UL scheduling information may be limited to those for the communication between the remote UE and the gNB via the relay UE.

The SL scheduling information is scheduling information about communication from the remote UE to the relay UE in the communication between the remote UE and the gNB via the relay UE. The SL scheduling information may be information about scheduling of SL control information and/or SL data and/or FB for the SL data. The information about the scheduling of the SL control information may be, for example, information about a PSCCH for transmitting the SL control information. The information about the scheduling of the SL control information may be, for example, information about a PSSCH for transmitting the SL control information. The information about the scheduling of the SL data may be, for example, information about a PSSCH for transmitting the SL data. The information about the scheduling of the SL FB may be, for example, information about the scheduling of the SL FB transmitted from the relay UE to the remote UE on the SL. The information about the scheduling of the SL FB may be, for example, information about the PSFCH for transmitting SL FB, or information about a timing of transmitting the SL FB. The information about the scheduling of the SL FB may be, for example, information about RRC signaling for transmitting SL FB from the remote UE to the gNB, or information about a timing of transmitting the FB. The information about the PSFCH may include, for example, information indicating a PSFCH configuration. The SL FB information may be, for example, information on HARQ FB in the SL or information on CSI in the SL. The information about the PSCCH, the PSSCH, and the PSFCH described above may include, for example, resource allocation information of the CHs.

In a case where a notification of the PSFCH configuration is performed by RRC signaling, an identifier may be provided in the PFSCH configuration, and identifier information of the PSFCH configuration may be included in the information about the scheduling of the SL FB described above.

The UL scheduling information is scheduling information about communication from the relay UE to the gNB in the communication between the remote UE and the gNB via the relay UE. The UL scheduling information may be information about the scheduling of UL data. The information about the scheduling of the UL data may be, for example, DL control information. The information about the scheduling of the UL data may include, for example, information about a PUSCH for transmitting the UL data. The information about the PUSCH described above may include, for example, resource allocation information of the CH.

The SL scheduling information may include information indicating that it is for communication from the remote UE to the gNB via the relay UE. The SL scheduling information may include information about the remote UE as a target of the relay communication. The information may be, for example, an identifier of the remote UE. The SL scheduling information may include information about the relay UE that performs relaying. The information may be, for example, an identifier of the relay UE. The UL scheduling information may include information indicating that it is for communication from the remote UE to the gNB via the relay UE. The UL scheduling information may include information about the remote UE as a target of relay communication. The information may be, for example, an identifier of the remote UE. The UL scheduling information may include information about the relay UE that performs relaying. The information may be, for example, an identifier of the relay UE.

The SL scheduling information may be transmitted from the remote UE to the relay UE. The SL scheduling information may include information indicating that it is for communication from the remote UE to the gNB via the relay UE.

The SL scheduling information and the UL scheduling information may include information for associating the SL scheduling information and the UL scheduling information with each other.

A method for transmitting the SL scheduling information will be disclosed. The gNB transmits the SL scheduling information to the remote UE by RRC signaling. The gNB may include the information in an RRC message and perform transmission thereof. Thus, the gNB can transmit the information to the remote UE.

Another transmission method will be disclosed. The gNB transmits the SL scheduling information to the remote UE by MAC signaling. The gNB may include the information in a MAC CE and perform transmission thereof. Thus, the gNB can transmit the information to the remote UE at an early stage with a low error rate.

A method for transmitting the UL scheduling information will be disclosed. The gNB notifies the relay UE of the UL scheduling information by L1/L2 signaling. The gNB may include the information in the DCI and perform transmission thereof on the PDCCH. Thus, the gNB can transmit the information to the relay UE at an early stage. In addition, since the method for transmitting the information can be adapted to a conventional UL scheduling method, it is possible to avoid complication of processes performed by the gNB and the relay UE.

Another transmission method will be disclosed. The gNB transmits the UL scheduling information to the relay UE by MAC signaling. The gNB may include the information in a MAC CE and perform transmission thereof. Thus, the gNB can transmit the information to the relay UE at an early stage with a low error rate.

Another transmission method will be disclosed. The gNB notifies the relay UE of the UL scheduling information by RRC signaling. The gNB may include the information in an RRC message and perform transmission thereof. Thus, the gNB can perform transmission of a large amount of information with a low error rate, and transmission of the information, to the relay UE.

A method for transmitting the SL scheduling information from the relay UE to the remote UE will be disclosed. The relay UE transmits the SL scheduling information to the remote UE by L1/L2 signaling in the SL. The relay UE may include the information in the SCI and perform transmission thereof on the PSCCH and/or the PSSCH. Thus, the relay UE can transmit the information to the remote UE at an early stage. In addition, since the method for transmitting the information can be adapted to a conventional SL scheduling method, it is possible to avoid complication of processes performed by the relay UE and the remote UE.

Another transmission method will be disclosed. The relay UE transmits the SL scheduling information to the remote UE by MAC signaling in the SL. The relay UE may include the information in a MAC CE in the SL and perform transmission thereof. Thus, the relay UE can transmit the information to the remote UE at an early stage with a low error rate.

Another transmission method will be disclosed. The relay UE notifies the remote UE of the SL scheduling information by RRC signaling in the SL. The relay UE may include the information in an RRC message in the SL and perform transmission thereof. Thus, the relay UE can perform transmission of a large amount of information with a low error rate, and transmission of the information, to the remote UE.

A method for transmitting the SL scheduling information from the remote UE to the relay UE will be disclosed. The remote UE transmits the SL scheduling information to the relay UE by L1/L2 signaling in the SL. The remote UE may include the information in the SCI and perform transmission thereof on the PSCCH and/or the PSSCH. Thus, the remote UE can transmit the information to the relay UE at an early stage. In addition, since the method for transmitting the information can be adapted to a conventional SL scheduling method, it is possible to avoid complication of processes performed by the remote UE and the relay UE.

Another transmission method will be disclosed. The remote UE transmits the SL scheduling information to the relay UE by MAC signaling in the SL. The remote UE may include the information in a MAC CE in the SL and perform transmission thereof. Thus, the remote UE can transmit the information to the relay UE at an early stage with a low error rate. Another transmission method will be disclosed. The remote UE notifies the relay UE of the SL scheduling information by RRC signaling in the SL. The remote UE may include the information in an RRC message in the SL and perform transmission thereof. Thus, the remote UE can perform transmission of a large amount of information with a low error rate, and transmission of the information, to the relay UE.

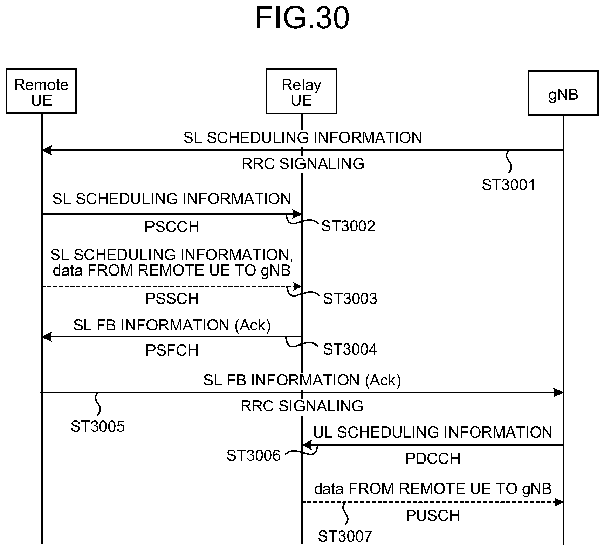

FIG. 30 is a sequence diagram illustrating an example of a method for scheduling communication from the remote UE to the gNB via the relay UE in the first modification of the third embodiment. In the example in FIG. 30, the gNB performs the SL scheduling from the remote UE to the relay UE in the communication from the remote UE to the gNB via the relay UE. In step ST3001, the gNB transmits the SL scheduling information to the remote UE. In the example in FIG. 30, the information is transmitted by using RRC signaling. In step ST3002, the remote UE that has received the SL scheduling information transmits, to the relay UE, the SL scheduling information for transmitting uplink data which is communication data directed to the gNB. In addition, in step ST3003, the remote UE transmits, to the relay UE, the communication data directed to the gNB by using the information. The SL scheduling information may be transmitted together with the communication data. The information may be used by the relay UE in order to receive the communication data. Thus, the relay UE can receive the communication data from the remote UE to the gNB.

In step ST3004, the relay UE transmits the SL FB information to the remote UE. In the example in FIG. 30, the PSFCH is used for the transmission. The scheduling information of the SL FB information is preferably included in the SL scheduling information. The relay UE that has received the SL scheduling information in step ST3002 and/or step ST3003 preferably transmits the SL FB information to the remote UE by using the information. In the example in FIG. 30, the SL FB information is Ack information of HARQ feedback. The remote UE that has received the Ack information transmits the SL FB information to the gNB in step ST3005. In the example in FIG. 30, RRC signaling is used for the transmission. Thus, the gNB can recognize that the relay UE has received the communication data from the remote UE to the gNB.

In a case where the SL FB information is Nack, the gNB preferably performs the processes from step ST3001 onward again. Thus, the remote UE can perform, on the relay UE, a retransmission process of the communication data from the remote UE to the relay UE.

In step ST3006, the gNB transmits the UL scheduling information to the relay UE. In the example in FIG. 30, a notification of the information is performed on the PDCCH. In step ST3007, with the use of the information, the relay UE transmits, to the gNB, the communication data directed to the gNB received from the remote UE. In the example in FIG. 30, the relay UE transmits the communication data by using the PUSCH. The gNB that has failed in the reception of the communication data from the relay UE in step ST3007 preferably performs a retransmission process of the communication data on the UL. The gNB and the relay UE preferably perform the processes from step ST3006 onward again.

Thus, the remote UE can transmit the communication data to the gNB via the relay UE. The gNB can receive the communication data from the remote UE.

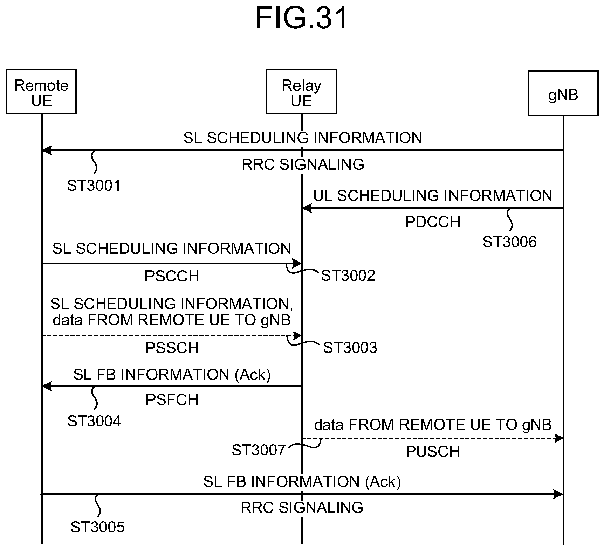

FIG. 31 is a sequence diagram illustrating another example of the method for scheduling the communication from the remote UE to the gNB via the relay UE in the first modification of the third embodiment. In FIG. 31, steps common to those in FIG. 30 are given the same step numbers as those therein, and a common description will be omitted. The example in FIG. 31 discloses a method for transmitting the UL scheduling information from the gNB to the relay UE before reception of the SL FB information from the remote UE. The gNB transmits the SL scheduling information to the remote UE in step ST3001, and then transmits the UL scheduling information to the relay UE in step ST3006.

The relay UE that has received the communication data from the remote UE as a result of execution of steps ST3002 to ST3004 transmits the communication data to the gNB in step ST3007 by using the UL scheduling information received in step ST3006. Thus, the relay UE can transmit the communication data received from the remote UE to the gNB at an early stage.

In step ST3005, the remote UE transmits the SL FB information to the gNB. By transmitting the SL FB information from the remote UE to the gNB, the gNB can recognize whether the communication data has been transmitted from the remote UE to the relay UE on the SL. In a case where the communication data has not been transmitted on the SL, the gNB preferably performs the SL scheduling on the remote UE again and performs the retransmission process. In a case where the communication data has been transmitted on the SL, the gNB is only required to perform the UL scheduling again and to perform the retransmission process on the UL.

One or a plurality of pieces of the UL scheduling information may be associated with one or a plurality of pieces of the SL scheduling information. For example, the communication data from the remote UE to the gNB is scheduled by a notification of a plurality of pieces of the SL scheduling information in the SL, and is scheduled by a notification of one piece of the UL scheduling information in the UL. The method is effective in a case where sufficient radio resources cannot be secured by one scheduling in the SL, but sufficient radio resources can be secured by one scheduling in the UL.

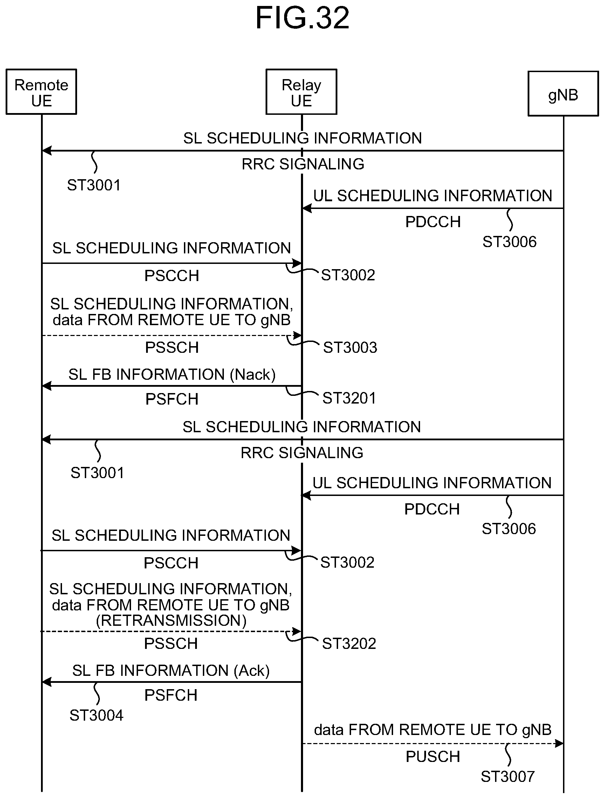

FIG. 32 is a sequence diagram illustrating another example of the method for scheduling the communication from the remote UE to the gNB via the relay UE in the first modification of the third embodiment. In FIG. 32, steps common to those in FIG. 31 are given the same step numbers as those therein, and a common description will be omitted. The example in FIG. 32 discloses a case where the relay UE has failed in the reception of SL data of first transmission from the remote UE to the relay UE, and the remote UE retransmits the SL data.

In step ST3201, the relay UE that has failed in the reception of the communication data from the remote UE transmits Nack as the SL FB information to the remote UE. In a case where the gNB has failed in the reception of the communication data at a transmission timing from the relay UE in accordance with the UL scheduling information transmitted in step ST3006, the gNB preferably performs, on the remote UE, the processes from the SL scheduling process onward again. Thus, the necessity of the transmission of the SL FB information from the remote UE to the gNB can be eliminated. That is, the amount of signaling can be reduced.

Thus, it is possible to schedule communication in the direction from the remote UE to the gNB in the communication between the remote UE and the gNB via the relay UE. Therefore, the communication from the remote UE to the gNB via the relay UE can be performed. In addition, since it is possible to perform scheduling in consideration of the SL FB, communication quality can be improved.

Another method of scheduling in the direction from the remote UE to the gNB in the communication between the remote UE and the gNB via the relay UE will be disclosed. Differences from the method disclosed above are mainly disclosed.

The gNB performs the SL scheduling and the UL scheduling. The SL scheduling and the UL scheduling may be performed individually. The gNB transmits the SL scheduling information to the relay UE. The relay UE transmits SL scheduling information to the remote UE. The gNB transmits the UL scheduling information to the relay UE. The remote UE transmits the SL scheduling information to the relay UE. The SL scheduling information and the UL scheduling information may be limited to those for the communication between the remote UE and the gNB via the relay UE.

It is preferable to appropriately apply, as the SL scheduling information, the SL scheduling information disclosed above. The information about the scheduling of the SL FB among the SL scheduling information may be, for example, information about the scheduling of the SL FB to be transmitted from the relay UE to the remote UE on the SL, or information about the scheduling of the SL FB to be transmitted from the relay UE to the gNB on the UL. The information about the scheduling of the SL FB on the SL may be, for example, information about the PSFCH for transmitting the SL FB on the SL, or information about a timing of transmitting the SL FB. The information about the scheduling of the SL FB on the UL may be information about the PUCCH for transmitting the SL FB on the UL, or information about a timing of transmitting the SL FB. The information about the PUCCH may include, for example, information indicating a PUCCH configuration. The SL FB information may be, for example, information on HARQ FB in the SL or information on CSI in the SL. The information about the PSCCH, the PSSCH, the PSFCH and the PUCCH described above may include, for example, resource allocation information of the CHs.

UCI for transmitting the SL FB on the UL may be provided. The SL FB information may be included. A notification of the PUCCH configuration for transmitting the FB on the UL may be performed by RRC signaling. In that case, an identifier may be provided in the PUCCH configuration, and identifier information of the PUCCH configuration may be included as the information about the scheduling of the FB described above.

It is preferable to appropriately apply, as the UL scheduling information, the UL scheduling information disclosed above.

A method for transmitting the SL scheduling information will be disclosed. The gNB notifies the relay UE of the SL scheduling information by L1/L2 signaling. The gNB may include the information in the DCI and perform transmission thereof on the PDCCH. Thus, the gNB can transmit the information to the relay UE at an early stage. In addition, since the method for transmitting the information can be adapted to conventional DL and UL scheduling methods, it is possible to avoid complication of processes performed by the gNB and the relay UE.

Another transmission method will be disclosed. The gNB transmits the SL scheduling information to the relay UE by MAC signaling. The gNB may include the information in a MAC CE and perform transmission thereof. Thus, the gNB can transmit the information to the relay UE at an early stage with a low error rate.

Another transmission method will be disclosed. The gNB notifies the relay UE of the SL scheduling information by RRC signaling. The gNB may include the information in an RRC message and perform transmission thereof. Thus, the gNB can perform transmission of a large amount of information with a low error rate, and transmission of the information, to the relay UE.

Regarding a method for transmitting the UL scheduling information, it is preferable to appropriately apply the method disclosed above.

Similarly to the method disclosed in the third embodiment, an RNTI for relay communication may be provided. For example, the RNTI is a relay-RNTI. A PDCCH including SL scheduling information and/or UL scheduling information for relay communication, a PDCCH for scheduling MAC signaling including the information, or a PDCCH for scheduling RRC signaling including the information is enabled to be specified by the relay-RNTI. For example, these PDCCHs are preferably masked with the relay-RNTI. Thus, the relay UE can recognize at an early stage that it is the SL scheduling information and/or the UL scheduling information for relay communication.

As another method, the PDCCH including the SL scheduling information and/or the UL scheduling information for relay communication, the PDCCH for scheduling MAC signaling including the information, or the PDCCH for scheduling RRC signaling including the information is enabled to be specified by an RNTI for identifying the remote UE, for example, the C-RNTI. For example, these PDCCHs are preferably masked with the C-RNTI of the remote UE. Thus, the relay UE can recognize at an early stage that it is the SL scheduling information and/or the DL scheduling information for relay communication to the remote UE.

Regarding a method for transmitting the SL scheduling information from the relay UE to the remote UE, it is preferable to appropriately apply the method disclosed above.

Regarding a method for transmitting the SL scheduling information from the remote UE to the relay UE, it is preferable to appropriately apply the method disclosed above.

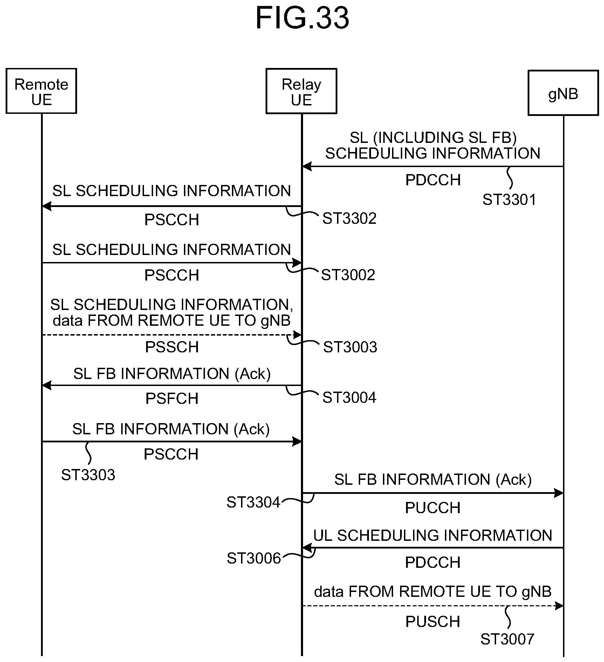

FIG. 33 is a sequence diagram illustrating another example of the method for scheduling the communication from the remote UE to the gNB via the relay UE in the first modification of the third embodiment. In FIG. 33, steps common to those in FIG. 30 are given the same step numbers as those therein, and a common description will be omitted. In the example in FIG. 33, the gNB transmits the SL scheduling information to the relay UE, and the relay UE that has received the information transmits the SL scheduling information to the remote UE.

In the example in FIG. 33, the gNB performs the SL scheduling from the remote UE to the relay UE in the communication from the remote UE to the gNB via the relay UE. In step ST3301, the gNB transmits the SL scheduling information to the relay UE. In step ST3302, the relay UE notifies the remote UE of the SL scheduling information received from the gNB. The remote UE that has received the SL scheduling information from the relay UE preferably performs a transmission process of the communication data directed to the gNB in step ST3002.

The remote UE that has received the SL FB information from the relay UE in step ST3004 transmits the SL FB information to the relay UE in step ST3303. In the example in FIG. 33, the transmission is performed on the PSCCH. The relay UE that has received the SL FB information transmits the SL FB information to the gNB in step ST3304. In the example in FIG. 33, the transmission is performed on the PUCCH. Thus, the gNB can recognize that the relay UE has received the communication data from the remote UE to the gNB. The gNB that has received the SL FB information in step ST3304 preferably performs, on the relay UE, the UL scheduling for transmitting the communication data.

Thus, the remote UE can transmit the communication data to the gNB via the relay UE. The gNB can receive the communication data from the remote UE.

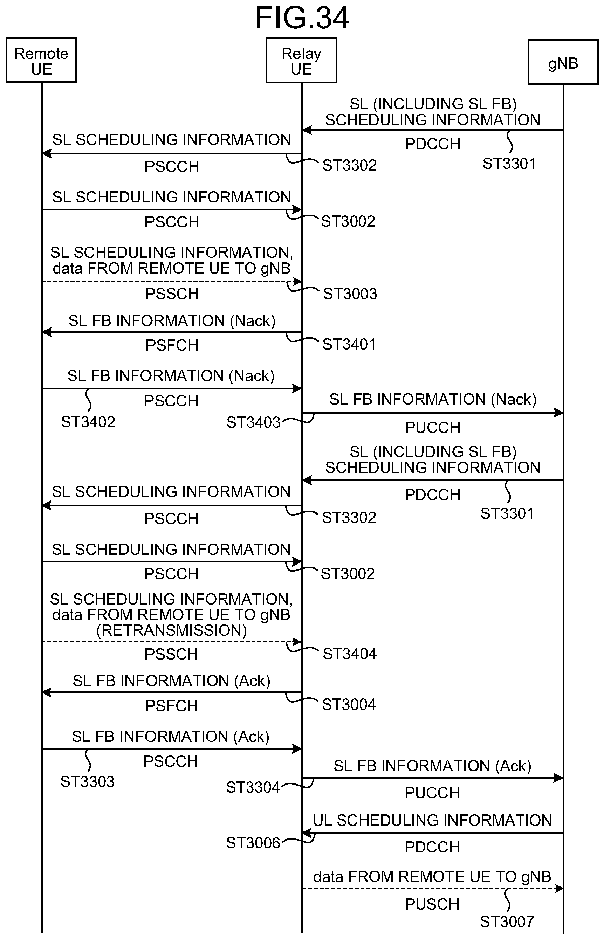

FIG. 34 is a sequence diagram illustrating another example of the method for scheduling the communication from the remote UE to the gNB via the relay UE in the first modification of the third embodiment. In FIG. 34, steps common to those in FIG. 33 are given the same step numbers as those therein, and a common description will be omitted. The example in FIG. 34 discloses a case where the relay UE has failed in the reception of SL data from the remote UE to the relay UE.

FIG. 34 illustrates a case where the relay UE cannot receive the SL data which is the communication data directed to the gNB transmitted from the remote UE in step ST3003. The relay UE that has failed in the reception of the communication data directed to the gNB from the remote UE transmits Nack as the SL FB information to the remote UE in step ST3401. In step ST3402, the remote UE transmits Nack as the SL FB information to the relay UE. The relay UE that has received the Nack from the remote UE transmits Nack as the SL FB information to the gNB in step ST3403. Thus, the gNB can recognize that the relay UE has failed in the reception of the communication data from the remote UE to the gNB.

In step ST3301, the gNB that has received the Nack as the SL FB information from the relay UE preferably performs the SL scheduling again, and transmits the SL scheduling information to the relay UE. Thus, even in a case where the transmission/reception of the communication data on the SL has failed, the retransmission process can be performed.

Thus, it is possible to schedule communication in the direction from the remote UE to the gNB in the communication between the remote UE and the gNB via the relay UE. Therefore, the communication from the remote UE to the gNB via the relay UE can be performed. In addition, since it is possible to perform scheduling in consideration of the SL FB, communication quality can be improved. In addition, by providing the UCI for the SL FB information to be transmitted from the relay UE to the gNB on the UL, it is possible to reduce the occurrence of malfunction in the relay UE. Furthermore, in a case where L1/L2 signaling is used for the SL scheduling from the gNB to the relay UE, it is possible to perform the scheduling at an early stage, and thus, the low latency characteristic can be improved.

Another method of scheduling in the direction from the remote UE to the gNB in the communication between the remote UE and the gNB via the relay UE will be disclosed. Differences from the method disclosed above are mainly disclosed.

In the another method, the gNB performs the SL scheduling and the UL scheduling together. The gNB transmits the SL scheduling information and the UL scheduling information to the relay UE. The relay UE that has received the SL scheduling information and the UL scheduling information from the gNB transmits the SL scheduling information to the remote UE. The remote UE transmits the SL scheduling information to the relay UE. The SL scheduling information and the UL scheduling information may be limited to those for the communication between the remote UE and the gNB via the relay UE.

It is preferable to appropriately apply, as the SL scheduling information and the UL scheduling information in the another method, the SL scheduling information and the UL scheduling information disclosed above.

An offset between an SL scheduling information transmission timing and/or an SL data transmission timing and a UL data transmission timing may be provided. An SL scheduling information reception timing and/or an SL data reception timing may be used instead of the SL scheduling information transmission timing and/or the SL data transmission timing. The SL scheduling information or the UL scheduling information in the another method may include information about the offset. By receiving the information, the relay UE can recognize the UL data transmission timing after receiving the SL data. Thus, the amount of UL scheduling information can be reduced.

A method for transmitting the SL scheduling information and the UL scheduling information in the another method will be disclosed. The gNB transmits the SL scheduling information and the UL scheduling information to the relay UE by L1/L2 signaling. The information may be included in one piece of the DCI to be transmitted on the PDCCH. Relay DCI may be provided. The information may be included in the relay DCI to be transmitted on the PDCCH. By transmitting the SL scheduling information and the UL scheduling information together as described above, the amount of signaling can be reduced. In addition, the gNB can transmit the information to the relay UE at an early stage. In addition, since the method for transmitting the information can be adapted to conventional DL and UL scheduling methods, it is possible to avoid complication of processes performed by the gNB and the relay UE.

Another transmission method will be disclosed. The gNB transmits the SL scheduling information and the UL scheduling information to the relay UE by MAC signaling. The gNB may include the information in one MAC CE and perform transmission thereof. A relay MAC CE may be provided. The gNB may include the information in the relay MAC CE and perform transmission thereof. Thus, the amount of signaling can be reduced. In addition, the gNB can transmit the information to the relay UE at an early stage with a low error rate.

Another transmission method will be disclosed. The gNB transmits the SL scheduling information and the UL scheduling information to the relay UE by RRC signaling. The gNB may include the information in one RRC message and perform transmission thereof. A relay RRC message may be provided. The gNB may include the information in the relay RRC message and perform transmission thereof. Thus, the gNB can perform transmission of a large amount of information with a low error rate, and transmission of the information, to the relay UE.

Regarding a method for transmitting the SL scheduling information from the relay UE to the remote UE, it is preferable to appropriately apply the method disclosed above.

Regarding a method for transmitting the SL scheduling information from the remote UE to the relay UE, it is preferable to appropriately apply the method disclosed above.

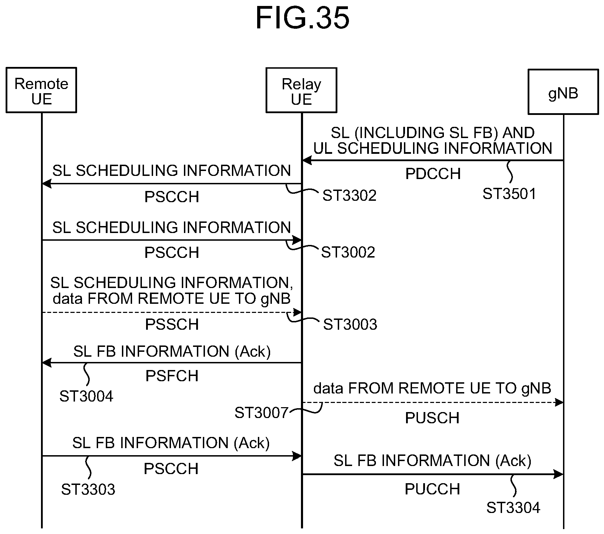

FIG. 35 is a sequence diagram illustrating another example of the method for scheduling the communication from the remote UE to the gNB via the relay UE in the first modification of the third embodiment. In FIG. 35, steps common to those in FIG. 33 are given the same step numbers as those therein, and a common description will be omitted. In the example in FIG. 35, the gNB transmits the SL scheduling information and the UL scheduling information together to the relay UE.

In the example in FIG. 35, the gNB performs the SL scheduling and the UL scheduling. For example, in the UL scheduling, a period required for retransmission of the SL data and the maximum number of retransmissions may be considered. In step ST3501, the gNB transmits the SL scheduling information and the UL scheduling information to the relay UE. In the example in FIG. 35, a notification of the information is performed on one PDCCH. The information may be included in one piece of the DCI to perform a notification thereof on the PDCCH. Thus, the amount of signaling can be reduced.

In addition, in the example in FIG. 35, since the gNB transmits the UL scheduling information to the relay UE together with the SL scheduling information, immediately after receiving the communication data from the remote UE to the gNB, the relay UE can transmit the communication data to the gNB by using the UL scheduling information. That is, the low latency characteristic can be improved in the communication from the remote UE to the gNB via the relay UE.

Similarly to the above disclosure, one or a plurality of pieces of the UL scheduling information may be associated with one or a plurality of pieces of the SL scheduling information. An effect similar to that in a case where the method disclosed above is applied can be obtained.

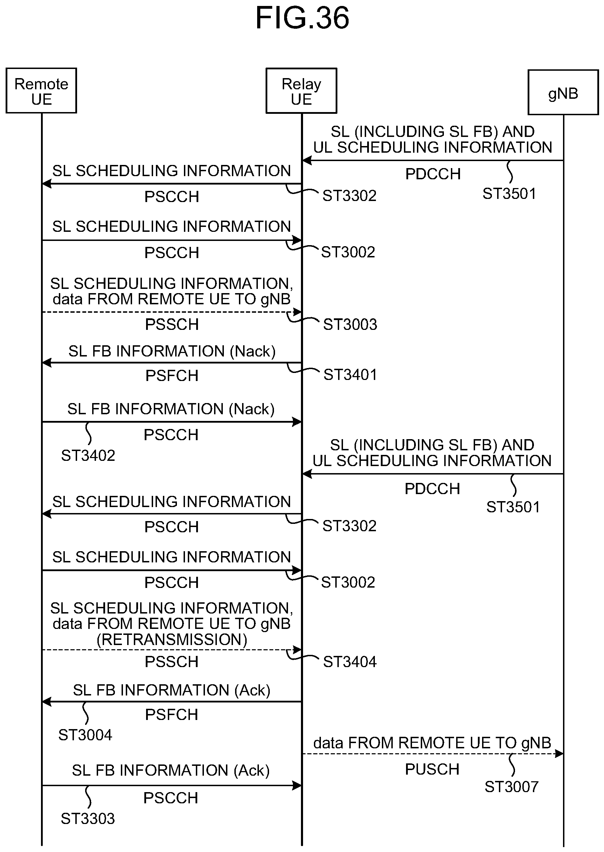

FIG. 36 is a sequence diagram illustrating another example of the method for scheduling the communication from the remote UE to the gNB via the relay UE in the first modification of the third embodiment. In FIG. 36, steps common to those in FIG. 35 are given the same step numbers as those therein, and a common description will be omitted. The example in FIG. 36 discloses the case where the relay UE has failed in the reception of the SL data from the remote UE to the relay UE.

FIG. 36 illustrates a case where the relay UE cannot receive the SL data which is the communication data directed to the gNB transmitted from the remote UE in step ST3003. The relay UE that has failed in the reception of the communication data directed to the gNB transmitted from the remote UE in step ST3003 transmits Nack as the SL FB information to the remote UE in step ST3401. In a case where the gNB has failed in the reception of the communication data at a transmission timing from the relay UE based on the UL scheduling information transmitted in step ST3501, the gNB preferably performs the SL scheduling and the UL scheduling on the remote UE again, and transmits the SL scheduling information and the UL scheduling information to the relay UE. Thus, the necessity of the transmission of the SL FB information from the remote UE to the gNB can be eliminated. That is, the amount of signaling can be reduced.

With the use of the UL scheduling information received in step ST3501, the relay UE may transmit UL data to another gNB instead of the UL data from the remote UE to the gNB. For example, in a case where the relay UE has failed in the reception of the SL data from the remote UE, the relay UE transmits other UL data to the gNB. Thus, it is possible to improve usage efficiency of radio resources for UL data transmission from the remote UE to the gNB.

The remote UE that has received the Nack as the SL FB information in step ST3401 preferably adds 1 to an SL retransmission count. It is possible to perform retransmission up to the maximum number of SL retransmissions. The relay UE that has received the Nack as the SL FB information in step ST3402 may add 1 to a UL retransmission count. It is possible to perform retransmission up to the maximum number of UL retransmissions. In that case, UL retransmission can be performed up to the maximum number of UL retransmissions including the number of SL retransmissions. As another method, the relay UE that has received the Nack as the SL FB information in step ST3402 need not add 1 to the UL retransmission count. It is possible to perform retransmission up to the maximum number of UL retransmissions. In that case, UL retransmission can be performed up to the maximum number of UL retransmissions without including the number of SL retransmissions. This is effective in a case where it is desired to improve the probability of successful transmission/reception in the UL.

The maximum number of SL retransmissions and the maximum number of UL retransmissions may be individually configured. The SL and the UL can be flexibly configured. The maximum number of SL retransmissions and the maximum number of UL retransmissions may be the same. One maximum number of retransmissions may be used. The retransmission process can be facilitated. The maximum number of SL retransmissions and the maximum number of UL retransmissions may be statically determined in a standard or the like. Alternatively, the gNB may perform configurations thereof. The RRC of the gNB may perform the configurations thereof. In a case where the gNB has a CU/DU split configuration, the CU of the gNB may perform the configurations thereof and notify the DU of the configurations. The gNB transmits the configured maximum number of SL retransmissions to the remote UE. The gNB transmits the configured maximum number of UL retransmissions to the relay UE. Each of the remote UE and the relay UE can configure the maximum number of retransmissions by receiving the number of retransmissions from the gNB. Since the number of retransmissions can be limited, usage efficiency of radio resources can be improved.

By performing the SL scheduling and the UL scheduling together as described above, the amount of signaling can be reduced. In addition, since the relay UE is notified of the UL scheduling information together with the SL scheduling information, immediately after receiving the SL data from the remote UE, the relay UE can transmit, as UL data, the SL data received from the remote UE to the gNB by using the UL scheduling information. The communication from the remote UE to the gNB via the relay UE can be performed at an early stage, and thus latency can be lowered. Furthermore, since the DCI for relay is provided and thus the SL scheduling information and the UL scheduling information can be configured by one piece of the DCI, it is possible to reduce the occurrence of malfunction in the communication from the remote UE to the gNB via the relay UE.

Another method of scheduling in the direction from the remote UE to the gNB in the communication between the remote UE and the gNB via the relay UE will be disclosed. Differences from the method disclosed above are mainly disclosed.

In the another method, the relay UE transmits the SL FB and the UL data together to the gNB. The SL FB and the UL data may be limited to those for the communication between the remote UE and the gNB via the relay UE.

In the another method, as the SL scheduling information and/or the UL scheduling information, information about scheduling for transmitting the SL FB information and the UL data together may be included. Information obtained by combining the SL FB information and the UL data may be used as relay UL information. As information about the scheduling of the relay UL information, for example, information about the PUSCH for transmitting the information on the UL and information about a timing of transmitting the information on the UL may be included. As the information about the PUSCH, for example, resource allocation information of the CH may be included.

In a case where the SL FB information is Ack of HARQ feedback, the necessity of the transmission of the SL FB information on the UL may be eliminated. The relay UE may transmit only the UL data to the gNB. By receiving the UL data from the relay UE, the gNB can recognize that the SL data has reached the relay UE.

The gNB need not transmit, to the relay UE, scheduling information for transmitting the SL FB information on the UL among the SL scheduling information. For example, scheduling information of the PUCCH for transmitting the SL FB information on the UL need not be transmitted. In the above method, the relay UE transmits the SL FB information and the UL data together to the gNB. With such a method, the necessity of the scheduling for the SL FB information to be transmitted by the relay UE on the UL can be eliminated.

Besides the scheduling information of the SL FB information and the UL data, it is preferable to appropriately apply the SL scheduling information and the UL scheduling information disclosed above.

As a method for transmitting the SL scheduling information and the UL scheduling information, it is preferable to appropriately apply the method disclosed above. An effect similar to that of the method disclosed above can be obtained.

Regarding a method for transmitting the SL scheduling information from the relay UE to the remote UE, it is preferable to appropriately apply the method disclosed above.

Regarding a method for transmitting the SL scheduling information from the remote UE to the relay UE, it is preferable to appropriately apply the method disclosed above.

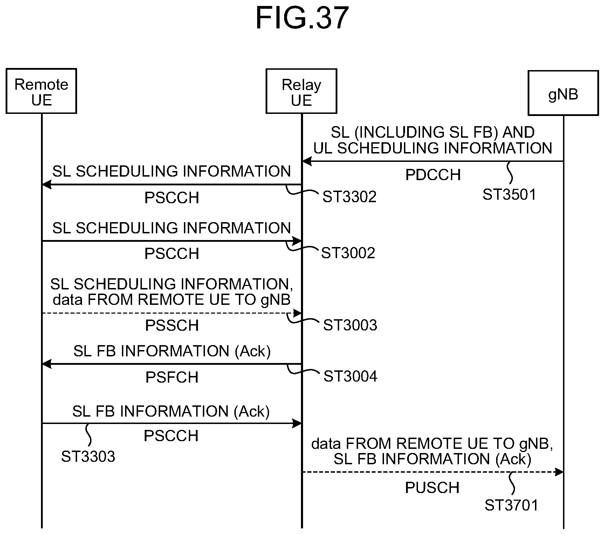

FIG. 37 is a sequence diagram illustrating another example of the method for scheduling the communication from the remote UE to the gNB via the relay UE in the first modification of the third embodiment. In

FIG. 37, steps common to those in FIG. 35 are given the same step numbers as those therein, and a common description will be omitted. In the example in FIG. 37, the relay UE includes the UL data and the SL FB information in one PUSCH and performs transmission thereof to the gNB.

The relay UE that has received the SL FB information from the remote UE in step ST3303 transmits, to the gNB, the SL FB information together with the communication data from the remote UE to the gNB in step ST3701. In the example in FIG. 37, the SL FB information and the communication data are transmitted on one PUSCH in step ST3701. Thus, the gNB can recognize that the relay UE has received the communication data from the remote UE to the gNB, and the gNB can receive the communication data from the remote UE.

Thus, the remote UE can transmit the communication data to the gNB via the relay UE. The gNB can receive the communication data from the remote UE.

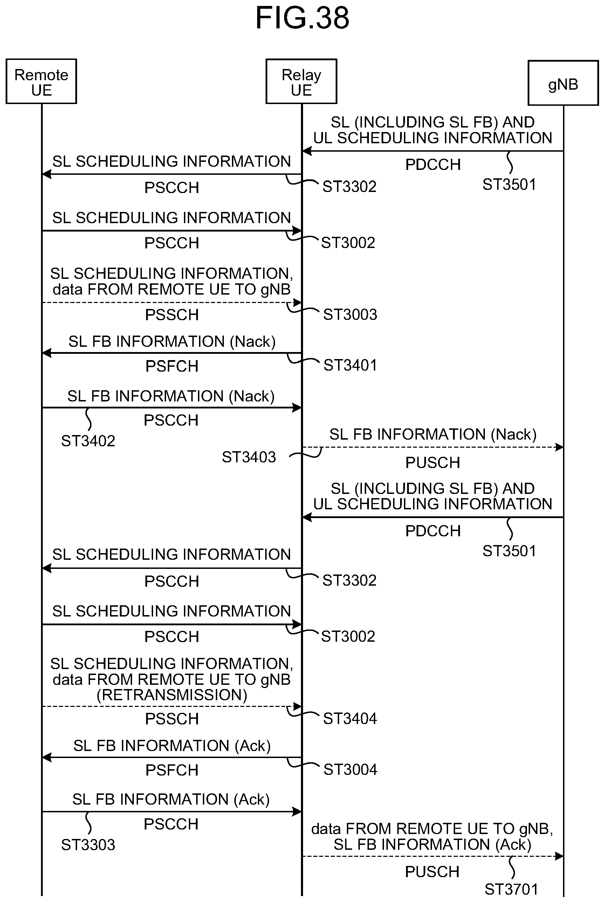

FIG. 38 is a sequence diagram illustrating another example of the method for scheduling the communication from the remote UE to the gNB via the relay UE in the first modification of the third embodiment. In FIG. 38, steps common to those in FIG. 36 or 37 are given the same step numbers as those therein, and a common description will be omitted. The example in FIG. 38 discloses the case where the relay UE has failed in the reception of the SL data from the remote UE to the relay UE.

Similarly to the example in FIG. 36 described above, the example in FIG. 38 illustrates a case where the relay UE cannot receive the SL data which is the communication data directed to the gNB transmitted from the remote UE in step ST3003. The relay UE that has received the Nack as the SL FB information from the remote UE in step ST3402 transmits Nack as the SL FB information to the gNB in step ST3403. In that case, since the relay UE cannot receive the communication data from the remote UE, the relay UE transmits only the SL FB information to the gNB. In the example in FIG. 38, the information is transmitted by using the PUSCH. The gNB that has received the Nack as the SL FB information from the relay UE preferably performs the SL scheduling and the UL scheduling again on the relay UE, and transmits the SL scheduling information and the UL scheduling information to the relay UE in step ST3501. Thereafter, the relay UE that has received, as the SL data, the communication data from the remote UE to the gNB in step ST3404 transmits, to the gNB, the SL FB information together with the communication data from the remote UE to the gNB in step ST3701. Thus, even in a case where the transmission/reception of the communication data on the SL has failed, the retransmission process can be performed.

As described above, the SL FB information and the UL data are transmitted together, and thereby the amount of signaling can be reduced. In addition, since the necessity for the relay UE to separately send the SL FB information and the DL data to the gNB is eliminated, transmission power of the relay UE can be reduced. Furthermore, since the necessity for the relay UE to separately send the SL FB information and the DL data to the gNB is eliminated, it is possible to reduce the occurrence of malfunction in the relay UE.

The CHs used to transmit the SL FB information on the UL may be different depending on the types of the SL FB information. In that case, the gNB preferably transmits, to the relay UE, the scheduling information of the UL data and scheduling information for transmitting the SL FB information on the UL. For example, the gNB may transmit, to the relay UE, scheduling information of the PUSCH for transmitting the UL data and scheduling information of the PUCCH for transmitting the SL FB information on the UL.

For example, in a case where the SL FB information is Ack of HARQ feedback, the SL FB information may be transmitted on the UL on the PUSCH, and in a case where the SL FB information is Nack, the SL FB information may be transmitted on the UL on the PUCCH. In the case of Ack, UL data and SL FB information may be transmitted on the UL on one PUSCH. For example, in a case where the SL FB information is the CSI information, the SL FB information may be transmitted on the UL on the PUSCH. The UL data and the SL FB information may be transmitted on the UL on one PUSCH.

Thus, for example, the gNB can determine the type of the SL FB information on the basis that which CH is received from the relay UE. In addition, for example, in the case where the SL FB information is Nack, the UL data is not generated on the UL. Therefore, when transmission is performed on the UL using the PUCCH in the case where the SL FB information is Nack, the transmission can be performed with a small amount of radio resources. Furthermore, for example, when transmission is performed on the UL using the PUSCH in the case where the SL FB information is the CSI information, a large amount of CSI information can be transmitted. Thus, usage efficiency of radio resources can be improved.

Another method of scheduling in the direction from the remote UE to the gNB in the communication between the remote UE and the gNB via the relay UE will be disclosed. Differences from the method disclosed above are mainly disclosed.

In the method disclosed above, the SL FB information is transmitted from the remote UE to the relay UE. Consequently, the remote UE can transmit the SL FB information to the gNB. As another method, the remote UE need not transmit the SL FB information to the relay UE. In the another method, the relay UE notifies the gNB of the SL FB information. The relay UE recognizes the SL FB information in SL communication from the remote UE to the relay UE. Alternatively, the relay UE itself generates the SL FB information. Therefore, the relay UE can notify the gNB of the SL FB information without receiving the SL FB information from the remote UE.

In the another method, the gNB does not transmit, to the relay UE, information about the scheduling of the SL FB as the SL scheduling information. The relay UE does not transmit, to the remote UE, the information about the scheduling of the SL FB as the SL scheduling information. Thus, the SL scheduling information can be reduced.

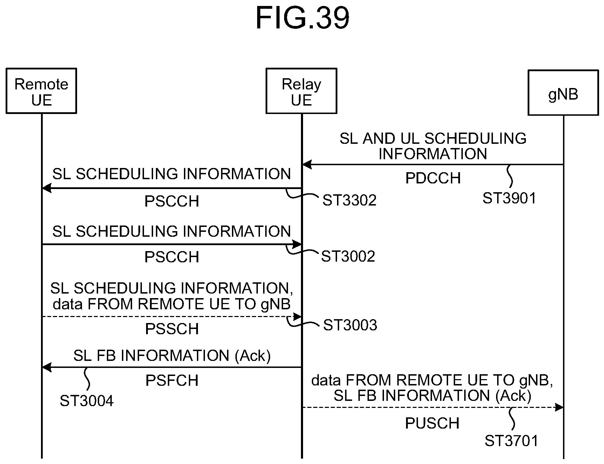

FIG. 39 is a sequence diagram illustrating another example of the method for scheduling the communication from the remote UE to the gNB via the relay UE in the first modification of the third embodiment. In FIG. 39, steps common to those in FIG. 37 are given the same step numbers as those therein, and a common description will be omitted. In the example in FIG. 39, the remote UE does not transmit the SL FB information to the relay UE. That is, the remote UE does not execute step ST3303 in the example in FIG. 37 described above. The relay UE transmits the SL FB information to the gNB.

The remote UE that has received the SL FB information from the relay UE in step ST3004 does not transmit the SL FB information to the relay UE. In step ST3003, the relay UE can determine whether the communication data from the remote UE to the gNB has been received. In step ST3701, the relay UE preferably transmits the SL FB information to the gNB without receiving the SL FB information from the remote UE. In such a method, in step ST3901, the gNB need not transmit, as the SL scheduling information, the information about the scheduling of the SL FB information from the remote UE to the relay UE. Thus, the amount of signaling and the amount of information to be transmitted can be reduced.

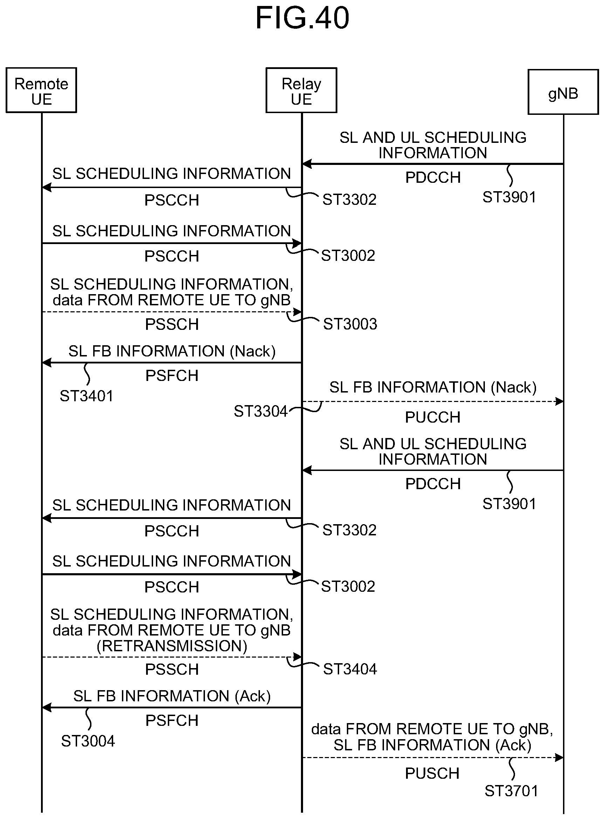

FIG. 40 is a sequence diagram illustrating another example of the method for scheduling the communication from the remote UE to the gNB via the relay UE in the first modification of the third embodiment. In FIG. 40, steps common to those in FIG. 38 or 39 are given the same step numbers as those therein, and a common description will be omitted. The example in FIG. 40 discloses the case where the relay UE has failed in the reception of the SL data from the remote UE to the relay UE. In addition, a case is disclosed where the CHs for transmitting the SL FB information on the UL are different depending on the types of the SL FB information.

In the example in FIG. 40, in a case where the SL FB information is Ack of HARQ feedback, the PUSCH is used for transmission of the SL FB information from the relay UE to the gNB, and in a case where the SL FB information is Nack, the PUCCH is used. In step ST3901, the gNB transmits the SL scheduling information and the UL scheduling information to the relay UE. At that time, it is preferable to include, in the information about the scheduling of the SL FB out of the SL scheduling information, information about the CHs for transmitting the SL FB information, i.e., information about the PUSCH and the PUCCH in FIG. 40, and SL FB scheduling information. In addition, information associating the types of the SL FB information with the CHs for transmitting the FB information may be included in the scheduling information. Thus, on the UL, transmission can be performed on the PUSCH in the case of Ack, and on the PUCCH in the case of Nack.

The relay UE that has failed in the reception of the communication data transmitted by the remote UE in step ST3003 transmits Nack as the SL FB information to the gNB on the PUCCH in step ST3304. At that time, the communication data from the remote UE to the gNB is not included. The gNB that has received the Nack as the SL FB information from the relay UE transmits, to the relay UE, the SL scheduling information and the UL scheduling information for retransmission in step ST3901. Consequently, a retransmission process of the communication data from the remote UE to the gNB is performed. The relay UE that has received the retransmitted communication data from the remote UE in step ST3404 transmits, to the gNB, Ack as the SL FB information together with the communication data from the remote UE to the gNB on the PUSCH in step ST3701. The gNB can receive the communication data from the remote UE together with the SL FB information. Thus, the relay UE can transmit the SL FB information to the gNB by using the CHs depending on the types of the SL FB information.

In addition, in the example in FIG. 40, the notifications of the SL FB information from the remote UE to the relay UE are omitted. That is, in the example in FIG. 40, steps ST3402 and ST3303 included in the example in FIG. 38 and the like are omitted.

As described above, by omitting the transmission of the SL FB information from the remote UE to the relay UE, the amount of signaling can be reduced. In addition, since the relay UE transmits the SL FB information to the gNB, it is possible to notify the gNB of the SL FB information at an early stage. That is, the low latency characteristic can be improved in the communication from the remote UE to the gNB via the relay UE.

### Second Modification of Third Embodiment.

Another method of SL scheduling between the remote UE and the relay UE in the communication between the remote UE and the gNB via the relay UE will be disclosed. Differences from the method disclosed above are mainly disclosed.

A method of SL scheduling between the relay UE and the remote UE in the communication from the gNB to the remote UE via the relay UE will be disclosed. In the second modification, the gNB performs the SL scheduling on the relay UE in advance of generation of communication data directed to the remote UE. In a communication system according to the second modification, once the SL scheduling is configured, the configuration of the SL scheduling is continued until the SL scheduling is changed or released. For example, regarding the resource allocation of the CH for transmitting the SL scheduling information, a configuration of the resource allocation is continued until the resource allocation is changed or released.

In a case where the SL scheduling is changed, the configuration of the SL scheduling is continued until the SL scheduling is changed again or released. In a case where the SL scheduling is released, the configuration of the SL scheduling is released. The change may be a part or all of the SL scheduling information.

The SL scheduling may be performed by RRC signaling. The SL scheduling may be performed by using an RRC reconfiguration message. The gNB transmits the SL scheduling information to the relay UE in advance of generation of the communication data directed to the remote UE. When communication data from the gNB to the remote UE via the relay UE is generated, in other words, in a case of receiving the communication data from the gNB, the relay UE that has received the SL scheduling information from the gNB transmits the communication data to the remote UE by using the SL scheduling information received in advance.

It is preferable to appropriately apply, as the SL scheduling information, the SL scheduling information disclosed in the third embodiment. In the SL scheduling information, a transmission timing of SL control information and/or SL data and/or SL FB may be periodic. The period may be included in the SL scheduling information in advance to perform a notification thereof. Here, the transmission timing described above may be a transmittable timing. In the second modification, the scheduling is performed before the communication data is generated, so that the period preferably indicates the transmittable timing.

Thus, even if a timing when the communication data is generated is after the notification of the SL scheduling information, the periodically scheduled resource can be used to transmit the communication data. The period may be different for each piece of the information. For example, a period during which the SL control information is transmittable may be extended to be longer than a period during which the SL data is transmittable. For example, the period during which the SL control information is transmittable is twice as long as the period during which the SL data is transmittable. In that case, one SL control information resource can be transmitted per two SL data resources. Two pieces of the SL data may be controlled by using one piece of the SL control information. Thus, communication control can be facilitated.

The above description has disclosed that the SL scheduling information is used in the case where the relay UE has received the SL scheduling information from the gNB in advance. Another method will be disclosed. Information for performing activation/deactivation of an operation using the SL scheduling information transmitted in advance may be provided.

For example, the gNB transmits SL scheduling operation information in a case of starting using the SL scheduling information transmitted in advance, and transmits SL scheduling stop information in a case of stopping using the SL scheduling information transmitted in advance. The relay UE starts using the SL scheduling information transmitted in advance in a case of receiving the SL scheduling operation information from the gNB, and stops using the SL scheduling information transmitted in advance in a case of receiving the SL scheduling stop information. Thus, in a case where the SL scheduling information transmitted in advance is not used, radio resources allocated with the SL scheduling information can be used for another purpose. That is, usage efficiency of radio resources can be improved.

Thus, in the communication from the gNB to the remote UE via the relay UE, the SL scheduling from the relay UE to the remote UE can be performed more flexibly, and effects such as reduction in the amount of signaling, improvement in usage efficiency of radio resources, and avoidance of complexity of communication processes can be obtained.

A method of SL scheduling from the remote UE to the relay UE in the communication from the remote UE to the gNB via the relay UE will be disclosed. In the method, the gNB performs the SL scheduling on the remote UE. The SL scheduling by the gNB need not be performed in a case of receiving a scheduling request (SR) due to generation of the communication data in the remote UE. In a case where the SL scheduling is once configured, the remote UE continues the configuration of the SL scheduling until the SL scheduling is changed or released. For example, regarding the resource allocation of the CH for transmitting the SL scheduling information, a configuration of the resource allocation is continued until the resource allocation is changed or released.

In a case where the SL scheduling is changed, the configuration of the SL scheduling is continued until the SL scheduling is changed again or released. In a case where the SL scheduling is released, the configuration of the SL scheduling is released. The change may be a part or all of the SL scheduling information.

The SL scheduling may be performed by RRC signaling. The SL scheduling may be performed by using an RRC reconfiguration message. The gNB transmits the SL scheduling information to the remote UE by using RRC signaling. When communication data from the remote UE to the gNB via the relay UE is generated, the remote UE that has received the SL scheduling information from the gNB transmits the communication data to the relay UE by using the SL scheduling information.

As another method, the gNB may transmit the SL scheduling information to the relay UE by RRC signaling, and the relay UE that has received the RRC signaling may transmit the SL scheduling information to the remote UE by using RRC signaling in the SL. The method can also be applied to a case where the relay UE relays RRC signaling.

It is preferable to appropriately apply, as the SL scheduling information, the SL scheduling information disclosed in the first modification of the third embodiment. In the SL scheduling information, a transmission timing of SL control information and/or SL data and/or SL FB may be periodic. The period may be included in the SL scheduling information in advance to perform a notification thereof. Here, the transmission timing described above may be a transmittable timing. The scheduling is performed before the communication data is generated, so that the period preferably indicates the transmittable timing.

Thus, even if a timing when the communication data is generated is after the notification of the SL scheduling information, the periodically scheduled resource can be used to transmit the communication data. The period may be different for each piece of the information. For example, a period during which the SL control information is transmittable may be extended to be longer than a period during which the SL data is transmittable. Thus, communication control can be facilitated.

The above description has disclosed that the SL scheduling information is used in a case where the remote UE has received the SL scheduling information from the gNB. Another method will be disclosed. Information for performing activation/deactivation of an operation using the transmitted SL scheduling information may be provided.

For example, the gNB transmits the SL scheduling operation information in a case of starting using the SL scheduling information. The gNB transmits the SL scheduling stop information in a case of stopping using the SL scheduling information. The remote UE starts using the SL scheduling information in a case of receiving the SL scheduling operation information from the gNB, and stops using the SL scheduling information in a case of receiving the SL scheduling stop information. Thus, in a case where the communication data is not generated in the remote UE and the SL scheduling information is not used, radio resources allocated with the SL scheduling information can be used for another purpose. That is, usage efficiency of radio resources can be improved.

A method for performing a notification of the SL scheduling operation/stop information will be disclosed. The gNB notifies the relay UE of the SL scheduling operation/stop information by L1/L2 signaling. The gNB may include the information in the DCI and perform transmission thereof on the PDCCH. Thus, the gNB can transmit the information to the relay UE at an early stage.

Another transmission method will be disclosed. The gNB transmits the SL scheduling operation/stop information to the relay UE by MAC signaling. The gNB may include the information in a MAC CE and perform transmission thereof. Thus, the gNB can transmit the information to the relay UE at an early stage with a low error rate.

Another transmission method will be disclosed. The gNB notifies the relay UE of the SL scheduling operation/stop information by RRC signaling. The gNB may include the information in an RRC message and perform transmission thereof. Thus, the gNB can perform transmission of a large amount of information with a low error rate, and transmission of the information, to the relay UE.

A method for transmitting the SL scheduling operation/stop information from the relay UE to the remote UE will be disclosed. The relay UE transmits the SL scheduling operation/stop information to the remote UE by L1/L2 signaling in the SL. The relay UE may include the information in the SCI and perform transmission thereof on the PSCCH and/or the PSSCH. Thus, the relay UE can transmit the information to the remote UE at an early stage.

Another transmission method will be disclosed. The relay UE transmits the SL scheduling operation/stop information to the remote UE by MAC signaling in the SL. The relay UE may include the information in a MAC CE in the SL and perform transmission thereof. Thus, the relay UE can transmit the information to the remote UE at an early stage with a low error rate.

Another transmission method will be disclosed. The relay UE notifies the remote UE of the SL scheduling operation/stop information by RRC signaling in the SL. The relay UE may include the information in an RRC message in the SL and perform transmission thereof. Thus, the relay UE can perform transmission of a large amount of information with a low error rate, and transmission of the information, to the remote UE.

Thus, in the communication from the remote UE to the gNB via the relay UE, the SL scheduling from the remote UE to the relay UE can be performed more flexibly, and effects such as reduction in the amount of signaling, improvement in usage efficiency of radio resources, and avoidance of complexity of communication processes can be obtained.

The above description has disclosed the method of SL scheduling from the remote UE to the relay UE in the communication from the remote UE to the gNB via the relay UE. The method disclosed above may be applied to UL scheduling from the relay UE to the gNB in the communication from the remote UE to the gNB via the relay UE. In addition, UL scheduling operation/stop information may be provided. As a method for performing a notification of the UL scheduling information and/or the UL scheduling operation/stop information from the gNB to the relay UE, the method disclosed in the first modification of the third embodiment may be appropriately applied. Thus, in the communication from the remote UE to the gNB via the relay UE, the UL scheduling from the relay UE to the gNB can be performed more flexibly, and effects such as reduction in the amount of signaling, improvement in usage efficiency of radio resources, and avoidance of complexity of communication processes can be obtained.

The above description has disclosed the method of SL scheduling from the remote UE to the relay UE in the communication from the remote UE to the gNB via the relay UE. The method disclosed above may be applied to DL scheduling from the gNB to the relay UE in the communication from the gNB to the remote UE via the relay UE. In addition, information for starting/stopping a DL scheduling operation may be provided. As a method for performing a notification of the DL scheduling information and/or the information for starting/stopping the DL scheduling operation from the gNB to the relay UE, the method disclosed in the third embodiment may be appropriately applied. Thus, in the communication from the gNB to the remote UE via the relay UE, the DL scheduling from the gNB to the relay UE can be performed more flexibly, and effects such as reduction in the amount of signaling, improvement in usage efficiency of radio resources, and avoidance of complexity of communication processes can be obtained.

The SL scheduling method and the UL scheduling method disclosed above may be appropriately combined and applied. Scheduling may be performed by combining the SL scheduling method and the UL scheduling method such that the reception timing from the remote UE and the transmission timing to the gNB in the relay UE are within a predetermined period. Regarding the predetermined period, a period may be configured in consideration of a relay processing time in the relay UE. Thus, the relay UE that has received communication data from the remote UE can transmit the communication data to the gNB at an early stage after the relay processing time.

With the method disclosed in the second modification of the third embodiment, scheduling in the communication between the remote UE and the gNB via the relay UE can be performed more flexibly, and effects such as reduction in the amount of signaling, improvement in usage efficiency of radio resources, and avoidance of complexity of communication processes can be obtained. In addition, when the communication data is generated in the gNB or the remote UE, the remote UE or the relay UE can transmit the communication data with low latency. That is, the low latency characteristic can be improved in the communication between the remote UE and the gNB via the relay UE.

### Third Modification of Third Embodiment.

In the methods disclosed in the third embodiment to the second modification of the third embodiment, the number of remote UEs connected to the relay UE is not limited to one. The methods may also be applied to a case where a plurality of remote UEs are connected to the gNB via one relay UE. It is preferable to appropriately apply the methods disclosed above to communication between each of the remote UEs and the gNB via the relay UE. An effect similar to the effect disclosed above can be obtained.

A third modification of the third embodiment discloses another method regarding the case where a plurality of remote UEs are connected to the gNB via one relay UE.

A method for scheduling the communication in the direction from the gNB to the remote UEs in the communication between the remote UEs and the gNB via the relay UE will be disclosed. The gNB individually performs SL scheduling between the relay UE and each of the remote UEs. The gNB performs one DL scheduling for DL to the plurality of remote UEs. One piece of the DL scheduling information is shared for communication to the plurality of remote UEs. It is preferable to appropriately apply, as the SL scheduling information and the DL scheduling information, information similar to the information applied to the methods disclosed in the third embodiment to the second modification of the third embodiment.

In the method, the gNB transmits, to the relay UE, the SL scheduling information directed to each of the remote UEs and one piece of the DL scheduling information. The gNB attaches, to the communication data directed to each of the remote UEs, information for identifying a remote UE as a destination. For example, the identification information may be included in a MAC CE. The gNB preferably attaches the MAC CE including the identification information to the communication data directed to each of the remote UEs and performs transmission thereof. Thus, the relay UE can recognize that to which remote UE the communication data received from the gNB is directed. The method may also be applied to a case where there is one remote UE. Also in that case, a similar effect can be obtained.

The relay UE that has received the DL scheduling information from the gNB receives the communication data directed to each of the remote UEs by using one piece of the DL scheduling information. Thus, the relay UE can receive the communication data directed to each of the remote UEs from the gNB.

The relay UE that has received the SL scheduling information from the gNB transmits, to each of the remote UEs, the SL scheduling information and the communication data. It is preferable to appropriately apply, as a method for transmitting the DL scheduling information, the SL scheduling information, the communication data, and the like, the method disclosed above. Thus, the relay UE can transmit the communication data to each of the remote UEs. In addition, each of the remote UEs can receive the communication data from the relay UE.

Another method of SL scheduling will be disclosed. The gNB performs one SL scheduling as SL scheduling for the plurality of remote UEs. One piece of the SL scheduling information is shared for communication to the plurality of remote UEs. The SL scheduling information as the one piece of the SL scheduling information may be a part or all of the SL scheduling information described above.

In the another method, the gNB transmits one piece of the SL scheduling information to the relay UE. The relay UE that has received the SL scheduling information transmits the communication data directed to each of the remote UEs by using the SL scheduling information. The relay UE attaches, to the communication data directed to each of the remote UEs, information for identifying the remote UE as a destination. For example, the identification information may be included in a MAC CE in the SL. It is preferable to attach the MAC CE in the SL including the identification information to the communication data directed to each of the remote UEs and to perform transmission thereof. As another method, the identification information may be included in the SL control information attached to the communication data to be transmitted. For example, the identification information may be included in the SCI. The identification information may be included in the SCI to be transmitted on the PSSCH. Thus, the remote UE can recognize that to which remote UE the communication data received from the relay UE is directed. The method may also be applied to a case where there is one remote UE. Also in that case, a similar effect can be obtained.

As another method, the relay UE attaches, to the SL control information directed to each of the remote UEs, information for identifying the remote UE as a destination. For example, the identification information may be included in the SCI. The identification information may be included in the SCI to be transmitted on the PSCCH. Thus, the remote UE can recognize that to which remote UE the communication data received from the relay UE is directed. The method may also be applied to a case where there is one remote UE. Also in that case, a similar effect can be obtained.

A plurality of remote UEs that perform one DL scheduling and/or one SL scheduling may be formed as one group. The group may be provided. The above method may be applied to groupcast to the remote UEs. The method may be applied to groupcast from one relay UE to the plurality of remote UEs in the group.

It is preferable to apply, also to scheduling of communication in the direction from the remote UEs to the gNB in the communication between the remote UEs and the gNB via the relay UE, the above-disclosed method for scheduling the communication in the direction from the gNB to the remote UE. The DL scheduling is preferably made to be the UL scheduling. The SL scheduling is preferably the SL scheduling from the remote UEs to the relay UE. It is preferable to appropriately apply, as a method for transmitting the SL scheduling information, the UL scheduling information, the communication data, and the like, the method disclosed above. Thus, a similar effect can be obtained.

With the method disclosed in the third modification of the third embodiment, it is possible to perform scheduling in the case where communication between the plurality of remote UEs and the gNB is performed via one relay UE. In addition, by sharing the SL scheduling, the DL scheduling, and the UL scheduling in the communication between each of the remote UEs and the gNB, it is possible to reduce the amount of signaling for scheduling and to improve usage efficiency of radio resources.

### Fourth Modification of Third Embodiment.

A fourth modification of the third embodiment will disclose a method for transmitting a scheduling request (SR) in the communication between the remote UE and the gNB via the relay UE.

In the transmission method, an SR for the communication between the remote UE and the gNB via the relay UE (hereinafter, sometimes referred to as a relay SR) is provided. The relay SR to be transmitted from the remote UE to the gNB via the relay UE may be provided. The relay SR is preferably a scheduling request for both the SL scheduling and the UL scheduling. The gNB that has received the relay SR performs the SL scheduling and the UL scheduling for the communication from the remote UE to the gNB via the relay UE.

A method for transmitting the relay SR will be disclosed. The remote UE may transmit the relay SR by RRC signaling. The relay SR may be included in an RRC message to be transmitted. The RRC signaling may include information for identifying from which remote UE the SR is transmitted. For example, the RRC signaling may include an identifier of the remote UE. The RRC signaling may include information for identifying via which relay UE the remote UE transmits the SR. For example, an identifier of the relay UE may be included.

The remote UE in which the communication data directed to the gNB is generated transmits the relay SR to the gNB via the relay UE by RRC signaling. The gNB that has received the relay SR from the remote UE performs the SL scheduling and the UL scheduling on the remote UE and the relay UE connected to the remote UE. The gNB transmits the SL scheduling information and the UL scheduling information to the remote UE and the relay UE.

Another method for transmitting the relay SR from the remote UE to the gNB via the relay UE will be disclosed. For example, the relay SR may be transmitted from the remote UE to the relay UE by RRC signaling in the SL. The relay SR may be transmitted from the relay UE to the gNB by RRC signaling. As another method, for example, the relay SR may be transmitted by MAC signaling. The relay SR may be included in a MAC CE to be transmitted. The relay SR may be transmitted from the remote UE to the relay UE by MAC signaling in the SL. The relay SR may be transmitted from the relay UE to the gNB by MAC signaling. Thus, it is possible to perform transmission at an early stage with a low error rate.

As another method, for example, the remote UE may transmit the relay SR by L1/L2 signaling. The relay SR may be transmitted from the remote UE to the relay UE by L1/L2 signaling in the SL. Thus, it is possible to transmit the relay SR at an early stage. The remote UE may include the relay SR in the SCI in the SL and perform transmission thereof. The remote UE may include the relay SR in the PSCCH and perform transmission thereof. The remote UE may transmit the relay SR together with the communication data on the SL. The remote UE may include the relay SR in the PSSCH and perform transmission thereof. In a case where there is communication data on the SL, when the communication data is transmitted together with the relay SR, the next scheduling can be performed at an early stage. The relay UE may notify the gNB of the relay SR by L1/L2 signaling. In that case, it is possible to transmit the relay SR at an early stage. The relay SR may be included in the UCI to be transmitted. The relay SR may be included in the PUCCH to be transmitted. The relay SR may be transmitted together with the communication data on the UL. The relay SR may be included in the PUSCH to be transmitted. In a case where there is communication data on the UL, when the communication data is transmitted together with the relay SR, the next scheduling can be performed at an early stage.

The methods disclosed above may be appropriately combined. The method for transmitting the relay SR in the SL and the method for transmitting the relay SR in the UL may be appropriately combined.

The gNB performs, on the remote UE, scheduling for transmitting the relay SR. The gNB may make the transmission timing of the relay SR periodic in the scheduling for transmitting the relay SR. The gNB may perform, on the remote UE, a configuration of resources for transmission of the relay SR on the SL and a configuration of resources for transmission of the relay SR on the UL. For example, the gNB may perform a configuration of the PSCCH for transmission of the relay SR on the SL. The gNB may perform a configuration of the PUCCH for transmission of the relay SR on the UL. The gNB transmits these configurations to the relay UE and the remote UE. These configurations may be transmitted by RRC signaling. In a case where the transmission is performed by RRC signaling, a large amount of information can be transmitted.

Thus, the remote UE can transmit the relay SR to the gNB via the relay UE. In a case where the communication data directed to the gNB is generated in the remote UE, the gNB can perform scheduling for the communication. The communication from the remote UE to the gNB via the relay UE can be performed.

A method for transmitting another SR in the communication between the remote UE and the gNB via the relay UE will be disclosed. In the transmission method, an SR for SL communication and an SR for UL communication in the communication are individually provided. The remote UE individually transmits, to the gNB, an SL SR which is an SR for the SL and a UL SR which is an SR for the UL. In a case where the gNB has received the SL SR from the remote UE, the gNB performs the SL scheduling for the communication from the remote UE to the gNB via the relay UE. In a case where the gNB has received the UL SR from the remote UE, the gNB performs the UL scheduling for the communication from the remote UE to the gNB via the relay UE.

By individually transmitting the SL SR and the UL SR, it is possible to separately perform the SL scheduling and the UL scheduling. For example, in a case where either scheduling is required, there is no need to perform the other scheduling. For example, the method for transmitting the SR may be used for a retransmission request. For example, in a case where the transmission/reception of the communication data cannot be performed only on the UL, the remote UE transmits only the UL SR to the gNB again. By eliminating the necessity of transmission of the SL SR, processes can be simplified. In addition, it is possible to reduce the amount of signaling and radio resources.

As a method for transmitting the SL SR and the UL SR, it is preferable to appropriately apply the method disclosed above. An effect similar to that of the method disclosed above can be obtained. The gNB performs, on the remote UE, a configuration of the transmission timing of the SL SR and a configuration of the transmission timing of the UL SR. The transmission timing of the SL SR may be periodic. The transmission timing of the UL SR may be periodic. The gNB may perform, on the remote UE, a configuration of resources for transmission of the SL SR and a configuration of resources for transmission of the UL SR. For example, the configuration of the PSCCH may be performed for transmission of the SL SR. The configuration of the PUCCH may be performed for transmission of the UL SR. The gNB transmits these configurations to the relay UE and the remote UE. These configurations may be transmitted by RRC signaling. In a case where the transmission is performed by RRC signaling, a large amount of information can be transmitted.

Although it has been disclosed in the above that the remote UE individually transmits the SL SR and the UL SR to the gNB, as another method, the remote UE may transmit the SL SR to the gNB, and the relay UE may transmit the UL SR to the gNB. The relay UE transmits the UL SR to the gNB in response to the reception of the communication data from the remote UE to the gNB. In a case where the gNB has received the SL SR from the remote UE, the gNB performs the SL scheduling, and in a case where the gNB has received the UL SR from the relay UE, the gNB performs the UL scheduling.

The gNB performs the configuration of the transmission timing of the SL SR on the remote UE, and performs the configuration of the transmission timing of the UL SR on the relay UE. The transmission timing of the SL SR may be periodic. The transmission timing of the UL SR may be periodic. The gNB may perform the configuration of resources for transmission of the SL SR on the remote UE, and may perform the configuration of resources for transmission of the UL SR on the relay UE. These configurations may be each transmitted by RRC signaling. In a case where the transmission is performed by RRC signaling, a large amount of information can be transmitted.

With the method disclosed in the fourth modification of the third embodiment, also in the communication between the remote UE and the gNB via the relay UE, the gNB can perform scheduling for the communication in a case where the communication data directed to the gNB is generated in the remote UE. Therefore, the communication from the remote UE to the gNB via the relay UE can be performed.

The relay UE may notify the gNB of a relay communication processing time. The notification thereof may be performed as capability of the relay UE. The gNB may perform SL scheduling and/or DL scheduling and/or UL scheduling for relay communication by using the relay communication processing time of the relay UE received from the relay UE. For example, the gNB may perform the scheduling for relay communication by providing a time difference between the transmission timing on the SL and the transmission timing on the UL. The gNB may perform the DL scheduling, the SL scheduling, and the UL scheduling by using the relay communication processing time received from the relay UE. The gNB may perform the DL scheduling, the SL scheduling, and the UL scheduling by providing a time difference between the transmission timing on the SL and the transmission timing on the DL or the UL.

The number of relay communication processing times may be one, or two or more. The relay UE may relay communication between the plurality of remote UEs and the gNB. For example, also in such a case, the gNB may be notified of the relay communication processing time as one relay communication processing time. Thus, the scheduling processes performed by the gNB can be facilitated.

As another method, for example, a plurality of different relay communication processing times for communication between each of the remote UEs and the gNB may be provided. The relay UE preferably notifies the gNB of the relay communication processing times in association with the communication between each of the remote UEs and the gNB. The notification to the gNB may be performed by including the relay communication processing times, information for identifying each of the remote UEs and/or information for identifying communication between each of the remote UEs and the gNB. Thus, in a case where the processing times in the relay UE vary depending on communication services, it is possible to perform the DL scheduling, the SL scheduling, and the UL scheduling in flexible consideration of optimal relay communication processing time.

### Fifth Modification of Third Embodiment.

In a case where the relay UE performs communication between a plurality of remote UEs and the gNB, there may arise a problem that communication between one remote UE and the gNB is delayed due to communication between another remote UE and the gNB.

A fifth modification of the third embodiment discloses a method for solving such a problem.

The fifth modification of the third embodiment discloses a method for solving the above problem in communication from the gNB to the remote UEs via the relay UE. The relay UE performs a priority process from the relay UE to the remote UEs. That is, the relay UE prioritizes communication between the gNB and a remote UE with high priority and transmits communication data to the remote UEs. Pre-emption may be performed at the time of transmission from the relay UE to the remote UEs.

In a case where scheduling between the relay UE and the remote UEs is performed individually for each remote UE, the relay UE may transmit high priority data from the gNB on a resource that has been scheduled earliest. Pre-emption in the SL may be applied. In a case where the pre-emption in the SL is applied, it is only required to replace generation of SL data in the pre-emption with reception of data from the gNB.

A method for solving the above problem in communication from the remote UEs to the gNB via the relay UE will be disclosed. The relay UE performs a priority process from the relay UE to the gNB. That is, the relay UE prioritizes communication between the gNB and the remote UE with high priority and transmits communication data to the gNB. Pre-emption may be performed at the time of transmission from the relay UE to the gNB.

In a case where scheduling between the relay UE and the gNB is performed individually for each remote UE, the relay UE may transmit high priority data from the remote UE on a resource that has been scheduled earliest. Pre-emption in the UL may be applied. In a case where the pre-emption in the UL is applied, it is only required to replace generation of UL data in the pre-emption with reception of data from the remote UE.

Thus, it is possible to perform communication suitable for the priority of the communication between each of the remote UEs and the gNB via the relay UE. For example, communication between a remote UE and a gNB for a communication service requiring a low latency characteristic can be performed before communication between another remote UE with a low priority and the gNB.

### Sixth Modification of Third Embodiment.

In the communication between the remote UE and the gNB via the relay UE, the remote UE is connected to the gNB via the relay UE. Therefore, the question is how to notify the remote UE of system information (SI) of the gNB. In 3GPP, it has been discussed to support notification of SI in communication between a remote UE and a gNB via a relay UE (see Non Patent Literature 27 (3GPP TR 38.836)). However, no specific method for notifying the remote UE of the SI has been discussed.

A sixth modification of the third embodiment discloses a method for solving such a problem.

The sixth modification of the third embodiment discloses a method for solving the above problem in the communication between the remote UE and the gNB via the relay UE. A PC5 logical channel used to transmit the SI of the gNB will be disclosed. The SI of the gNB is mapped to the SBCCH in the SL. The SI of the gNB may be an MIB and/or an SIB. The SI of the gNB which the remote UE is to be notified of may be the same as SI broadcast by the gNB to UEs within the coverage, may be a part of the SI, or may be different from the SI. The SI may be a combination of these. For example, the SI of the gNB which the remote UE is to be notified of may be SI necessary for the communication between the remote UE and the gNB via the relay UE among SI to be broadcast by the gNB to the UEs within the coverage.

Sidelink system information is conventionally mapped to the SBCCH. The SI of the gNB may be mapped to the SBCCH together with the sidelink system information. The same logical channel can be used, and thus complication of processes can be avoided.

As another method, an SBCCH for the SI of the gNB may be provided separately from the SBCCH to which the sidelink system information is mapped. By providing different SBCCHs, sorting of information can be facilitated in the relay UE and the remote UE, and malfunction can be reduced.

A PC5 transport channel used to transmit the SI of the gNB will be disclosed. The SI of the gNB is mapped to the SL-BCH. The SI of the gNB is mapped to the logical channel SBCCH, and the SBCCH is mapped to the transport channel SL-BCH. The relay UE that has received the SI from the gNB maps the SI to the SBCCH, maps the SBCCH to the SL-BCH, and performs transmission thereof to the remote UE.

Thus, the relay UE can transmit the SI of the gNB to one or a plurality of remote UEs.

Another method regarding the PC5 transport channel used to transmit the SI of the gNB will be disclosed. The SI of the gNB is mapped to the SL-SCH. The SI of the gNB is mapped to the logical channel SBCCH, and the SBCCH is mapped to the transport channel SL-SCH. The relay UE that has received the SI from the gNB maps the SI to the SBCCH, maps the SBCCH to the SL-SCH, and performs transmission thereof to the remote UE.

The SBCCH to which the sidelink system information is mapped may be sorted and mapped to the SL-BCH, and the SBCCH to which the SI from the gNB is mapped may be sorted and mapped to the SL-SCH. Thus, sorting of information can be facilitated in the relay UE and the remote UE, and malfunction can be reduced.

The SL-SCH to which the SI of the gNB is mapped may be transmitted by unicast. The SI of the gNB can be transmitted individually to remote UEs. The SL-SCH to which the SI of the gNB is mapped may be transmitted by groupcast. The SI of the gNB can be transmitted to a UE belonging to a predetermined group. The SL-SCH to which the SI of the gNB is mapped may be transmitted by broadcast. The SI of the gNB can be transmitted to one or a plurality of remote UEs.

The resources on the frequency-time axis for transmitting the PSBCH to which the SL-BCH is mapped are limited (see Non Patent Literature 16 (3GPP TS 38.300)). The PSBCH is configured together with a sidelink synchronization signal in one slot, and is mapped to only nine symbols in one slot. Therefore, only a small amount of information can be transmitted on the PSBCH, and there may arise a case where it is insufficient for transmitting the SI of the gNB. In addition, since the PSBCH is transmitted together with the SL synchronization signal, the transmission timing may be limited.

By mapping, to the SL-SCH, the SBCCH to which the SI from the gNB is mapped, the amount of transmittable information can be increased, and the necessity to wait for a limited timing is eliminated, so that the SI of the gNB can be transmitted at an early stage, and the low latency characteristic can be improved.

Regarding the PC5 logical channel used to transmit the SI of the gNB, another method will be disclosed. The SI of the gNB is mapped to the STCH in the SL. The PC5 transport channel will be disclosed. The SI of the gNB is mapped to the SL-SCH. The SI of the gNB is mapped to the logical channel STCH, and the STCH is mapped to the transport channel SL-SCH. The relay UE that has received the SI from the gNB maps the SI to the STCH, maps the STCH to the SL-SCH, and performs transmission thereof to the remote UE.

The SL-SCH to which the SI of the gNB is mapped may be transmitted by unicast, groupcast, or broadcast. An effect similar to that disclosed above can be obtained in each case.

Thus, the mapping of the SI of the gNB from the STCH to the SL-SCH can be a process similar to a process of information mapped to other STCHs. Therefore, it is possible to avoid complication of transmission/reception processes of the SI of the gNB performed by the relay UE or the remote UE. In addition, as disclosed above, by mapping the SI of the gNB to the SL-SCH, it is possible to increase the amount of transmittable information, to transmit the SI of the gNB at an early stage, and to improve the low latency characteristic.

The methods disclosed above may be appropriately combined. For example, different logical channels and transport channels are used for transmission on the SL depending on the content of the SI of the gNB. For example, in a case of information on the MIB among the SI of the gNB, the relay UE maps the information on the MIB of the gNB to the SBCCH, and to the SL-BCH. In a case of information on the SIB among the SI of the gNB, the relay UE maps the information on the SIB of the gNB to the STCH, and to the SL-SCH. This is effective in a case where the amount of information on the MIB of the gNB to be transmitted to the remote UE is small.

For example, in a case of information common to UEs among the SI of the gNB, the relay UE maps the information to the SBCCH, and to the SL-BCH. In a case of UE-dedicated information among the SI of the gNB, the relay UE maps the information to the STCH, and to the SL-SCH. With the SL-SCH, unicast communication can be performed. Therefore, it is effective in a case where the SI of the gNB to be transmitted to the remote UE includes the UE-dedicated information.

The remote UE may request the gNB to transmit the SI of the gNB. In response to the request, the gNB may transmit the SI of the gNB to the remote UE via the relay UE. Also in transmission of the SI of the gNB on the SL from the relay UE to the remote UE in such transmission of the SI of the gNB in response to the transmission request of the SI of the gNB from the remote UE, the above channel mapping method may be appropriately applied. For example, in a case of the SI of the gNB in response to the transmission request of the SI of the gNB from the remote UE, the relay UE maps the information to the STCH, and to the SL-SCH. The relay UE can transmit the SI of the gNB to the remote UE that has requested the transmission of the SI of the gNB by using unicast transmission.

In the transmission of the SI of the gNB on the SL, information indicating that it is the SI of the gNB may be included in the SCI. For example, in a case where the relay UE maps the SI of the gNB to the SBCCH, maps the SBCCH to the SL-SCH, and performs transmission thereof, the relay UE preferably includes the information indicating that it is the SI of the gNB in the SCI for the transmission. Thus, the remote UE can determine that it is the SI of the gNB. The remote UE can recognize that the SI of the gNB is mapped to the SL-SCH received from the relay UE, and can receive the SI of the gNB.

For example, in a case where the relay UE maps the SI of the gNB to the STCH, maps the STCH to the SL-SCH, and performs transmission thereof, the relay UE may include the information indicating that it is the SI of the gNB in the SCI for the transmission. Similarly to the above case, the remote UE can recognize that the SI of the gNB is mapped to the SL-SCH received from the relay UE. The remote UE can receive the SI of the gNB.

Another method will be disclosed which enables the remote UE to determine that it is the SI of the gNB. The information indicating that it is the SI of the gNB may be included in a MAC header or a MAC CE. For example, in the case where the relay UE maps the SI of the gNB to the SBCCH, maps the SBCCH to the SL-SCH, and performs transmission thereof, the relay UE includes the information indicating that it is the SI of the gNB in the MAC header or the MAC CE in a MAC layer, and performs mapping to the SL-SCH. Thus, the remote UE can determine that it is the SI of the gNB. The remote UE can recognize whether the SL-SCH received from the relay UE is the SI of the gNB. The remote UE can receive the SI of the gNB.

For example, in the case where the relay UE maps the SI of the gNB to the STCH, maps the STCH to the SL-SCH, and performs transmission thereof, the relay UE may include the information indicating that it is the SI of the gNB in the MAC header or the MAC CE in the MAC layer, and perform mapping to the SL-SCH. Similarly to the above case, the remote UE can recognize whether the SL-SCH received from the relay UE is the SI of the gNB. The remote UE can receive the SI of the gNB.

The state of the remote UE that receives the SI of the gNB may be an RRC connected state to the gNB, an RRC inactive state, or an RRC idle state. It is preferable to appropriately apply the method disclosed above. In a case where the state of the remote UE is the RRC connected state to the gNB, the SI of the gNB may be included in an RRC message and transmitted from the gNB to the remote UE via the relay UE. The RRC message including the SI of the gNB may be contained in Uu RRC signaling or PC5 RRC signaling and transmitted. Also in such a case, it is preferable to appropriately apply the method disclosed above in order for the relay UE to transmit the SI of the gNB to the remote UE in the SL. For example, the relay UE maps the SI of the gNB to the STCH, maps the STCH to the SL-SCH, and performs transmission thereof. Thus, the remote UE can receive the SI of the gNB.

With the method disclosed in the sixth modification of the third embodiment, in the communication between the remote UE and the gNB via the relay UE, the relay UE can transmit the SI of the gNB received from the gNB to the remote UE. The remote UE can acquire the SI of the gNB necessary for performing communication with the gNB via the relay UE. The communication between the remote UE and the gNB via the relay UE can be performed.

A statement of "gNB or cell" in the present disclosure means that it may either be a gNB or a cell unless otherwise specified.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per mini-slot basis.

For example, the methods disclosed in the above-described embodiments and modifications thereof may be applied not only to a vehicle-to-everything (V2X) service but also to a service using the SL communication. For example, the methods may be applied to the SL communication used in various services such as proximity-based service, public safety, communication between wearable terminals, and device-to-device communication in a factory.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam.

## Claims

1. A communication system comprising:
a first base station to operate as a donor for integrated access and backhaul, the first base station including a central unit and a distributed unit; and
one or more second base stations to operate as nodes of the integrated access and backhaul, wherein
in a case where multicast transmission of data is performed from the first base station to a communication terminal,
the central unit performs a configuration for the multicast transmission on the distributed unit and the one or more second base stations.

2. The communication system according to claim 1, wherein
the central unit performs a configuration for routing of the data to be multicast transmitted in the configuration for the multicast transmission.

3. The communication system according to claim 1 or 2, wherein
the central unit determines whether to transmit the data point-to-multipoint or point-to-point for each of the distributed unit and the one or more second base stations in the configuration for the multicast transmission.

4. A communication system comprising:
a base station;
a first communication terminal connected to the base station; and
a second communication terminal to perform, between the first communication terminal and the second communication terminal, terminal-to-terminal communication in which communication terminals directly communicate with each other, wherein
in a case where the base station communicates with the second communication terminal via the first communication terminal, the base station performs scheduling for communication between the base station and the first communication terminal and scheduling for communication between the first communication terminal and the second communication terminal.

5. The communication system according to claim 4, wherein
in a case where downlink data is transmitted from the base station to the second communication terminal,
the base station performs first scheduling for transmitting the downlink data to the first communication terminal, and performs second scheduling for transmitting the downlink data from the first communication terminal to the second communication terminal after the transmission of the downlink data to the first communication terminal is completed.

6. The communication system according to claim 4, wherein
in a case where downlink data is transmitted from the base station to the second communication terminal,
the base station transmits the downlink data to the first communication terminal after performing first scheduling for transmitting the downlink data to the first communication terminal and second scheduling for transmitting the downlink data from the first communication terminal to the second communication terminal.

7. The communication system according to claim 4, wherein
before downlink data to be transmitted to the second communication terminal is generated, the base station performs first scheduling for transmitting the downlink data to the first communication terminal and second scheduling for transmitting the downlink data from the first communication terminal to the second communication terminal.

8. The communication system according to any one of claims 4 to 7, wherein
in a case where uplink data is transmitted from the second communication terminal to the base station,
the base station performs third scheduling for transmitting the uplink data from the second communication terminal to the first communication terminal, and performs fourth scheduling for transmitting the uplink data from the first communication terminal to the base station after transmission of the uplink data from the second communication terminal to the first communication terminal is completed.

9. The communication system according to any one of claims 4 to 7, wherein
in a case where uplink data is transmitted from the second communication terminal to the base station,
the base station performs third scheduling for transmitting the uplink data from the second communication terminal to the first communication terminal and fourth scheduling for transmitting the uplink data from the first communication terminal to the base station, and
the second communication terminal transmits the uplink data to the first communication terminal after the base station performs the third scheduling and the fourth scheduling.

10. A base station to operate as a donor for integrated access and backhaul, the base station including a central unit and a distributed unit, wherein
in a case where multicast transmission of data is performed to a communication terminal,
the central unit performs a configuration for the multicast transmission on the distributed unit and a base station that operates as a node of the integrated access and backhaul.

11. A base station constituting a communication system together with a plurality of communication terminals supporting terminal-to-terminal communication in which communication terminals directly communicate with each other, wherein
in a case where the base station communicates with a second communication terminal via a first communication terminal, the base station performs scheduling for communication between the base station and the first communication terminal and scheduling for communication between the first communication terminal and the second communication terminal.
